# EUROPEAN PATENT SPECIFICATION

(11) **EP 4 529 241 B1**
(45) Date of publication and mention of the grant of the patent: **04.11.2026**
(21) Application number: 23893343.6
(22) Date of filing: 05.09.2023
(51) Int. Cl.: H04M 1/00, H04M 1/72412, H04M 1/72469, H04M 3/42, H04M 3/58, H04M 3/46

(54) **CALL SYSTEM AND CALL METHOD**
ANRUFSYSTEM UND ANRUFVERFAHREN
SYSTÈME D'APPEL ET PROCÉDÉ D'APPEL

(30) Priority: 22.11.2022 CN 202211468148
(43) Date of publication of application: 26.03.2025
(73) Proprietor: Honor Device Co., Ltd., Shenzhen, Guangdong 518040 (CN)
(72) Inventor: LIU, Nengbin, Shenzhen, Guangdong 518040 (CN)
(74) Representative: Beder, Jens
(86) International application number: PCT/CN2023/116881
(87) International publication number: WO 2024/109250

(56) References cited:
- CN-A- 105 872 439
- CN-A- 108 881 779
- CN-A- 113 727 289
- CN-A- 114 554 012
- CN-A- 115 243 205
- US-A1- 2014 029 478

## Description

This application claims priority to Chinese Patent Application CN 118 075 400 A (Application No. 202211468148.9), filed with the China National Intellectual Property Administration on November 22, 2022 and entitled "CALL SYSTEM AND CALL METHOD".

### TECHNICAL FIELD

This application relates to the field of electronic product technologies, and specifically to a call system, a call method, an electronic device and a computer storage medium.

### BACKGROUND

With the development of communication technologies, communication connections may be established among different electronic devices to share device capabilities to collaboratively process a same service. The device capabilities are, for example, an audio capability, a video capability, a printing capability, and a positioning capability. A call service is used as an example. After connecting a call, an electronic device may invoke an audio capability of another electronic device to process the call, and transfer the call to the another electronic device for answering.

At present, after connecting a call, an electronic device supports the transfer of the call to another electronic device for answering, but does not support the transfer of the call to still another electronic device for answering. During actual use, after answering a phone, a user may need to transfer a call among different electronic devices. Therefore, a method for enabling an electronic device to control the transfer of a call with other electronic devices after connecting the call is urgently required.

CN 113 727 289 A discloses an electronic equipment. The electronic equipment is configured to forward a first call request sent by a mobile terminal to a Bluetooth peripheral, and is configured to interact audio data of a first call between the mobile terminal and the Bluetooth peripheral after receiving a first answering instruction sent by the Bluetooth peripheral.

### SUMMARY

Embodiments of this application provide a call system, a call method, an electronic device and a computer storage medium, which can resolve the problem that after connecting a call, an electronic device cannot control the transfer of the call to other electronic devices. The invention is defined in the independent claims. Additional features of the invention are provided in the dependent claims. In the following, parts of the description and drawings referring to embodiments, which are not covered by the claims, are not presented as embodiments of the invention but as examples useful for understanding the invention.

According to a first aspect, a call system is provided. The call system includes a first electronic device, a second electronic device, and a third electronic device.

The first electronic device receives an incoming call request.

In response to the incoming call request, the first electronic device, the second electronic device, and the third electronic device provide a reminder for an incoming call.

The first electronic device creates a first control channel with the second electronic device, and the first electronic device creates a second control channel with the third electronic device.

An operation of answering the incoming call is received on the first electronic device or the second electronic device, and the first electronic device connects a call corresponding to the incoming call request.

The first electronic device transfers the call to the second electronic device through the first control channel for answering.

The first electronic device receives a first switching instruction in a process of answering the call on the second electronic device.

In response to the first switching instruction, the first electronic device transfers the call to the third electronic device through the second control channel for answering.

In the embodiments of this application, after receiving the incoming call request, the first electronic device creates the first control channel with the second electronic device, and creates the second control channel with the third electronic device. After the call is connected, the call may be transferred to the second electronic device for answering. In the process of answering the call on the second electronic device, if a switching instruction is received, the call may be transferred from the second electronic device to the third electronic device for answering. The problem that after connecting a call, an electronic device cannot control the transfer of the call to other electronic devices can be resolved.

In addition, after connecting a call, the electronic device may control the transfer of the call to other electronic devices according to a user requirement, so that it is convenient for a user to select, as required, an electronic device to answer a phone, so that the convenience of answering the phone by the user can be improved, thereby improving the experience of answering the phone by the user. In addition, the call can be quickly transferred among different electronic devices. When the user switches among different electronic devices to answer the phone, the user may directly switch from one device to another device to answer the phone to avoid a call interruption, so that the experience of answering the phone by the user can be improved.

Optionally, after the operation of answering the incoming call is received on the second electronic device, the second electronic device sends an answering instruction to the first electronic device. In response to the answering instruction, the first electronic connects the call, and transfers the call to the second electronic device through the first control channel for answering.

In the embodiments of this application, after receiving the incoming call request, the first electronic device connects the call when receiving the answering instruction sent by the second electronic device, and transfers the call to the second electronic device for answering, so that it can be convenient for the user to operate the second electronic device to answer the call. The call is transferred to the second electronic device for answering, so that it can be convenient for the user to quickly use the second electronic device to answer the phone.

Optionally, the operation of answering the incoming call is received on the first electronic device, and the first electronic device connects the call. In response to a received second switching instruction, the first electronic device transfers the call to the second electronic device through the first control channel for answering.

Optionally, in the process of answering the call on the second electronic device, the second electronic device receives a first operation corresponding to a first control. In response to the first operation, the second electronic device sends the first switching instruction to the first electronic device.

Optionally, after the call is transferred to the second electronic device for answering, the first electronic device displays a first call interface, where the first call interface includes a second control. The first electronic device receives the first switching instruction through the second control.

Optionally, after the call is transferred to the second electronic device for answering, the second electronic device displays a second call interface, where the second call interface includes the first control.

Optionally, before the call is transferred to the second electronic device for answering, the first electronic device registers a device identifier of the second electronic device.

The first electronic device marks an enable status of an audio capability of the second electronic device as a first identifier.

The first electronic device marks an invocation status of the audio capability of the second electronic device as a second identifier.

When determining, based on the device identifier of the second electronic device, that the enable status of the audio capability of the second electronic device is the first identifier and the invocation status of the audio capability of the second electronic device is the second identifier, the first electronic device transfers the call to the second electronic device through the first control channel for answering.

Optionally, the first electronic device includes a collaboration module and a virtual audio module. Before the call is transferred to the second electronic device for answering, the collaboration module registers a first communication interface in the virtual audio module. After the call is transferred to the second electronic device for answering, the first electronic device transmits audio data in the call between the collaboration module and the virtual audio module through the first communication interface.

Optionally, before the call is transferred to the third electronic device for answering, the first electronic device registers a device identifier of the third electronic device.

The first electronic device marks an enable status of an audio capability of the third electronic device as a third identifier.

The first electronic device marks an invocation status of the audio capability of the third electronic device as a fourth identifier.

When determining, based on the device identifier of the third electronic device, that the enable status of the audio capability of the third electronic device as the third identifier and the invocation status of the audio capability of the third electronic device as the fourth identifier, the first electronic device transfers the call to the third electronic device through the second control channel for answering.

Optionally, the first electronic device includes the collaboration module and the virtual audio module. Before the call is transferred to the third electronic device for answering, the collaboration module registers a second communication interface of the third electronic device in the virtual audio module. After the call is transferred to the third electronic device for answering, the first electronic device transmits the audio data in the call between the collaboration module and the virtual audio module through the second communication interface.

Optionally, after the call is transferred to the second electronic device for answering, the first electronic device marks the invocation status of the audio capability of the second electronic device as a fifth identifier.

Optionally, before the first control channel is created, the first electronic device determines that the second electronic device is in an online state. Before the second control channel is created, the first electronic device determines that the third electronic device is in an online state.

In the embodiments of this application, before the first electronic device enables the audio capability of the second electronic device or the third electronic device, it is first determined whether a device is online, and an audio capability of the device is enabled when the device is online, so that enabling of an audio capability of a device that is not online can be avoided.

Optionally, that the first electronic device transfers the call to the third electronic device through the second control channel for answering includes: The first electronic device disconnects a first data channel with the second electronic device, where the first data channel is established before the call is transferred to the second electronic device. The first electronic device establishes a second data channel with the third electronic device. After the second data channel is established, the first electronic device transfers the call to the third electronic device through the second control channel for answering, where the first data channel and the second data channel are configured for transmitting the audio data in the call.

Optionally, when detecting that a fourth electronic device is online, the first electronic device creates a third control channel with the fourth electronic device, where the third control channel is configured for streaming the call to the fourth electronic device for answering when a third switching instruction corresponding to the fourth electronic device is received.

In the embodiments of this application, in the process of answering the call, when it is detected that a new electronic device is online, the first electronic device may enable an audio capability of the new online device, so that when the call needs to be transferred to the new electronic device, the call can be quickly transferred to the new electronic device for answering.

According to a second aspect, a call method is provided, applied to a first electronic device, and including:

The first electronic device receives an incoming call request.

In response to the incoming call request, the first electronic device sends a simultaneous vibration notification to a second electronic device and a third electronic device separately to enable the second electronic device and the third electronic device to provide a reminder for an incoming call.

The first electronic device creates a first control channel with the second electronic device, and the first electronic device creates a second control channel with the third electronic device.

When receiving an answering instruction, the first electronic device connects a call corresponding to the incoming call request.

The first electronic device transfers the call to the second electronic device through the first control channel for answering.

After the call is transferred to the second electronic device for answering, the first electronic device receives a first switching instruction.

In response to the first switching instruction, the first electronic device transfers the call to the third electronic device through the second control channel for answering.

Optionally, the answering instruction is sent by the second electronic device to the first electronic device.

Optionally, that the first electronic device transfers the call to the second electronic device through the first control channel for answering includes: When receiving a second switching instruction, the first electronic device transfers the call to the second electronic device through the first control channel for answering.

Optionally, the first switching instruction is sent by the second electronic device to the first electronic device, where the first switching instruction is sent by the second electronic device to the first electronic device after the call is answered and when a first operation corresponding to a first control is received.

Optionally, after the call is transferred to the second electronic device for answering, the first electronic device displays a first call interface, where the first call interface includes a second control. The first electronic device receives the first switching instruction through the second control.

Optionally, the first control is included in a second call interface, and the second call interface is displayed by the second electronic device after the call is answered.

Optionally, before the call is transferred to the second electronic device for answering, the method further includes: The first electronic device registers a device identifier of the second electronic device. The first electronic device marks an enable status of an audio capability of the second electronic device as a first identifier. The first electronic device marks an invocation status of the audio capability of the second electronic device as a second identifier.

That the first electronic device transfers the call to the second electronic device through the first control channel for answering includes: When determining, based on the device identifier of the second electronic device, that the enable status of the audio capability of the second electronic device is the first identifier and the invocation status of the audio capability of the second electronic device is the second identifier, the first electronic device transfers the call to the second electronic device through the first control channel for answering.

Optionally, the first electronic device includes a collaboration module and a virtual audio module. Before the call is transferred to the second electronic device for answering, the method further includes: The collaboration module registers a first communication interface in the virtual audio module. After the call is transferred to the second electronic device for answering, the first electronic device transmits audio data in the call between the collaboration module and the virtual audio module through the first communication interface.

Optionally, before the call is transferred to the third electronic device for answering, the method further includes: The first electronic device registers a device identifier of the third electronic device. The first electronic device marks an enable status of an audio capability of the third electronic device as a third identifier. The first electronic device marks an invocation status of the audio capability of the third electronic device as a fourth identifier.

That the first electronic device transfers the call to the third electronic device through the second control channel for answering includes: when determining, based on the device identifier of the third electronic device, that the enable status of the audio capability of the third electronic device as the third identifier and the invocation status of the audio capability of the third electronic device as the fourth identifier, the first electronic device transfers the call to the third electronic device through the second control channel for answering.

Optionally, the first electronic device includes the collaboration module and the virtual audio module. Before the call is transferred to the third electronic device for answering, the method further includes: The collaboration module registers a second communication interface of the third electronic device in the virtual audio module. After the call is transferred to the third electronic device for answering, the first electronic device transmits the audio data in the call between the collaboration module and the virtual audio module through the second communication interface.

Optionally, after the call is transferred to the second electronic device for answering, the method further includes: The first electronic device marks the invocation status of the audio capability of the second electronic device as a fifth identifier.

Optionally, the method further includes: Before the first control channel is created, the first electronic device determines that the second electronic device is in an online state. Before the second control channel is created, the first electronic device determines that the third electronic device is in an online state.

Optionally, that the first electronic device transfers the call to the third electronic device through the second control channel for answering includes: The first electronic device disconnects a first data channel with the second electronic device, where the first data channel is established before the call is transferred to the second electronic device. The first electronic device establishes a second data channel with the third electronic device. After the second data channel is established, the first electronic device transfers the call to the third electronic device through the second control channel for answering, where the first data channel and the second data channel are configured for transmitting the audio data in the call.

Optionally, when detecting that a fourth electronic device is online, the first electronic device creates a third control channel with the fourth electronic device, where the third control channel is configured for streaming the call to the fourth electronic device for answering when a third switching instruction corresponding to the fourth electronic device is received.

According to a third aspect, an electronic device is provided, including: one or more processors and one or more memories. The one or more processors are coupled to the one or more memories. The one or more memories are configured to store computer program code. The computer program code includes computer instructions. The one or more processors execute the computer instructions to cause the electronic device to perform the method in the second aspect.

According to a fourth aspect, a computer storage medium is provided. The computer storage medium stores a computer program product. The computer program product includes computer instructions. The computer instructions, when run on an electronic device, cause the electronic device to perform the method in the second aspect.

According to a fifth aspect, a chip system is provided. The chip system is applied to an electronic device. The chip system includes one or more processors. The processor is configured to invoke computer instructions to cause the electronic device to perform the method in the second aspect.

According to a sixth aspect, a computer program product is provided, including computer instructions. The computer instructions, when run on an electronic device, cause the electronic device to perform the method in the second aspect.

### BRIEF DESCRIPTION OF DRAWINGS

FIG. 1 is a schematic diagram of a structure of a system according to an embodiment of this application;
FIG. 2 is a schematic diagram of a call transfer process according to an embodiment of this application;
FIG. 3 is a schematic diagram of interfaces of multiple devices simultaneously providing a reminder for an incoming call according to an embodiment of this application;
FIG. 4 is a schematic diagram of interfaces after a call is transferred from a mobile phone to a tablet computer in FIG. 3;
FIG. 5 is a schematic diagram of interfaces when a call is transferred from a tablet computer to a laptop computer in FIG. 4;
FIG. 6 is a schematic diagram of interfaces when a call is transferred from a tablet computer to a laptop computer in FIG. 4;
FIG. 7 is a schematic diagram of interfaces after a call is transferred from a tablet computer to a laptop computer in FIG. 5 and FIG. 6;
FIG. 8 is a schematic diagram of a call transfer according to an embodiment of this application;
FIG. 9 is a schematic diagram of interfaces after a call service is transferred from a tablet computer or a laptop computer to a mobile phone in FIG. 3;
FIG. 10 is a schematic diagram of a hardware structure of an electronic device applicable to the foregoing method;
FIG. 11 is a schematic diagram of an architecture of an electronic device according to an embodiment of this application;
FIG. 12 is a schematic diagram of a structure of a collaboration module according to an embodiment of this application;
FIG. 13 is a schematic diagram of a structure of a call system according to an embodiment of this application;
FIG. 14 is a schematic flowchart of a call method according to an embodiment of this application;
FIG. 15 is a schematic diagram of a call transfer process in the scenarios shown in FIG. 3 to FIG. 7;
FIG. 16A, FIG. 16B, FIG. 16C, and FIG. 16D are a schematic flowchart of an enabling process of an audio capability in the scenarios shown in FIG. 3 to FIG. 7;
FIG. 17 is a schematic diagram of a partial system structure of an electronic device according to an embodiment of this application;
FIG. 18 is a schematic diagram of a structure of a system according to an embodiment of this application;
FIG. 19 is a schematic flowchart of enabling a device capability according to an embodiment of this application;
FIG. 20 is a schematic flowchart of transferring a call from a mobile phone to a tablet computer for answering in the scenarios shown in FIG. 3 to FIG. 7;
FIG. 21 is a schematic diagram of data transmission according to an embodiment of this application;
FIG. 22A, FIG. 22B, and FIG. 22C are a schematic flowchart of a mobile phone transferring a call from a tablet computer to a laptop computer for answering in the scenarios shown in FIG. 3 to FIG. 7;
FIG. 23 is a schematic diagram of a service transfer process according to an embodiment of this application; and
FIG. 24 is a schematic diagram of a structure of an electronic device according to an embodiment of this application.

### DESCRIPTION OF EMBODIMENTS

The following describes technical solutions of this application with reference to the accompanying drawings. Apparently, the described embodiments are merely a part rather than all of the embodiments of this application.

In the following description, for description rather than limitation, specific details like specific system structures and technologies are proposed for thorough understanding of the embodiments of this application. However, persons skilled in the art should understand that this application can be implemented in other embodiments without these specific details. In other cases, detailed description of well-known systems, apparatuses, circuits, and methods are omitted to keep unnecessary details from hindering the description of this application.

The term "include" in this specification indicates the presence of described features, integers, steps, operations, elements and/or components, but does not exclude the presence or addition of one or more other features, integers, steps, operations, elements, components and/or a set thereof. The terms "comprise", "include", "have", and their variations mean "including but not limited to", unless otherwise specially emphasized in other ways.

The terms "first" and "second" mentioned below are used merely for the purpose of description, and shall not be construed as indicating or implying relative importance or implying a quantity of indicated technical features. Therefore, a feature limited by "first" or "second" may explicitly or implicitly include one or more of the features. In the description of the embodiments of this application, "plurality" means two or more unless otherwise described.

The term "and/or" used in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

In this specification, reference to "embodiment" means that specific features, structures, or characteristics described with reference to the embodiment may be incorporated in at least one embodiment of this application. The word appearing in various places in the specification does not necessarily refer to the same embodiment or an independent or alternative embodiment that is exclusive of other embodiments. It is explicitly or implicitly understood by persons skilled in the art that the embodiments described in this application may be combined with other embodiments.

A call method provided in the embodiments of this application is applicable to a system formed by a plurality of electrons devices. The system may include a plurality of electronic devices. The electronic devices are referred to as devices for short below, and may be a mobile phone, a tablet computer, a laptop computer, a smart screen, a smart speaker, a personal computer (personal computer, PC), an ultra mobile personal computer (ultra mobile personal computer, UMPC), a handheld computer, a netbook, a smart home device (for example, a smart television, a large screen, or a smart air conditioner), a personal digital assistant (personal digital assistant, PDA), a wearable device (for example, a smart watch or a smart bracelet), an in-vehicle device, a virtual reality device, and the like, but are not limited thereto.

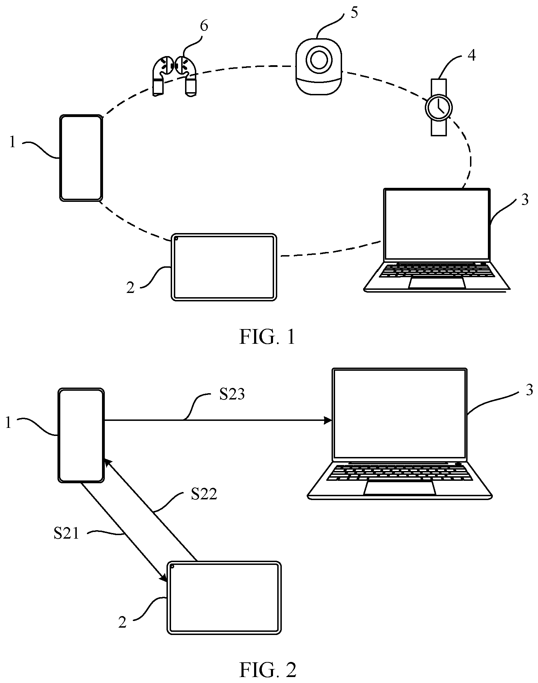

FIG. 1 is a schematic diagram of a structure of a system according to an embodiment of this application. The system includes a mobile phone 1, a tablet computer 2, a laptop computer 3, a smart watch 4, a smart stereo 5, and earphones 6. The plurality of devices form a trust circle after mutual authentication. For a process of the mutual authentication between the devices, refer to related technologies. For example, determination may be performed based on one or more of whether the same system account is logged in to, whether authorization is performed, whether near field communication is used, and the like on the devices. Details are not described herein.

It may be understood that, in the same trust circle, the plurality of devices can safely share data. The shared data includes, but is not limited to, audio data, video data, text data, notification information, among other data and a device name, a device address, a device type, among other device information, but is not limited thereto.

Based on a data sharing mechanism among a plurality of devices, after a service is started on one device in the trust circle, the device may be used as a primary device to invoke a device capability of another device (a secondary device) in the trust circle to process the service. It may be understood that, the invoking the device capability of the secondary device to process the service means that the primary device uses the device capability of the secondary device and collaboratively processes the service with the secondary device.

The service is a specific transaction that a device processes, and is, for example, a call service of answering a call, a system prompt service of outputting a system prompt, an audio playback service of playing music, or a video playback service of playing a video, but is not limited thereto.

The device capability may also be referred to as a device function, and is, for example, an audio capability of playing audio data, a video capability of playing video data, or a positioning capability of performing positioning, but is not limited thereto. It may be understood that some device capabilities may be further divided into a plurality of capabilities. For example, the audio capability includes an audio playback capability and an audio recording capability, and the video capability includes a video playback capability and a video recording capability.

During actual application, when an electronic device has a related hardware module and has a software module related to the hardware module, the electronic device has a corresponding device capability. For example, the smart stereo includes a speaker and a software module configured to process audio data. Therefore, the smart stereo has an audio playback capability.

Generally, devices of different device types have different hardware modules and software modules. Therefore, a device capability that a device has may be determined based on a device type of the device. The device types may include a wearable device, an in-vehicle device, a home device, an office device, a multimedia device, a Bluetooth headset, and the like. A specific categorization method of device types may be set as required. This is not limited in this embodiment.

A device in the trust circle enters an online state after being powered on to run, may push device information to another device in an online state in the trust circle to notify the another device to get online, and may be used as a secondary device to share a device capability that the device has with the another device. In a process of processing a service, the primary device may determine one or more secondary devices in an online state from the trust circle, and invoke a device capability of one of the secondary devices to process the service.

A call service is used as an example. An audio capability of a device needs to be used to answer a call. In FIG. 1, after being powered on to run, the tablet computer 2 and the laptop computer 3 may push respective device information to the mobile phone 1 to notify the mobile phone 1 that the tablet computer 2 and the laptop computer 3 are in an online state. After connecting a call, the mobile phone 1 may determine the tablet computer 2 and the laptop computer 3 that are in an online state and have an audio capability from the trust circle as secondary devices, and invoke the audio capability of one of the secondary devices to process the call service.

Specifically, after the call is connected, if the mobile phone 1 is invoking the audio capability of one secondary device to process the call service, i.e., streaming the call to the secondary device for answering, when receiving downlink audio data sent by another mobile phone (a peer device), the mobile phone 1 sends the downlink audio data to the secondary device, and the secondary device plays the downlink audio data. In addition, the secondary device may acquire a sound signal uttered by a user to obtain uplink audio data and send the uplink audio data to the mobile phone 1. The mobile phone 1 sends the uplink audio data to the peer device. In this way, the collaborative processing of the call service can be implemented, so that the user can answer the call through the secondary device.

It may be understood that, collaborative processing processes of other services are similar to the collaborative processing process of the call service. For example, during the collaborative processing of a video playback service, the primary device sends video data to the secondary device, and the secondary device plays the video data. A specific collaboration process may be specifically determined based on a service type. Details are not described herein in this embodiment.

It should be noted that for ease of distinction, in this embodiment, an electronic device that provides a device capability is referred to as a secondary device, and an electronic device that invokes a device capability is referred to as a primary device. For example, in the call service, the tablet computer 2 that provides the audio capability is referred to as a secondary device, and the mobile phone 1 that invokes the audio capability is referred to as the primary device. Other names may be used for the primary device and the secondary device. For example, the primary device may be referred to as a source device, and the secondary device may be referred to as a target device. This is not limited in this embodiment.

At present, the primary device only supports the transfer of a call to one secondary device for answering, but does not support the transfer of a call among different secondary devices. For example, when determining that the tablet computer 2 and the laptop computer 3 can be used as secondary devices, the mobile phone 1 may transfer a call from the mobile phone 1 to the tablet computer 2 for answering, or may transfer a call from the mobile phone 1 to the laptop computer 3 for answering. However, after the mobile phone 1 transfers a call from the mobile phone 1 to the tablet computer 2 for answering, the call can no longer be transferred from the tablet computer 2 to the laptop computer 3 for answering.

During actual application, the user may need to transfer a call from one secondary device to another secondary device. For example, after receiving an incoming call request, the mobile phone 1 connects a call and transfers the call to the tablet computer 2 for answering, and the user may answer the phone through the tablet computer 2. In a process of using the tablet computer 2 to answer the phone, if the user needs to open and edit a document on the laptop computer 3, in this case, the user needs to simultaneously use the tablet computer 2 and the laptop computer 3, causing great inconvenience to the user. If the call can be transferred from the tablet computer 2 to the laptop computer 3 for answering, the user can edit the document on the laptop computer 3 while using the laptop computer 3 to answer the phone, so that a quantity of devices can be reduced, making it convenient for the user to simultaneously process a plurality of transactions.

To resolve the problem that a call cannot be transferred among different secondary devices, an optional method is to first transfer a call back to a primary device and then transfer the call from the primary device to another secondary device. FIG. 2 is a schematic diagram of a call transfer process according to an embodiment of this application. After connecting a call, the mobile phone 1 may first perform step S21, and invoke an audio capability of the tablet computer 2 to process a call service, i.e., transfer the call to the tablet computer 2 for answering. In this case, the user may answer the phone through the tablet computer 2. When the user needs to answer the phone through the laptop computer 3, the call needs to be transferred from the tablet computer 2 to the laptop computer 3. In this case, the mobile phone 1 may perform step S22 first to transfer the call back to the mobile phone 1, and then perform step S23 to transfer the call to the laptop computer 3. In this case, the user may answer the phone through the laptop computer 3.

In a process of using the method shown in FIG. 2 to transfer the call from the tablet computer 2 to the laptop computer 3, the call first needs to be transferred back to the mobile phone 1, and is then transferred from the mobile phone 1 to the laptop computer 3. As a result, a transfer process needs to take a long time. In addition, because the call is ongoing in the transfer process, to avoid call interruption, the user needs to first temporarily use the mobile phone 1 to answer the phone, and then use the laptop computer 3 to answer the phone after the call is transferred to the laptop computer 3. Operations are complex, resulting in poor user experience.

In summary, in a call answering process, the user may need to transfer a call from one secondary device to another secondary device. However, the primary device does not support direct transfer of a call among different secondary devices. Even if the method shown in FIG. 2 is used, a call transfer time is long, a switching process is complex, and user experience is poor.

Embodiments of this application provide a call system and a call method. A primary device simultaneously enables audio capabilities of a plurality of secondary devices, making the audio capabilities of the plurality of secondary devices simultaneously reach a usable state. After connecting a call, the primary device may transfer the call to one of the secondary devices for answering. If the call needs to be transferred from one secondary device to another secondary device, because the audio capability of the new secondary device has been enabled, the primary device may directly invoke the audio capability of the new secondary device to process a call service, and the call can be directly transferred to the new secondary device, so that the call can be directly transferred among different secondary devices. In addition, the call can be kept from being transferred back to the primary device, so that a time for transferring a call from one secondary device to another secondary device can be reduced, thereby simplifying user operations and improving user experience.

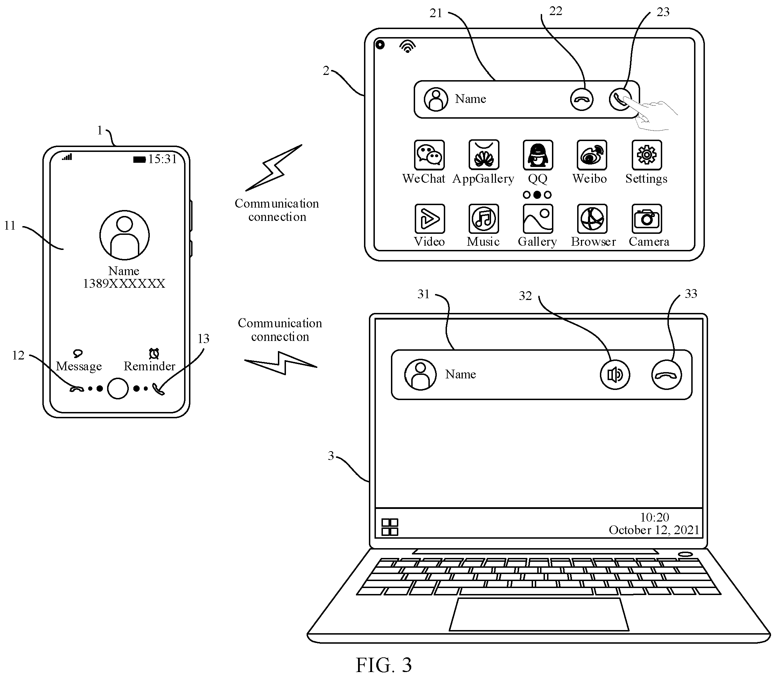

FIG. 3 to FIG. 7 are schematic diagrams of an application scenario of the foregoing method. FIG. 3 to FIG. 7 describe a process in which after receiving an incoming call request, the mobile phone 1 first transfers a call to the tablet computer 2, then transfers the call from the tablet computer 2 to the laptop computer 3, and finally ends the call.

FIG. 3 is a schematic diagram of interfaces of multiple devices simultaneously providing a reminder for an incoming call according to an embodiment of this application. After receiving the incoming call request, the mobile phone 1 displays an incoming call notification interface 11 to notify the user to answer the phone. The incoming call notification interface 11 may include a disconnection control 12 and an answering control 13, but is not limited thereto.

After receiving the incoming call request, the mobile phone 1 may determine a secondary device that is in an online state and has an audio capability from the trust circle. For example, if the tablet computer 2 and the laptop computer 3 are in an online state in this case, it may be determined that the tablet computer 2 and the laptop computer 3 are secondary devices. After determining that the tablet computer 2 and the laptop computer 3 are secondary devices, the mobile phone 1 may send a simultaneous vibration notification to the tablet computer 2 and send a simultaneous vibration notification to the laptop computer 3. The simultaneous vibration notification may include a telephone number, a home location, a user name, call signaling, and other information, but is not limited thereto.

After receiving the simultaneous vibration notification, the tablet computer 2 and the laptop computer 3 may provide a reminder for an incoming call. As shown in FIG. 3, after receiving the simultaneous vibration notification, the tablet computer 2 may display a floating window 21 based on the user name, the telephone number, and the like in the simultaneous vibration notification to provide the reminder for the incoming call to remind the user to answer the phone. The floating window 21 may include a disconnection control 22 and an answering control 23, but is not limited thereto.

Similarly, after receiving the simultaneous vibration notification, the laptop computer 3 may display a floating window 31 including an answering control 32, a disconnection control 33, and other content, to provide the reminder for the incoming call to remind the user to answer the phone.

Before or after sending the simultaneous vibration notification to the tablet computer 2 and the laptop computer 3, the mobile phone 1 may enable the audio capability of the tablet computer 2 and enable an audio capability of the laptop computer 3, to make the audio capability of the tablet computer 2 reach a usable state and make the audio capability of the laptop computer 3 reach a usable state, so that the mobile phone 1 can directly invoke the audio capability of the tablet computer 2 or invoke the audio capability of the laptop computer 3 to answer the call.

It may be understood that, the tablet computer 2 and the laptop computer 3 may provide the reminder for the incoming call in the manner of displaying a floating window shown in FIG. 3, or may provide the reminder for the incoming call in another manner, for example, displaying an incoming call notification interface or a message bubble, but is not limited thereto.

As shown in FIG. 3, after the mobile phone 1 receives the incoming call request, the mobile phone 1 displays the incoming call notification interface 11, the tablet computer 2 displays the floating window 21, and the laptop computer 3 displays the floating window 31. The mobile phone 1, the tablet computer 2, and the laptop computer 3 vibrate simultaneously and provide the reminder for the incoming call simultaneously, to notify the user simultaneously to answer the phone. In this case, the user may select any one of the mobile phone 1, the tablet computer 2, and the laptop computer 3 to answer the phone.

For example, when selecting the tablet computer 2 to answer the phone, the user may tap the answering control 23 in the floating window 21 with a finger, as shown in FIG. 3. After receiving a tap operation on the answering control 23 by the user, the tablet computer 2 sends an answering instruction to the mobile phone 1. After receiving the answering instruction sent by the tablet computer 2, the mobile phone 1 connects the call corresponding to the incoming call request and transfers the call to the tablet computer 2 for answering, and the user may answer the phone through the tablet computer 2.

Similarly, if selecting the laptop computer 3 to answer the phone, the user may tap the answering control 32 in the floating window 31. After receiving a tap operation on the answering control 32 by the user, the laptop computer 3 sends an answering instruction to the mobile phone 1. After receiving the answering instruction sent by the laptop computer 3, the mobile phone 1 may connect the call and transfer the call to the laptop computer 3 for answering, and the user may answer the phone through the laptop computer 3.

Similarly, if selecting the mobile phone 1 to answer the phone, the user may tap the answering control 13 in the incoming call notification interface 11. After receiving a tap operation on the answering control 13 by the user, the mobile phone 1 connects the call, and the user may answer the phone through the mobile phone 1.

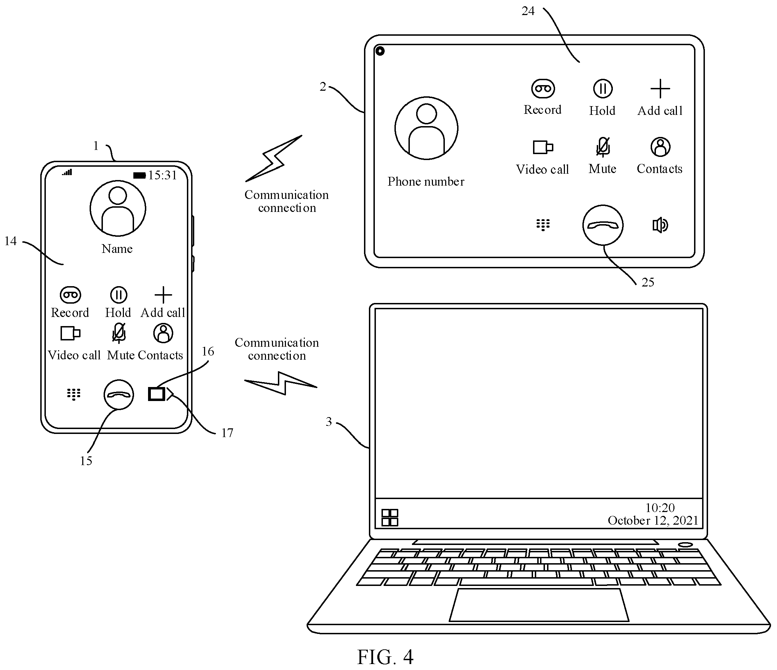

FIG. 4 is a schematic diagram of interfaces after a call is transferred from a mobile phone to a tablet computer in FIG. 3. After transferring the call to the tablet computer 2, the mobile phone 1 may display a call interface 14. The call interface 14 may highlight a device icon 16 of the tablet computer 2 to identify that the call has been transferred to the tablet computer 2.

Meanwhile, the tablet computer 2 may display a call interface 24. The call interface 24 displayed by the tablet computer 2 may be the same as or different from the call interface 14 displayed by the mobile phone 1. The mobile phone 1 sends downlink audio data to the tablet computer 2 for playing. The tablet computer 2 may acquire uplink audio data and send the uplink audio data to the mobile phone 1. The mobile phone 1 sends the uplink audio data to a peer device. The user answers the phone through the tablet computer 2.

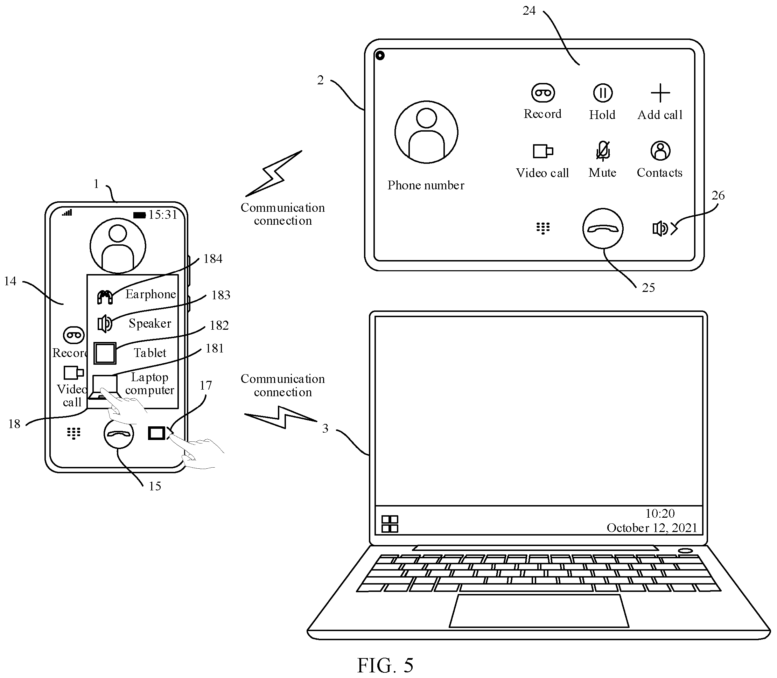

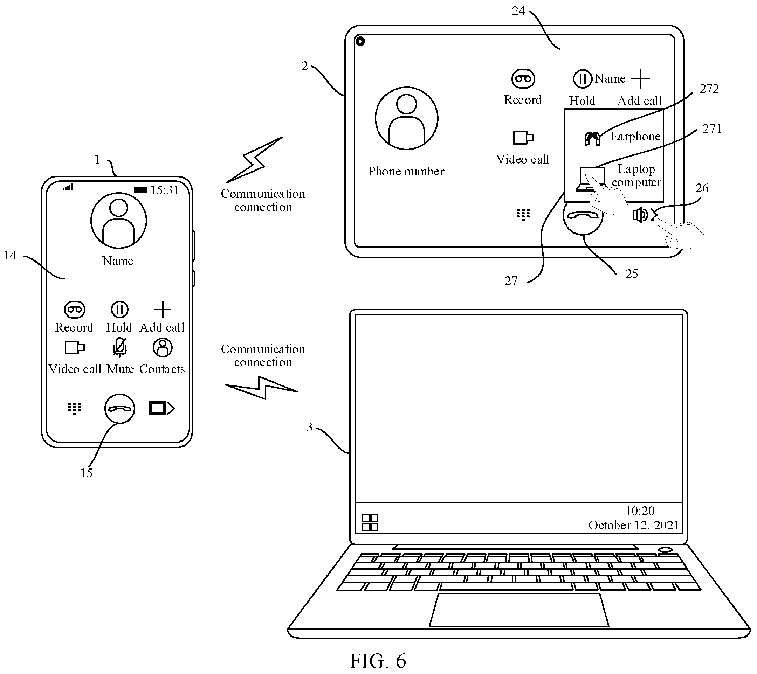

As shown in FIG. 4, before or after transferring the call to the tablet computer 2, the mobile phone 1 may send a simultaneous vibration stop notification to the laptop computer 3. After receiving the simultaneous vibration stop notification, the laptop computer 3 closes the floating window 31 to stop the reminder for the incoming call. FIG. 5 and FIG. 6 are schematic diagrams of interfaces when a call is transferred from a tablet computer to a laptop computer in FIG. 4. A device selection control 17 is displayed in the call interface 14. When using the tablet computer 2 to answer the phone, if wanting to transfer the call from the tablet computer 2 to the laptop computer 3, the user may first tap the device selection control 17 to enable the mobile phone 1 to display a device selection interface 18. The device selection interface 18 includes a device icon 181 of the laptop computer 3, a device icon 182 of the tablet computer 2, a device icon 183 of a speaker of the mobile phone 1, and a device icon 184 of the earphones 6 that have established a connection to the mobile phone 1. Next, the user may tap the device icon 181 to enable the mobile phone 1 to transfer the call to the laptop computer 3.

As shown in FIG. 6, a device selection control 26 is displayed in the call interface 24. When using the tablet computer 2 to answer the phone, if wanting to transfer the call from the tablet computer 2 to the laptop computer 3, the user may first tap the device selection control 26 to enable the tablet computer 2 to display a device selection interface 27. The device selection interface 27 includes a device icon 271 of the laptop computer 3 and a device icon 272 of the earphones 6 that have established a connection to the mobile phone 1. Next, the user may tap the device icon 271 to enable the tablet computer 2 to send a switching instruction including a device identifier of the laptop computer 3 to the mobile phone 1. After receiving the switching instruction, the mobile phone 1 transfers the call to the laptop computer 3.

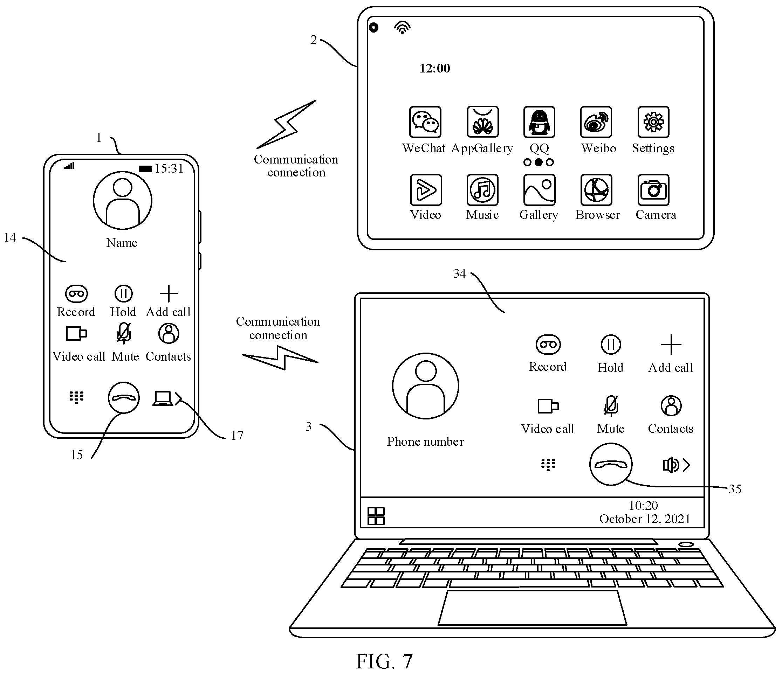

FIG. 7 is a schematic diagram of interfaces after a call is transferred from a tablet computer to a laptop computer in FIG. 5 and FIG. 6. If the user taps the device icon 181 or the device icon 271, the mobile phone 1 may directly transfer the call from the tablet computer 2 to the laptop computer 3. After transferring the call to the laptop computer 3, the laptop computer 3 displays a call interface 34. The mobile phone 1 may send downlink audio data to the laptop computer 3 for playing. The laptop computer 3 may acquire uplink audio data and send the uplink audio data to the mobile phone 1. Before or after transferring the call from the tablet computer 2 to the laptop computer 3, the mobile phone 1 may send a stop instruction to the tablet computer 2. After receiving the stop instruction, the tablet computer 2 closes the call interface 24 in response to the stop instruction to stop playing the downlink audio data and stop acquiring the uplink audio data. The mobile phone 1 stops sending the downlink audio data to the tablet computer 2 and stops receiving the uplink audio data sent by the tablet computer 2.

When answering the phone through the laptop computer 3, if needing to hang up the phone, the user may tap a hang-up control 35 in the call interface 34. After receiving a tap operation by the user, the laptop computer 3 stops answering the call in response to the tap operation, closes the call interface 34, and sends a stop instruction to the mobile phone 1. After receiving the stop instruction, the mobile phone 1 may hang up the phone and close the call interface 14.

Alternatively, the user may tap a hang-up control 15 in the call interface 14. After receiving a tap operation by the user, the mobile phone 1 may hang up the phone, close the call interface 14, and send a stop instruction to the laptop computer 3. After receiving the stop instruction, the laptop computer 3 may stop processing the call and close the call interface 34.

Similarly, when answering the phone through the tablet computer 2, if needing to hang up the phone, the user may tap a hang-up control 25 in the call interface 24. After receiving a tap operation by the user, the tablet computer 2 may stop processing the call in response to the tap operation, close the call interface 24, and send a stop instruction to the mobile phone 1. After receiving the stop instruction, the mobile phone 1 may hang up the phone and close the call interface 14.

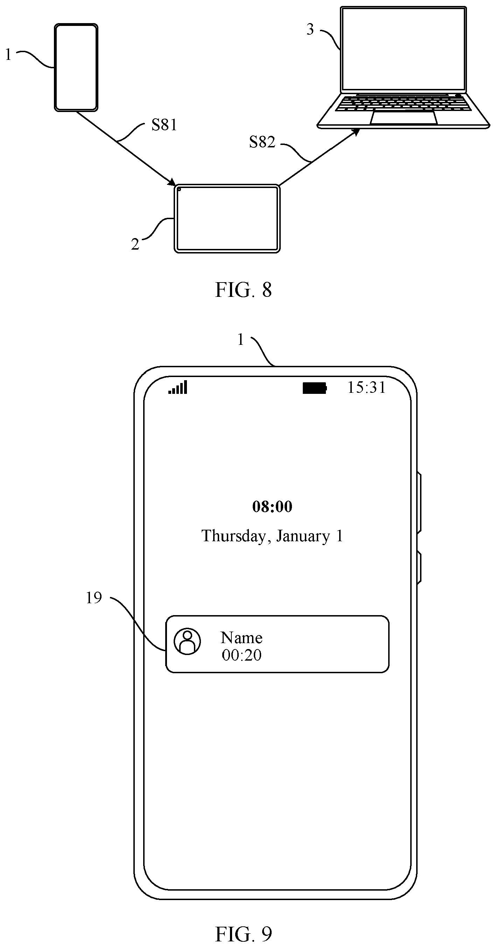

FIG. 8 is a schematic diagram of a call transfer according to an embodiment of this application. Referring back to FIG. 3 and FIG. 4, after the mobile phone 1 receives the incoming call request, the mobile phone 1 displays the incoming call notification interface 11, the tablet computer 2 displays the floating window 21, and the laptop computer 3 displays the floating window 31. If the user taps the answering control 23, the mobile phone 1 performs step S81 to transfer the call to the tablet computer 2 for answering.

Referring back to FIG. 5 and FIG. 7, in a process of answering the call through the tablet computer 2, if the user taps the device icon 181, the mobile phone 1 performs step S82 to transfer the call from the tablet computer 2 to the laptop computer 3 for answering.

Because the mobile phone 1 simultaneously enables the audio capability of the tablet computer 2 and the audio capability of the laptop computer 3, the audio capability of the tablet computer 2 and the audio capability of the laptop computer 3 are simultaneously in a usable state. Therefore, the mobile phone 1 can directly invoke the audio capability of the laptop computer 3 to answer the call, and can directly transfer the call to the laptop computer 3.

Compared with the transfer process shown in FIG. 2, the call does not need to be transferred back to the mobile phone 1, so that a transfer time is shortened. In addition, because the call does not need to be transferred back to the mobile phone 1, in the transfer process, the user does not need to use the mobile phone 1 to answer the phone, so that user operations can be simplified, thereby improving user experience.

FIG. 9 is a schematic diagram of interfaces after a call service is transferred from a tablet computer or a laptop computer to a mobile phone in FIG. 3. After transferring the call to the tablet computer 2 or the laptop computer 3, the mobile phone 1 may lock the call interface 14 after a preset duration, and display a floating window 19 on a display. The floating window 19 may include a call duration, contacts, and other information, but is not limited thereto. When the user taps the floating window 19, the mobile phone 1 may display the call interface 14 again.

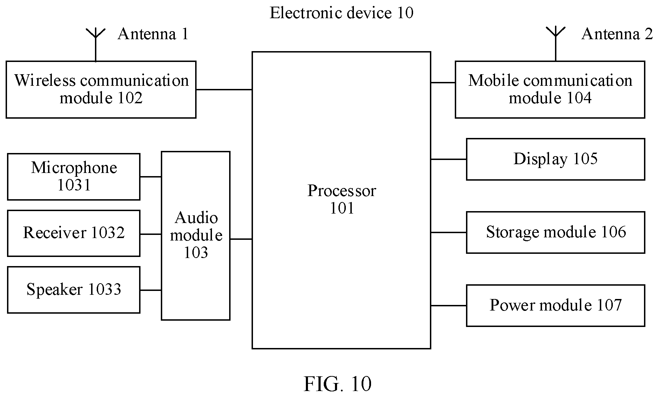

FIG. 10 is a schematic diagram of a hardware structure of an electronic device applicable to the foregoing method. The electronic device 10 may include a processor 101, a wireless communication module 102, an audio module 103, a mobile communication module 104, a display 105, a storage module 106, and a power module 107. The electronic device may further include a microphone 1031, a receiver 1032, a speaker 1033, an antenna 1, an antenna 2, a sensor module, a universal serial bus (universal serial bus, USB) interface, an external memory interface, a button, a motor, an indicator, a subscriber identification module (subscriber identification module, SIM) card interface, and the like, but is not limited thereto.

The processor 101 may include one or more processing units. For example, the processor 101 may include at least one of the following processing units: an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and a neural-network processing unit (neural-network processing unit, NPU). Different processing units may be separate devices, or may be an integrated device.

The wireless communication module 102 may provide a solution for wireless communication to be applied to the electronic device 10, for example, a wireless local area network (wireless local area networks, WLAN), Bluetooth, and near field communication, but are not limited thereto. The wireless communication module 102 may be one or more devices that integrate at least one communication processing module. The wireless communication module 102 receives an electromagnetic wave through the antenna 1, performs frequency modulation on and filters the electromagnetic wave signal, and sends a processed signal to the processor 101. The wireless communication module 102 may further receive a to-be-sent signal from the processor 101, perform frequency modulation on and amplify the to-be-sent signal, and convert the to-be-sent signal into an electromagnetic wave through the antenna 1 for radiation.

The electronic device 10 may implement audio processing functions such as audio playback and audio recording by using the audio module 103, the microphone 1031, the receiver 1032, the speaker 1033, the application processor, and the like.

The audio module 103 is configured to convert audio into an analog sound signal for output, and is also configured to convert an analog sound signal into an audio stream. In some embodiments, the audio module 103 or some functional modules in the audio module 103 may be disposed in the processor 101.

The microphone 1031, also referred to as a "mic" or a "megaphone", is configured to convert a sound signal into an audio stream.

The receiver 1032, also referred to as a "handset", is configured to convert audio into a sound signal. When the electronic device 10 is configured to answer a call or receive voice information, the receiver 1033 may be put close to a human ear to receive a voice.

The speaker 1033, also referred to as a "horn", is configured to convert an audio electrical signal into a sound signal. The audio stream is, for example, an audio stream in a pulse code modulation (pulse code modulation, PCM) format. When playing an audio file, an application in the electronic device first decodes the audio file to obtain an audio stream in the PCM format, then transfers the audio stream in the PCM format to the speaker 1033, and converts the audio stream into an audio signal through the speaker 1033 for output.

The mobile communication module 104 may provide a second generation (2th generation, 2G) mobile communication solution, a third generation (3th generation, 3G) mobile communication solution, a fourth generation (4th generation, 5G) mobile communication solution, and a fifth generation (5th generation, 5G) mobile communication solution applied to the electronic device 10. The mobile communication module 104 may include at least one filter, a switch, a power amplifier, a low noise amplifier (low noise amplifier, LNA), and the like. The mobile communication module 104 may receive an electromagnetic wave through the antenna 2, perform processing such as filtering and amplification on the received electromagnetic wave, and subsequently send the electromagnetic wave to the modem processor for demodulation. The mobile communication module 104 may further amplify a signal modulated by the modem processor, and convert the amplified signal into an electromagnetic wave through the antenna 2 for radiation.

The electronic device 10 may implement image display by using the GPU, the display 105, and the application processor, to provide the electronic device 10 with a video playback function and an image display function. The GPU is a microprocessor for image processing and is connected to the display 105 and the application processor. The GPU is configured to perform mathematical and geometric calculations, and is configured to render graphics. The processor 101 may include one or more GPUs that execute program instructions to generate or change display information.

The storage module 106 is configured to store instructions and data. The storage module 106 is, for example, a cache. The storage module 106 may store instructions or data that is just used or used cyclically by the processor 101. If the processor 101 needs to use the instructions or the data again, the processor may directly invoke the instructions or the data from the storage module 106, which avoids repeated access, and reduces a waiting time of the processor 101, thereby improving system efficiency.

The processor 101 and the storage module 106 may be combined into a processing apparatus, and are more often components independent of each other. During specific implementation, the storage module 106 may be integrated into the processor 101, or independent of the processor 101.

The power module 107 is configured to supply power to various devices or circuits in the electronic device 10, and may include a charging management unit, a power management unit, a battery, and the like.

It needs to be noted that a connection relationship among the modules in FIG. 10 is merely an example for description, and constitutes no limitation on the connection relationship among the modules of the electronic device 10. Optionally, the modules of the electronic device 10 may use a combination of a plurality of connection manners in the foregoing embodiments. The structure shown in FIG. 10 does not constitute a specific limitation on the electronic device 10. The electronic device 10 may include more or fewer components than the components shown in FIG. 10, or the electronic device 10 may include a combination of some components of the components shown in FIG. 10, or the electronic device 10 may include subcomponents of some components of the components shown in FIG. 10. The components shown in FIG. 10 may be implemented by hardware, software, or a combination of software and hardware.

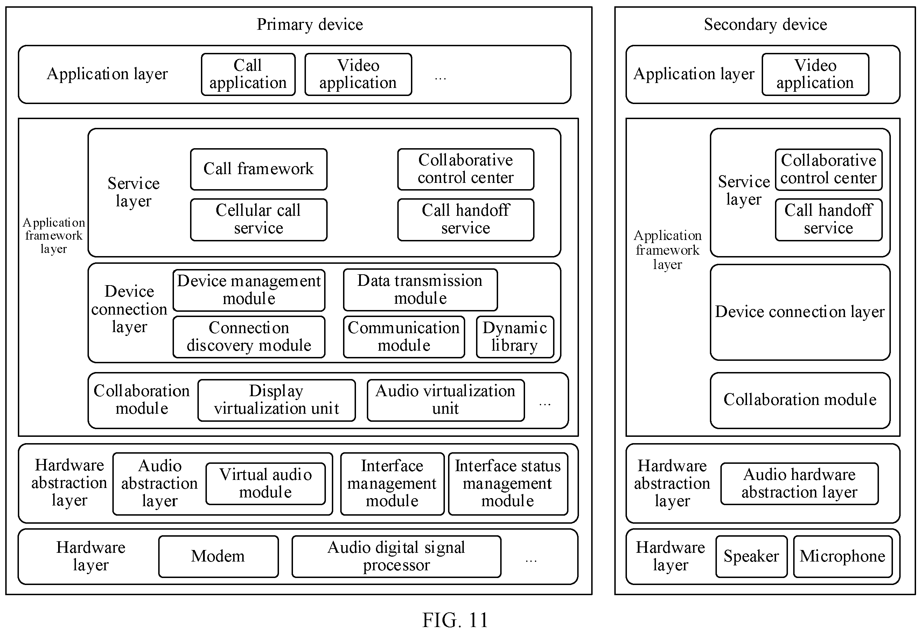

FIG. 11 is a schematic diagram of an architecture of an electronic device according to an embodiment of this application. In FIG. 11, a schematic diagram of an architecture of a primary device is provided on the left side, and the primary device is, for example, the mobile phone 1. A schematic diagram of an architecture of a secondary device is provided on the right side, and the secondary device is, for example, the tablet computer 2.

A mobile phone is used as an example. An operating system (operating system, OS) of the mobile phone includes an application layer, an application framework (framework) layer, and a hardware abstraction layer (hardware abstraction layer, HAL).

The application layer includes a plurality of different application (application, APP) packages. Applications are referred to as applications below. The applications are, for example, a call application, a video application, and a navigation application, but are not limited thereto. Different applications are configured to start and process different services. For example, the call application is configured to start and process a call service. The video application is configured to start and process a video playback service.

The application framework layer provides an application programming interface (application programming interface, API) and a programming framework for an application at the application layer. The application framework layer may be further divided into a service layer, a device connection layer, and a collaboration module. The service layer is configured to provide service support for applications of the application layer. For example, for the call application, the service layer may set a call framework and a cellular call service. The call framework and the cellular call service may provide service support for the call application, to implement functions such as caller ID display, call routing, voicemail, and video conferencing.

Further, the service layer further includes a handoff service and a collaborative control center. The handoff service and the collaborative control center are configured to provide service support for the transfer of a service between a primary device and a secondary device. For example, for a call service, a call handoff service is set in the service layer. The call handoff service is connected to the call application and may monitor the call application. After detecting that the call application starts a call service, the call handoff service and the collaborative control center may determine a secondary device that supports a call service from a plurality of devices in the trust circle, interact with a call handoff service in the secondary device, and send a simultaneous vibration notification to the secondary device, to enable the secondary device and the primary device to simultaneously provide a reminder for an incoming call.

It may be understood that for different applications, different handoff services may be set in the service layer to support the transfer of different services between a primary device and a secondary device. For example, for a video playback service, a video handoff service may be set in the service layer.

The device connection layer is configured to provide communication support for the collaboration between a primary device and a secondary device, and may include a device management module, a connection discovery module, a data transmission module, a communication module, a dynamic library, and the like shown in FIG. 11, but is not limited thereto.

The device management module is configured to manage devices in the trust circle. For example, in the trust circle shown in FIG. 1, after getting online, each device may push device information to other devices in the trust circle to notify that the device is online. Each device may record device information of devices in an online state in the trust circle in the dynamic library, and determine, based on the recorded device information, whether an online secondary device exists in the trust circle.

The connection discovery module may detect a device in the trust circle and determine that the device in the trust circle is in an online state or an offline state. The data transmission module is configured to control the transmission of data of different types between devices.

The communication module is configured to establish a data channel and a control channel between devices to transmit data through the data channel and transmit control information, protocol information, and the like through the control channel. In addition, the communication module may provide a quality interface to the collaboration module. The collaboration module may acquire network quality indicators between the device and another device through the quality interface. The network quality indicators include a negotiated rate, signal strength, current average transmission latency, a packet loss rate, and other parameters. The device may prompt the user when the network quality indicators indicate that network quality is poor.

The collaboration module may also be referred to as a device virtualization layer. The collaboration module is configured to provide functional support for the collaboration between devices. The collaboration module is, for example, a distributed mobile sensing development platform (distribute mobile sensing development platform, DMSDP). The DMSDP may be formed by different virtualization units, for example, virtualization units such as an audio virtualization unit, a display virtualization unit, and a camera virtualization unit (not shown in the figure) shown in FIG. 11. Different virtualization units are configured to support the sharing of different device capabilities among devices. For example, the audio virtualization unit is configured to support the sharing of audio capabilities between the mobile phone 1 and the tablet computer 2, and the display virtualization unit is configured to support the sharing of video capabilities between the mobile phone 1 and the tablet computer 2.

In this embodiment, when a device is used as a primary device, the collaboration module supports the invocation of a device capability of a secondary device by the primary device. When a device is used as a secondary device, the collaboration module supports the provision of a device capability to a primary device by the secondary device. Each device capability has a corresponding capability identifier. The capability identifier may also be referred to as a service identifier. The service identifier indicates a service that a secondary device can provide to a primary device. The service is a device capability that can be invoked by the primary device. The collaboration module may distinguish between device capabilities of devices through different service identifiers, and implement the sharing of the device capabilities through the service identifiers.

For example, the audio playback capability and the audio recording capability have different service identifiers. The service identifier of the audio playback capability represents the audio playback capability of the device, and the service identifier of the audio recording capability represents the audio recording capability of the device. An audio capability also has a corresponding service identifier. The service identifier of the audio capability represents the audio playback capability and the audio recording capability of the device.

A primary device may invoke a device capability of a secondary device through a service identifier. For example, when transferring a call service to the tablet computer 2, the mobile phone 1 may first send a service transfer request to the tablet computer 2. The service transfer request includes the service identifier of the audio capability. After receiving the service transfer request, the tablet computer 2 may create an audio player (AudioTrack or MediaPlayer), an audio recorder (AudioRecord), and an audio processor (AudioFlinger).

Further, when receiving the downlink audio data sent by the mobile phone 1, the tablet computer 2 inputs the downlink audio data into the audio player. The audio player inputs the downlink audio data into the audio processor for processing. The audio processor inputs audio data obtained through processing to a speaker of the tablet computer 2 for playing. In addition, the tablet computer 2 may acquire uplink audio data from the microphone through the audio recorder, and send the uplink audio data to the mobile phone 1.

The hardware abstraction layer is configured to provide data support to the collaboration module, to enable the collaboration module to acquire service data of a service through an interface in the HAL. A call service is used as an example. The service data includes uplink audio data and downlink audio data. An audio hardware abstraction layer (audio hardware abstraction layer, Audio HAL) is disposed in the HAL. The audio hardware abstraction layer includes a software module configured to support the invocation of an audio capability. The software module may be named a virtual audio module, or another name may be used for the software module.

When processing a call service, the mobile phone receives, through a modem (modem), downlink audio data sent by a peer device. The modem transmits the downlink audio data to an audio digital signal processor (audio digital signal processing, ADSP). The ADSP inputs the downlink audio data into the speaker for playing. In addition, the mobile phone acquires uplink audio data through the microphone, and inputs the uplink audio data into the ADSP. The ADSP sends the uplink audio data to the peer device.

Before invoking the audio capability of the tablet computer 2, the mobile phone 1 needs to enable the audio capability of the tablet computer 2. During the enabling of the audio capability of the tablet computer 2, a communication interface of the tablet computer 2 may be registered in the virtual audio module. In a process of collaboratively processing a call service, when the mobile phone 1 receives the uplink audio data sent by the tablet computer 2, the collaboration module may invoke the communication interface to send the uplink audio data to the ADSP. The ADSP sends the uplink audio data to the modem. The modem sends the uplink audio data to the peer device. In addition, the collaboration module may invoke the communication interface to acquire the downlink audio data sent by the peer device from the ADSP, and then send the downlink audio data to the tablet computer 2 for playing.

A hardware layer includes different hardware modules that the electronic device has, for example, the speaker, the microphone, the ADSP, the modem, a camera, and the display, but is not limited thereto.

It may be understood that, the architectures of the primary device and the secondary device are described in FIG. 11 by using only an example in which operating systems of the primary device and the secondary device are Android (Android) systems, which does not constitute a limitation on the operating systems of the primary device and the secondary device. The operating systems of the primary device and the secondary device may be other operating systems, for example, Windows systems. When the operating systems of the primary device and the secondary device are other operating systems, the architectures of the operating systems may be different from those in FIG. 11, but may include software modules such as the service layer, the device connection layer, the collaboration module, and the virtual audio module shown in FIG. 11.

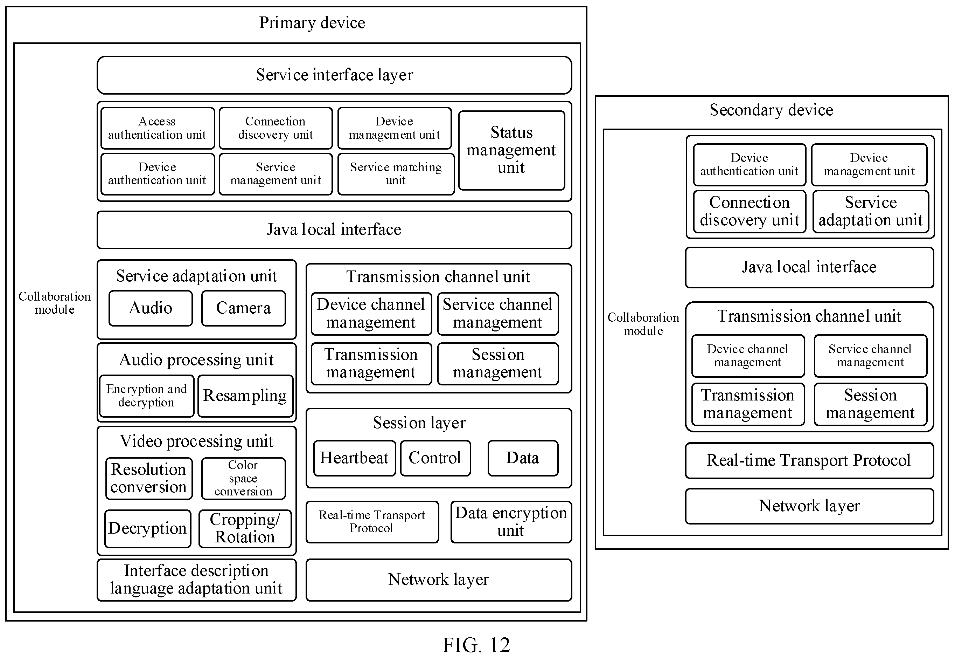

FIG. 12 is a schematic diagram of a structure of a collaboration module according to an embodiment of this application. A schematic structural diagram of a collaboration module in a primary device is provided on the left side, and the primary device is, for example, the mobile phone 1. A schematic structural diagram of a collaboration module in a secondary device is provided on the right side, and the secondary device is, for example, the tablet computer 2.

A service interface layer is configured to provide different interfaces to input a device identifier, an identifier of a secondary device, and other information into the collaboration module to trigger the collaboration module to enable the secondary device, and invoke a device capability of the secondary device.

An access authentication unit and a device authentication unit are configured to perform authentication between a primary device and a secondary device. A connection discovery unit is configured to detect a secondary device in an online state. A device management unit is configured to manage a secondary device. A service matching unit is configured to match different services for different services.

A Java native interface (java native interface, JNI) provides support for the interaction between the collaboration module and the HAL, to enable the collaboration module to acquire service data from the HAL through the communication interface registered in the HAL.

A service adaptation unit is configured to adapt different device capabilities to different services. An audio processing unit is configured to process audio data in a collaborative processing processes of a service, for example, resample, encrypt, and decrypt the audio data. A video processing unit is configured to process video data in a collaborative processing process of a service, for example, crop, rotate, encrypt, and decrypt the video data, and perform color space conversion, resolution conversion, and the like on the video data.

A hide interface description language (hide interface description language, HIDL) adaptation unit is configured to provide adaptation of an interface description language.

A transmission channel unit is configured to create and manage channels between different devices, and has a device channel management function, a service channel management function, an output management function, a session management function, and the like shown in FIG. 11.

A session layer is configured to provide data support for a session between devices, for example, the transmission of heartbeat detection and control information. A real-time transport protocol (real time transport protocol, RTP) is configured to provide an end-to-end real time transport service for multimedia data such as audio and a video that needs to be transmitted in real time between collaboration modules, and provide time information and stream synchronization.

A data encryption unit is configured to provide safety support for the collaboration module, and may encrypt data that is transmitted by the collaboration module.

A network layer is configured to provide different protocol support to the collaboration module, for example, may provide a user datagram protocol (user datagram protocol, UDP), a transmission control protocol (transmission control protocol, TCP), a fill up the pipe (fill up the pipe, FILLP) protocol, and the like. The foregoing provides merely exemplary examples, and does not constitute a specific limitation on the collaboration module. The composition of the collaboration module may include, but is not limited to, the software units in the foregoing examples.

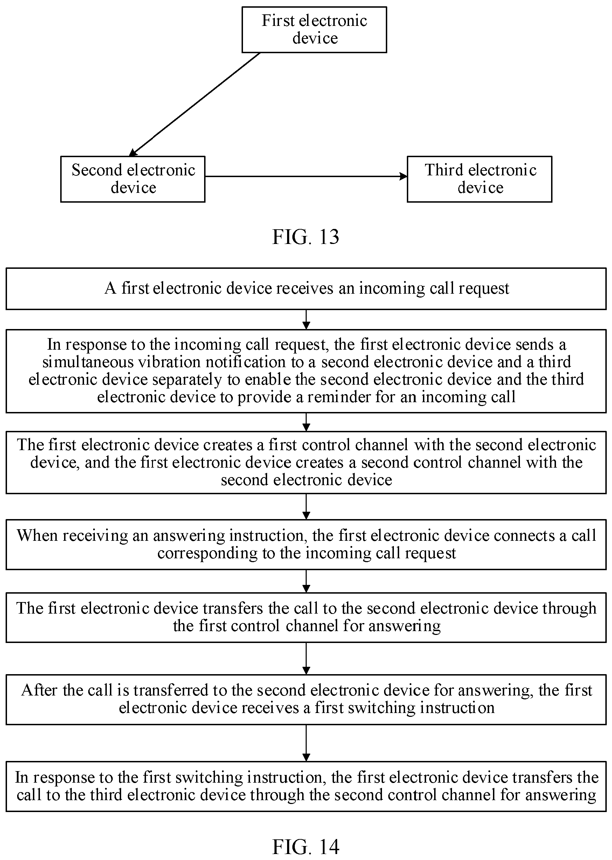

FIG. 13 is a schematic diagram of a structure of a call system according to an embodiment of this application. FIG. 14 is a schematic flowchart of a call method according to an embodiment of this application.

The call system includes a first electronic device, a second electronic device, and a third electronic device. The call method is applied to the first electronic device in the call system. The first electronic device is configured to receive an incoming call request, and connects a call corresponding to the incoming call request. After connecting the call, the first electronic device first transfers the call to the second electronic device for answering, and then transfers the call from the second electronic device to the third electronic device for answering.

Referring to FIG. 8, the first electronic device is the mobile phone 1, the second electronic device is the tablet computer 2, and the third electronic device is the laptop computer 3. The first electronic device is a primary device. The second electronic device and the third electronic device are secondary devices. The second electronic device is a secondary device to which a call is transferred for the first time. The third electronic device is a secondary device to which the call is transferred from the second electronic device.

It should be noted that one or more third electronic devices may be provided. This is not limited in this embodiment.

In an embodiment, when receiving the incoming call request, the first electronic device may provide a reminder for an incoming call. In addition, after receiving the incoming call request, the first electronic device may send a simultaneous vibration notification to the second electronic device and the third electronic device separately, to indicate, through the simultaneous vibration notification, the second electronic device and the third electronic device to provide the reminder for the incoming call. As shown in FIG. 3, when receiving an incoming call request, the mobile phone 1 displays the incoming call notification interface 11, and sends a simultaneous vibration notification to the tablet computer 2 and the laptop computer 3 separately, to enable the tablet computer 2 to display the floating window 21 to provide a reminder for an incoming call and enable the laptop computer 3 to display the floating window 31 to provide a reminder for the incoming call.

After receiving the incoming call request, the first electronic device may enable an audio capability of the second electronic device, and establish a first control channel between the first electronic device and the second electronic device, so that after the call is connected, the call may be transferred to the second electronic device through the first control channel for answering. Similarly, the first electronic device may enable an audio capability of the third electronic device, and establish a second control channel between the first electronic device and the third electronic device, so that after the call is transferred to the second electronic device for answering, the call may be transferred to the third electronic device through the second control channel for answering.

As shown in FIG. 8, after receiving the incoming call request, the mobile phone 1 may enable an audio capability of the tablet computer 2, and establish a first control channel between the mobile phone 1 and the tablet computer 2. In addition, the mobile phone 1 enables the audio capability of the laptop computer 3, and establishes a second control channel between the mobile phone 1 and the laptop computer 3.

In the call system shown in FIG. 13, after the first electronic device receives the incoming call request, when the first electronic device or the second electronic device receives an operation of answering the incoming call, the first electronic device connects the call.

In an implementation, after the operation of answering the incoming call is received on the second electronic device, the second electronic device sends an answering instruction to the first electronic device. In response to the answering instruction, the first electronic connects the call, and transfers the call to the second electronic device through the first control channel for answering. As shown in FIG. 3 and FIG. 4, the operation of answering the incoming call is, for example, the tap operation of tapping the answering control 23. After receiving the tap operation of tapping the answering control 23 by the user, the tablet computer 2 sends an answering instruction to the mobile phone 1. After receiving the answering instruction, the mobile phone 1 answers the call in response to the answering instruction, and then transfers the call to the second electronic device through the first control channel. A method for sending the answering instruction to the first electronic device by the second electronic device may include, but is not limited to, the foregoing examples.

In another implementation, when receiving the operation of answering the incoming call, the first electronic device connects the call. After the call is connected, if receiving a second switching instruction corresponding to the second electronic device, the first electronic device transfers the call to the second electronic device through the first control channel in response to the second switching instruction. As shown in FIG. 3, the operation of answering the incoming call is, for example, the tap operation of tapping the answering control 13. The mobile phone 1 displays the incoming call notification interface 11 when receiving the incoming call request. When receiving the tap operation of tapping the answering control 13 by the user, the mobile phone 1 connects the call. In this case, the mobile phone 1 connects the call, and displays the call interface 14 shown in FIG. 4. The call interface may also include the device selection control 17.

After the user taps the device selection control 17, the mobile phone 1 displays the device selection interface 18. The user may enter a second switching instruction into the mobile phone 1 by tapping the device icon 182 of the tablet computer 2. The second switching instruction includes a device identifier of the tablet computer 2. In response to the second switching instruction, the mobile phone 1 may transfer, based on the device identifier in the second switching instruction, the call to the tablet computer 2 through the first control channel for answering. A method for receiving the second switching instruction by the first electronic device may include, but is not limited to, the foregoing examples.

In an embodiment, after the call is transferred to the second electronic device for answering, when receiving a first operation corresponding to a first control, the second electronic device sends a first switching instruction to the first electronic device. The first electronic device transfers, in response to the first switching instruction, the call to the third electronic device for answering. As shown in FIG. 6, when the call is transferred to the tablet computer 2 for answering, the tablet computer 2 may display the call interface 24. The call interface 24 is a second call interface. The first control included in the call interface is the device icon 271 of the laptop computer 3. The first operation is, for example, a tap operation of tapping the device icon 271. When the call is answered on the tablet computer 2, the user may tap the device icon 271, and the tablet computer 2 sends the first switching instruction to the mobile phone 1 in response to the tap operation of tapping the device icon 271 by the user. The device icon 271 is bound to the laptop computer 3, and the first switching instruction may include the device identifier of the laptop computer 3. After receiving the first switching instruction, the mobile phone 1 transfers the call to the laptop computer 3 for answering.

In another embodiment, after the call is transferred to the second electronic device for answering, the first electronic device displays a first call interface, where the first call interface includes a second control. The first electronic device receives the first switching instruction through the second control. As shown in FIG. 5, the first call interface is the call interface 14, and the second control is the device icon 181 of the laptop computer 3. When the call is answered on the tablet computer 2, the user may enter the first switching instruction into the mobile phone 1 through a tap operation of tapping the device icon 181 by the user. After receiving the first switching instruction, the mobile phone 1 transfers the call to the laptop computer 3 for answering.

In this embodiment, before the call is transferred to the second electronic device for answering, the first electronic device registers a device identifier of the second electronic device. The first electronic device marks an enable status of an audio capability of the second electronic device as a first identifier. The first electronic device marks an invocation status of the audio capability of the second electronic device as a second identifier. When determining, based on the device identifier of the second electronic device, that the enable status of the audio capability of the second electronic device is the first identifier and the invocation status of the audio capability of the second electronic device is the second identifier, the first electronic device transfers the call to the second electronic device through the first control channel for answering.

The first identifier indicates that the enable status of the audio capability of the second electronic device is not enabled, and the second identifier indicates that the invocation status of the audio capability of the second electronic device is not invoked. Before the first electronic device transfers the call to the second electronic device for answering, the device identifier of the second electronic device is registered in the first electronic device, the enable status of the audio capability of the second electronic device is simultaneously marked as the first identifier, and the invocation status of the audio capability of the second electronic device is marked as the second identifier.

Before transferring the call to the second electronic device, when determining that the enable status of the audio capability of the second electronic device is the first identifier and the invocation status is the second identifier, the first electronic device transfers the call to the second electronic device.

Similarly, before the call is transferred to the third electronic device for answering, the first electronic device registers a device identifier of the third electronic device. The first electronic device marks an enable status of an audio capability of the third electronic device as a third identifier. The first electronic device marks an invocation status of the audio capability of the third electronic device as a fourth identifier. When determining, based on the device identifier of the second electronic device, that the enable status of the audio capability of the third electronic device is the third identifier and the invocation status of the audio capability of the third electronic device is the fourth identifier, the first electronic device transfers the call to the second electronic device through the first control channel for answering.

The third identifier may be the same identifier as the first identifier, indicating that the enable status of the audio capability of the third electronic device is not enabled. The fourth identifier may be the same identifier as the second identifier, indicating that the invocation status of the audio capability of the third electronic device is not invoked. Before the first electronic device transfers the call to the third electronic device for answering, the device identifier of the third electronic device is registered in the first electronic device, the enable status of the audio capability of the third electronic device is simultaneously marked as the third identifier, and the invocation status of the audio capability of the third electronic device is marked as the fourth identifier.

Before transferring the call to the third electronic device, when determining that the enable status of the audio capability of the third electronic device is the third identifier and the invocation status is the fourth identifier, the first electronic device transfers the call to the third electronic device.

In this embodiment, the first electronic device includes a collaboration module and a virtual audio module. Before the call is transferred to the second electronic device for answering, the collaboration module registers a first communication interface in the virtual audio module. After the call is transferred to the second electronic device for answering, the first electronic device transmits audio data in the call between the collaboration module and the virtual audio module through the first communication interface. The audio data in the call includes uplink audio data and downlink audio data.

Optionally, before the call is transferred to the third electronic device for answering, the collaboration module registers a second communication interface in the virtual audio module. After the call is transferred to the third electronic device for answering, the first electronic device transmits the audio data in the call between the collaboration module and the virtual audio module through the second communication interface.

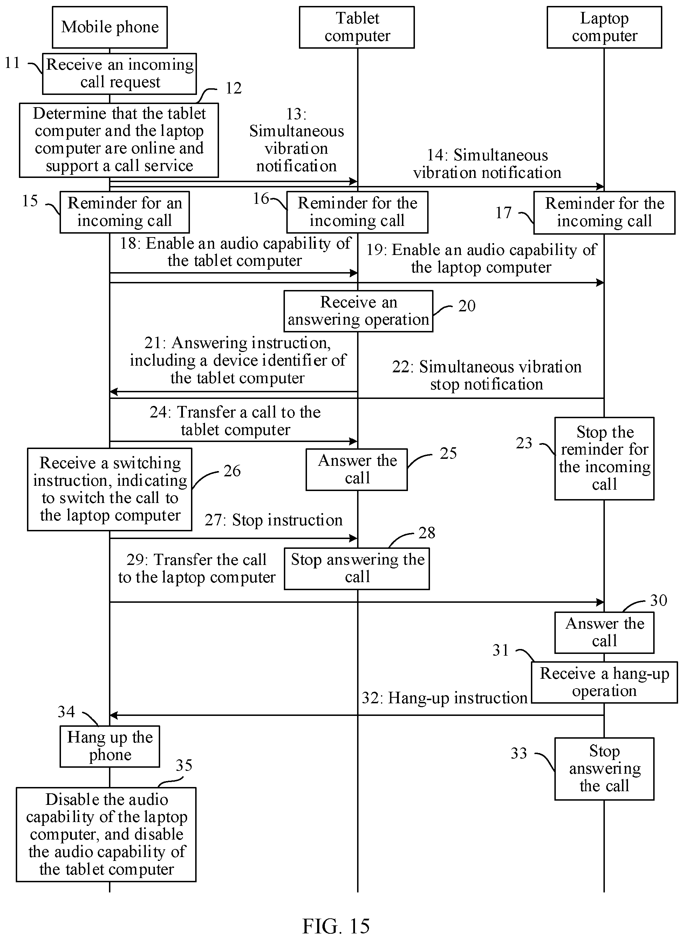

FIG. 15 is a schematic diagram of a call transfer process in the scenarios shown in FIG. 3 to FIG. 7.

Referring back to FIG. 1 and FIG. 3, at a current moment, the mobile phone 1, the tablet computer 2, and the laptop computer 3 are all online. The mobile phone 1 is the first electronic device, the tablet computer 2 is the second electronic device, and the laptop computer 3 is the third electronic device. After receiving an incoming call request, the mobile phone 1 may determine that the tablet computer 2 and the laptop computer 3 are secondary devices, and enable the audio capability of the tablet computer 2 and enable the audio capability of the laptop computer 3. After the audio capabilities of the tablet computer 2 and the laptop computer 3 are enabled, the call may be transferred among the mobile phone 1, the tablet computer 2, and the laptop computer 3. A transfer process of the call is as follows:
Step 11: The mobile phone 1 receives an incoming call request.

Step 12: The mobile phone 1 determines that the tablet computer 2 and the laptop computer 3 are online and support a call service.

Step 13: The mobile phone 1 sends a simultaneous vibration notification to the tablet computer 2.

Step 14: The mobile phone 1 sends a simultaneous vibration notification to the laptop computer 3.

Step 15: The mobile phone 1 provides a reminder for an incoming call.

Step 16: The tablet computer 2 provides a reminder for the incoming call.

Step 17: The laptop computer 3 provides a reminder for the incoming call.

Referring back to FIG. 3, after receiving the incoming call request, the mobile phone 1 provides the reminder for the incoming call in a manner of displaying an incoming call notification interface 14. When the tablet computer 2 and the laptop computer 3 are online, the mobile phone 1 may determine that the tablet computer 2 and the laptop computer 3 are secondary devices and the tablet computer 2 and the laptop computer 3 support a call service. After determining that the tablet computer 2 and the laptop computer 3 are secondary devices, the mobile phone 1 sends the simultaneous vibration notification to the tablet computer 2. After receiving the simultaneous vibration notification, the tablet computer 2 provides the reminder for the incoming call in a manner of displaying the floating window 21. Similarly, the mobile phone 1 sends the simultaneous vibration notification to the laptop computer 3. After receiving the simultaneous vibration notification, the laptop computer 3 provides the reminder for the incoming call in a manner of displaying the floating window 31. Manners in which the tablet computer 2 and the laptop computer 3 provide the reminder for the incoming call may include, but are not limited to, providing the reminder for the incoming call by displaying a floating window.

Step 13, step 14, and step 15 may be performed simultaneously or step by step. A sequence among step 13, step 14, and step 15 may be set as required, which is not limited in this embodiment.

Step 18: The mobile phone 1 enables an audio capability of the tablet computer 2.

Step 19: The mobile phone 1 enables the audio capability of the laptop computer 3.

The mobile phone 1 may enable the audio capability of the tablet computer 2 before or after displaying the incoming call notification interface 14, to make the audio capability of the tablet computer 2 reach a usable state, and enable the audio capability of the laptop computer 3, to make the audio capability of the laptop computer 3 reach a usable state.

Step 20: The tablet computer 2 receives an answering operation.

Referring to FIG. 3, the answering operation is the tap operation of tapping the answering control 23. After receiving the tap operation, the tablet computer 2 sends an answering instruction to the mobile phone 1 in response to the tap operation. The answering operation may include, but is not limited to, the operation of tapping an answering control in the foregoing example.

Step 21: After receiving the answering operation, the tablet computer 2 sends the answering instruction to the mobile phone 1, where the answering instruction includes the device identifier of the tablet computer 2.

Step 22: After receiving the answering instruction sent by the tablet computer 2, the mobile phone 1 sends the simultaneous vibration stop notification to the laptop computer 3.

Step 23: The laptop computer 3 stops the reminder for the incoming call when receiving the simultaneous vibration stop notification.

Step 24: After receiving the answering instruction sent by the tablet computer 2, the mobile phone 1 connects the call and transfers the call to the tablet computer 2.

Step 25: The tablet computer 2 answers the call.

Referring to FIG. 4, the answering instruction sent by the tablet computer 2 includes the device identifier of the tablet computer 2. The mobile phone 1 connects the call after receiving the answering instruction, transfers the call to the tablet computer 2 based on the device identifier in the answering instruction, and sends the simultaneous vibration stop notification to the laptop computer 3, to enable the laptop computer 3 to close the floating window 31 and stop the reminder for the incoming call. In this case, the mobile phone 1 displays the call interface 14, the tablet computer 2 displays the call interface 24, and the floating window 31 displayed by the laptop computer 3 is closed. After the call is streamed to the tablet computer 2, the tablet computer 2 plays the downlink audio data, acquires the uplink audio data, and sends the uplink audio data to the mobile phone 1. The user answers the phone through the tablet computer 2.

Step 22 may be performed before or after step 24. This is not limited in this embodiment.

Step 26: The mobile phone 1 receives a switching instruction, where the switching instruction indicates to switch the call to the laptop computer 3.

Referring to FIG. 5, the switching instruction is a switching instruction entered by the user by tapping the device icon 181, and the device icon 181 is bound to the device identifier of the laptop computer 3. The mobile phone 1 determines, in response to the tap operation on the device icon 81 by the user, the device identifier of the laptop computer 3 bound to the device icon 181.

Referring to FIG. 6, the switching instruction is a switching instruction sent by the tablet computer 2. When receiving a switching operation of tapping the device icon 271 by the user, the tablet computer 2 sends the switching instruction to the mobile phone 1. The switching instruction includes the device identifier of the laptop computer 3.

Step 27: After receiving the switching instruction, the mobile phone 1 sends a stop instruction to the tablet computer 2.

Step 28: After receiving the stop instruction, the tablet computer 2 stops answering the call.

Step 29: After receiving the switching instruction, the mobile phone 1 transfers the call to the laptop computer 3 for answering.

Step 30: The laptop computer 3 starts to answer the call.

Referring to FIG. 7, after receiving the switching instruction and determining the device identifier of the laptop computer 3 corresponding to the switching instruction, the mobile phone 1 sends the stop instruction to the tablet computer 2. After receiving the stop instruction, the tablet computer 2 closes the call interface 24, and stops answering the call. In addition, the mobile phone 1 transfers the call to the laptop computer 3. The laptop computer 3 displays the call interface 34, answers the call, plays the downlink audio data in the call sent by the mobile phone 1, acquires uplink audio data in the call, and sends the uplink audio data to the mobile phone 1. The user answers the phone through the laptop computer 3.

Step 31: The laptop computer 3 receives a hang-up operation.

Referring to FIG. 7, the hang-up operation is, for example, a tap operation of tapping the hang-up control 35. When receiving the tap operation on the hang-up control 35, the laptop computer 3 sends a hang-up instruction to the mobile phone 1 in response to the tap operation. The hang-up operation may include, but is not limited to, the operation of tapping the hang-up control in the foregoing example.

Step 32: The laptop computer 3 sends a hang-up instruction to the mobile phone 1.

Step 33: After receiving the hang-up operation, the laptop computer 3 stops answering the call.

Referring to FIG. 7, after receiving the hang-up operation, the laptop computer 3 closes the call interface 34, stops playing the downlink audio data, and stops acquiring the uplink audio data.

Step 34: The mobile phone 1 hangs up the phone after receiving the hang-up instruction.

Step 35: After receiving the hang-up instruction, the mobile phone 1 disables the audio capability of the tablet computer 2 and disables the audio capability of the laptop computer 3.

After receiving the hang-up instruction, the mobile phone 1 may stop and hang up the phone and close the call interface 14. In addition, the mobile phone 1 may disable the audio capability of the tablet computer 2 and disable the audio capability of the laptop computer 3.

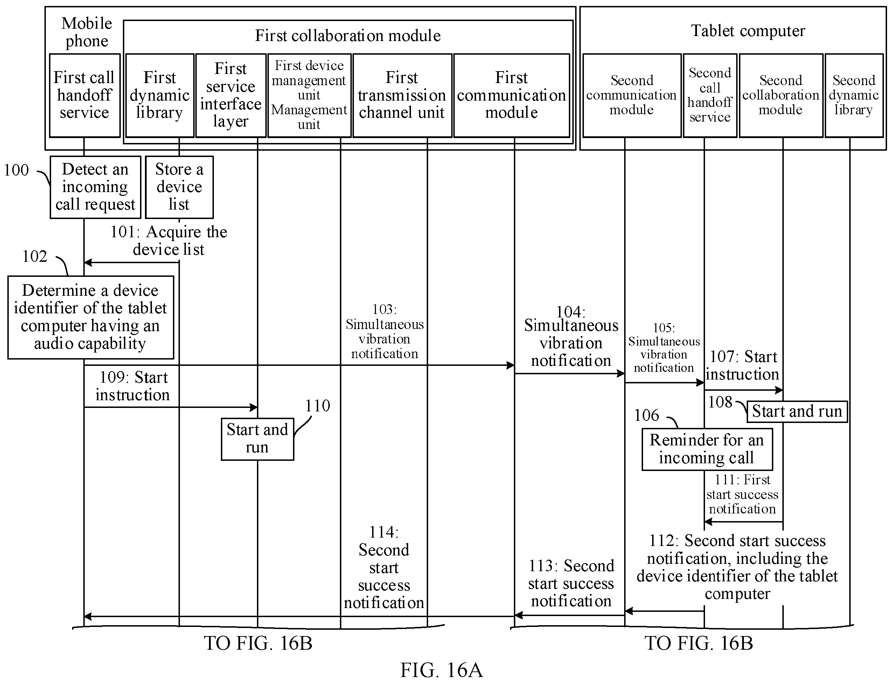

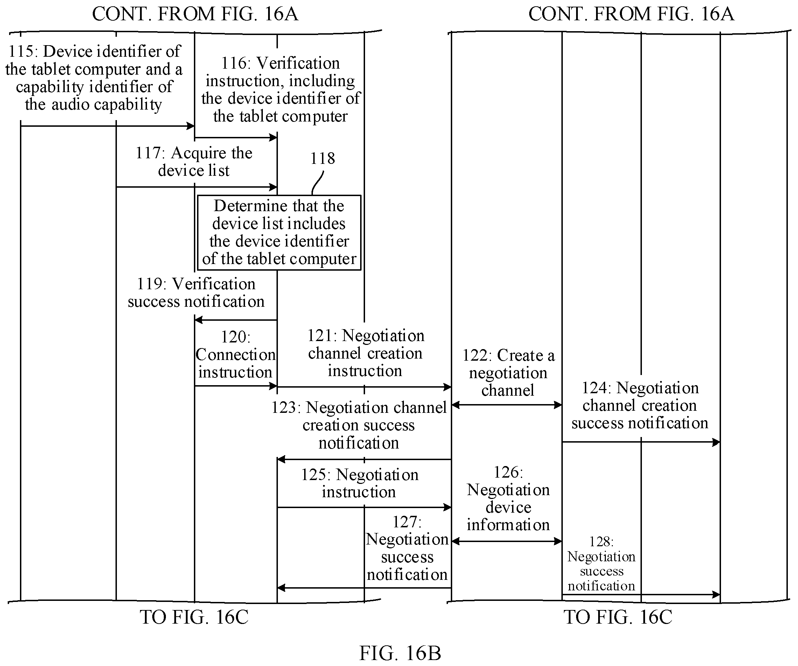

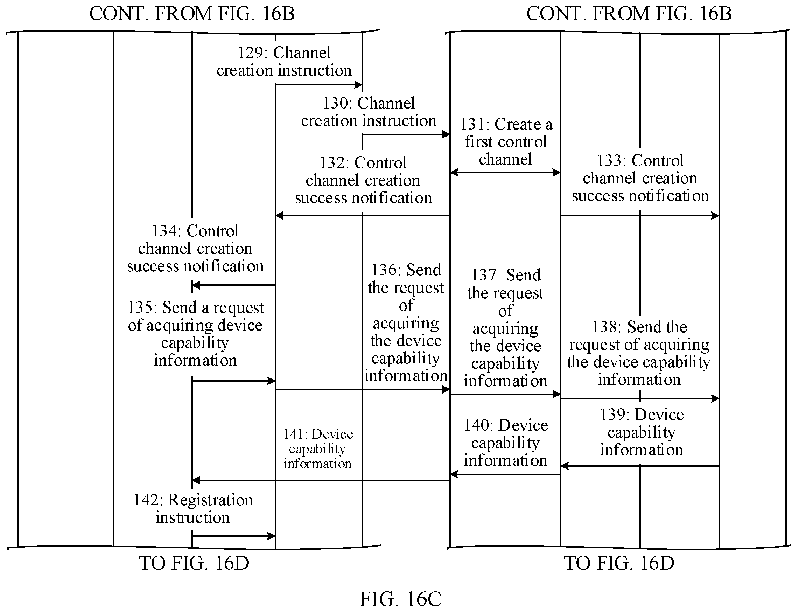

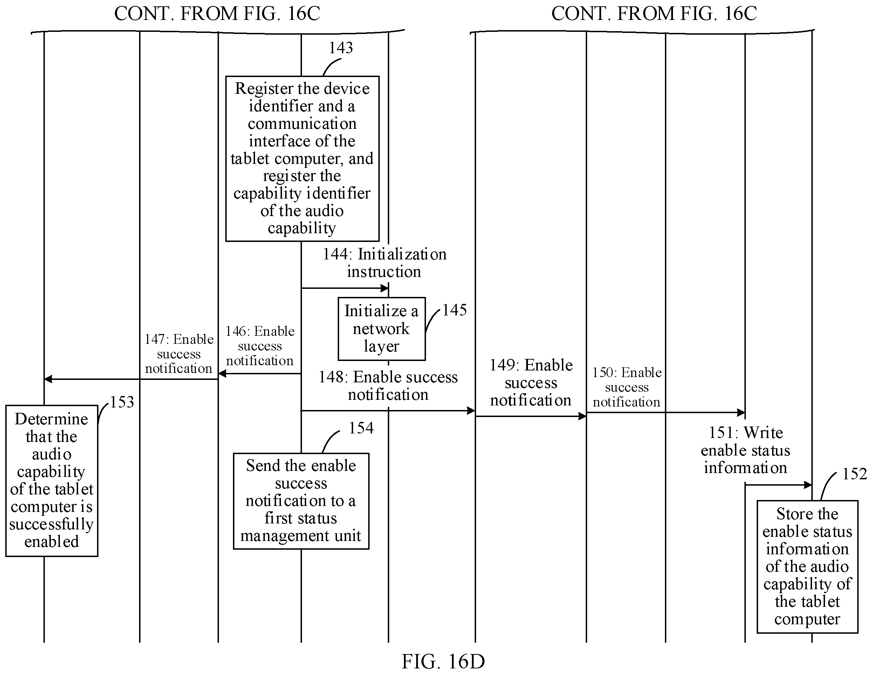

For ease of understanding the steps in the procedure shown in FIG. 15, the following describes in detail a transfer process of a call in the scenarios shown in FIG. 3 to FIG. 7 with reference to FIG. 16A, FIG. 16B, FIG. 16C, FIG. 16D, FIG. 20, FIG. 22A, FIG. 22B, and FIG. 22C. FIG. 16A, FIG. 16B, FIG. 16C, and FIG. 16D are a schematic flowchart of an enable process of an audio capability in the scenarios shown in FIG. 3 to FIG. 7.

Referring back to FIG. 11 and FIG. 12, for ease of distinction, in FIG. 16A, FIG. 16B, FIG. 16C, and FIG. 16D, "first" and "second" are used to identify same functional modules in the mobile phone 1 and the tablet computer 2 respectively. "First" indicates that the functional module is a functional module in the mobile phone 1. For example, a first collaboration module is a collaboration module in the mobile phone 1. "Second" indicates that the functional module is a functional module in the tablet computer 2. For example, a second call handoff service is a call handoff service in the tablet computer 2.

In addition, in FIG. 16A, FIG. 16B, FIG. 16C, and FIG. 16D, a second collaboration module represents functional modules included in the collaboration module of the tablet computer 2. For specific implementation of the functional modules in the tablet computer 2 in an enabling process, refer to the same functional modules in the mobile phone 1. It may be understood that the steps shown in FIG. 16A, FIG. 16B, FIG. 16C, and FIG. 16D are schematics of interaction between some functional modules in FIG. 11 and FIG. 12 in the enabling process, and other functional modules also participate in the enabling process, and are not shown in FIG. 16A, FIG. 16B, FIG. 16C, and FIG. 16D in this embodiment.

Referring back to FIG. 1 and FIG. 3, at a current moment, the mobile phone 1, the tablet computer 2, and the laptop computer 3 are all online. After receiving an incoming call request, the mobile phone 1 may determine that the tablet computer 2 and the laptop computer 3 are secondary devices, and enable the audio capability of the tablet computer 2 and enable the audio capability of the laptop computer 3. The mobile phone 1 is the first electronic device, the tablet computer 2 is the second electronic device, and the laptop computer 3 is the third electronic device. A specific enabling process is as follows:
Step 100: A first call handoff service detects an incoming call request.

For example, the first call handoff service accesses a call application in the mobile phone 1, and may monitor the call application. After the call application receives the incoming call request, the first call handoff service may detect the incoming call request.

Referring to FIG. 15, step 100 corresponds to step 11. After detecting the incoming call request, the mobile phone 1 performs step 12 to determine the device identifier of the tablet computer 2 and the device identifier of the laptop computer 3 that are in an online state. Step 12 includes step 101 and step 102 shown in FIG. 16A, FIG. 16B, FIG. 16C, and FIG. 16D.

Step 101: After detecting the incoming call request, the first call handoff service acquires a device list from a first dynamic library.

For example, the device list stores device information of all devices in an online state in the trust circle. When the tablet computer 2 and the laptop computer 3 are in an online state, the tablet computer 2 and the laptop computer 3 push respective device information to the mobile phone 1, and the mobile phone 1 may store the device information of the tablet computer 2 in the device list in the first dynamic library and store the device information of the laptop computer 3 in the device list in the first dynamic library. For example, the device information of the tablet computer 2 includes the device identifier and a device type of the tablet computer 2. The device type of the tablet computer 2 is, for example, a multimedia device. The device information of the laptop computer 3 includes the device identifier and a device type of the laptop computer 3. The device type of the laptop computer 3 is, for example, an office device.

It may be understood that the mobile phone 1 may update the device information in the device list in real time. For example, the tablet computer 2 may send an offline notification to the mobile phone 1 when being shut down, and the mobile phone 1 deletes the device information of the tablet computer 2 stored in the device list based on the offline notification. Alternatively, when failing to detect that the tablet computer 2 is online within a preset duration, the mobile phone 1 may delete the device information of the tablet computer 2 stored in the device list.

Step 102: After acquiring the device list, the first call handoff service determines the device identifier of the tablet computer 2 having the audio capability from the device list.

For example, a default device type corresponding to the call service includes an office device and a multimedia device. After detecting the incoming call request, the first call handoff service may acquire the device list including the device information of the tablet computer 2 and the device information of the laptop computer 3 from the first dynamic library. Next, because the device type included in the device information of the tablet computer 2 is the same as the default device type (a multimedia device), the device information of the tablet computer 2 may be determined from the device list, and the device identifier of the tablet computer 2 may be determined from the device information of the tablet computer 2, so that it may be determined that the tablet computer 2 is a secondary device and the tablet computer 2 has the audio capability supporting the call service. Similarly, the device type included in the device information of the laptop computer 3 is the same as the default device type (an office device), the device identifier of the laptop computer 3 may be determined, and it is determined that the laptop computer 3 has the audio capability supporting the call service.

It may be understood that the device list may further include device information of other devices in an online state, for example, device information of the smart watch 4 and the stereo 5 shown in FIG. 1. Because device types included in the device information of the smart watch 4 and the stereo 5 are inconsistent with default device types, none of the determined secondary devices includes the smart watch 4 and the stereo 5.

After determining that the tablet computer 2 and the laptop computer 3 are secondary devices, the mobile phone 1 sends the simultaneous vibration notification to the tablet computer 2 and the laptop computer 3. A process of sending the simultaneous vibration notification is exemplarily described below by using the tablet computer 2 as an example. A process for the laptop computer 3 is similar to the process for the tablet computer 2.

Step 103: The first call handoff service sends the simultaneous vibration notification to a first communication module.

Step 104: After receiving the simultaneous vibration notification, the first communication module sends the simultaneous vibration notification to a second communication module.

For example, the device information pushed by the tablet computer 2 to the mobile phone 1 may further include a device address of the tablet computer 2. The device address is, for example, an internet protocol (internet protocol, IP) address of the tablet computer 2 in a local area network. The simultaneous vibration notification may include the device address of the tablet computer 2. The first communication module may send the simultaneous vibration notification to the second communication module based on the device address of the tablet computer 2. A specific method for sending the simultaneous vibration notification to the tablet computer 2 by the mobile phone 1 may be specifically set as required, which is not limited in this embodiment.

Step 105: After receiving the simultaneous vibration notification, the second communication module forwards the simultaneous vibration notification to the second call handoff service.

Step 106: After receiving the simultaneous vibration notification, the second call handoff service controls the tablet computer 2 to provide the reminder for the incoming call.

Step 13 in FIG. 15 includes step 103 and step 104, and step 16 corresponds to step 106. Referring back to FIG. 3, after receiving the simultaneous vibration notification, the second call handoff service may control a display of the tablet computer 2 to display the floating window 21, and provide the reminder for the incoming call simultaneously with the mobile phone 1. Similarly, after receiving the simultaneous vibration notification, the laptop computer 3 may display the floating window 31, and provide the reminder for the incoming call simultaneously with the mobile phone 1.

Step 107: After receiving the simultaneous vibration notification, the second call handoff service sends a start instruction to the second collaboration module.

Step 108: The second collaboration module starts to run after receiving the start instruction.

Step 109: After determining the device identifier of the tablet computer 2, the first call handoff service may send the start instruction to a first service interface layer, where the sending the start instruction to the first service interface layer is sending the start instruction to the first collaboration module.

Step 110: The first collaboration module starts to run after receiving the start instruction.

It may be understood that, after the first call handoff service acquires the device list, if it is determined that the device list does not include a device identifier of a secondary device, 109 may not be performed, the start instruction is not sent to the first collaboration module, and the first collaboration module is not started.

It may be understood that step 103 may be performed before step 109, or may be performed after step 109, or may be performed simultaneously with step 109. Similarly, step 107 may be performed before step 106, or may be performed after step 106, or may be performed simultaneously with step 106.

Step 111: After starting to run, the second collaboration module sends a first start success notification to the second call handoff service, to notify the second call handoff service that the second collaboration module has started and a device capability can be shared.

After failing to start, the second collaboration module may send a start failure notification to the second call handoff service, the second call handoff service sends the start failure notification including the device identifier of the tablet computer 2 to the second communication module, and the second communication module forwards the start failure notification to the first communication module.

Correspondingly, after receiving the start failure notification, the first communication module sends the start failure notification to the first call handoff service. After receiving the start failure notification, the first call handoff service may determine, based on the device identifier in the start failure notification, that the tablet computer 2 cannot provide the audio capability, step 115 and subsequent other steps are not performed, and the audio capability of the tablet computer 2 is not enabled. Similarly, after the collaboration module in the laptop computer 3 fails to be started, the mobile phone 1 does not enable the audio capability of the laptop computer 3.

Step 112: After receiving the first start success notification, the second call handoff service sends a second start success notification to the second communication module.

For example, the second start success notification includes the device identifier of the tablet computer 2. After receiving the first start success notification, the second call handoff service determines that the second collaboration module starts to run, the tablet computer 2 may provide an audio capability to the mobile phone 1, and the second call handoff service may send the second start success notification including the device identifier of the tablet computer 2 to the second communication module.

Step 113: After receiving the second start success notification, the second communication module sends the second start success notification to the first communication module.

Step 114: After receiving the second start success notification, the first communication module sends the second start success notification to the first call handoff service.

For example, the second start success notification includes the device identifier of the tablet computer 2. After receiving the second start success notification, the first call handoff service acquires the device identifier of the tablet computer 2 from the second start success notification, and may determine, based on the device identifier of the tablet computer 2, that the second collaboration module in the tablet computer 2 is started. In this case, the first call handoff service indicates the first collaboration module to enable the audio capability of the tablet computer 2.

It should be noted that step 107 to step 114 are not shown in FIG. 15. A process of enabling the audio capability of the tablet computer 2 in step 18 includes step 115 to step 154 shown in FIG. 16A, FIG. 16B, FIG. 16C, and FIG. 16D. Similarly, a process of enabling the audio capability of the laptop computer 3 in step 19 includes step 115 to step 154 shown in FIG. 16A, FIG. 16B, FIG. 16C, and FIG. 16D. The enabling process of the audio capability of the tablet computer 2 is used as an example for description below. The enabling process of the audio capability of the laptop computer 3 is similar. Details are not described herein again in this embodiment.

Step 115: The first call handoff service inputs the device identifier of the tablet computer 2 into the first collaboration module, and inputs a capability identifier of the audio capability, to enable the first collaboration module to enable the audio capability of the tablet computer 2.

For example, the first call handoff service acquires the device identifier of the tablet computer 2 from the second start success notification, acquires the capability identifier of the audio capability corresponding to the call service, then invokes an enable interface provided by the first service interface layer to input the device identifier of the tablet computer 2 and the capability identifier of the audio capability into the first service interface layer, to indicate the first collaboration module to enable the audio capability of the tablet computer 2.

It may be understood that after receiving the second success notification including the device identifier of the tablet computer 2, the first call handoff service performs step 115 and subsequent steps to enable the audio capability of the tablet computer 2. Similarly, after receiving the second success notification including the device identifier of the laptop computer 3, the first call handoff service performs step 115 and subsequent steps, to enable the audio capability of the laptop computer 3.

Step 116: After receiving the device identifier of the tablet computer 2 and the capability identifier of the audio capability, the first service interface layer sends a verification instruction to a first device management unit, where the verification instruction may include the device identifier of the tablet computer 2.

Step 117: After receiving the verification instruction, the first device management unit acquires the device list from the first dynamic library.

After receiving the verification instruction, the first device management unit acquires the device list from the first dynamic library. The device list stores device information of devices in an online state in the trust circle. The first device management unit determines that the tablet computer 2 is online when determining that the device information of the tablet computer 2 is stored in the device list, and determines that the tablet computer 2 is not online when determining that the device information of the tablet computer 2 is not stored in the device list.

Step 118: The first device management unit determines that the device list includes the device identifier of the tablet computer 2.

Step 119: After determining that the device list includes the device identifier of the tablet computer 2, the first device management unit sends a verification success notification to the first service interface layer to notify the first service interface layer that the tablet computer 2 is online.

When determining that the tablet computer 2 is not online, the first device management unit may send a verification failure notification to the first service interface layer. After receiving the verification failure notification, the first service interface layer does not perform subsequent steps, and ends the enabling of the audio capability of the tablet computer 2. In addition, the first service interface layer sends a notification to the first call handoff service, to notify the first call handoff service that the enabling of the audio capability of the tablet computer 2 fails.

Step 120: The first service interface layer sends a connection instruction to the first device management unit after receiving the verification success notification.

After receiving the verification success notification, the first service interface layer determines that the tablet computer 2 is online, and may send the connection instruction to the first device management unit to indicate the first device management unit to establish the first control channel between the mobile phone 1 and the tablet computer 2.

Step 121: After receiving the connection instruction, the first device management unit sends a negotiation channel creation instruction to the first communication module.

Step 122: After receiving the negotiation channel creation instruction, the first communication module creates a negotiation channel with the second communication module.

The negotiation channel is configured to negotiate device information such as device identifiers and device addresses between devices, to establish a control channel between the devices through the negotiated device information. The negotiated device information includes, but is not limited to, information such as the device identifiers and the device addresses. The first collaboration module and the second collaboration module may exchange device information such as the device identifiers and the device addresses of the mobile phone 1 and the tablet computer 2 through a negotiation channel, to establish a control channel between the mobile phone 1 and the tablet computer 2 through the device information obtained through the exchange.

Step 123: After successfully creating the negotiation channel, the first communication module sends a negotiation channel creation success notification to the first device management module.

Step 124: Similarly, after the negotiation channel is successfully created, the second communication module sends the negotiation channel creation success notification to the second collaboration module.

When the negotiation channel fails to be created, the first communication module may send a negotiation channel creation failure notification to the first device management unit, and the first device management unit sends the negotiation channel creation failure notification to the first service interface layer. After receiving a negotiation failure notification, the first service interface layer ends the enabling of the audio capability of the tablet computer 2. In addition, the first service interface layer sends a notification to the first call handoff service, to notify the first call handoff service that the enabling of the audio capability of the tablet computer 2 fails.

Step 125: After receiving the negotiation channel creation success notification, the first device management unit sends a negotiation instruction to the first communication module.

Step 126: After receiving the negotiation instruction, the first communication module negotiates device information with the second communication module.

For example, the first communication module may send a negotiation request to the second communication module. After receiving the negotiation request, the second communication module sends the device information such as the device address and the device identifier of the tablet computer 2 to the first communication module. In addition, the first communication module may actively send device information such as a device address and a device identifier of the mobile phone 1 to the second communication module.

Step 127: After successfully negotiating the device information, the first communication module sends a negotiation success notification to the first device management unit.

For example, the negotiation success notification sent by the first communication module to the first device management unit may include the device information of the tablet computer 2 obtained through negotiation. After receiving the negotiation success notification, the first device management unit may indicate, based on the device information in the negotiation success notification, the first communication module to establish the control channel between the mobile phone 1 and the tablet computer 2.

Step 128: Similarly, after the device information is successfully negotiated, the second communication module sends the negotiation success notification to the second collaboration module. The negotiation success notification sent by the second communication module to the second collaboration module may include the device information of the mobile phone 1 obtained through negotiation.

Step 129: After receiving the negotiation success notification, the first device management unit sends a channel creation instruction to a first transmission channel unit.

Referring to step 127, after acquiring the device information of the tablet computer 2 obtained through negotiation, the first device management unit may send a channel creation instruction including the device information of the tablet computer 2 to the first transmission channel unit, to indicate the first transmission channel unit to establish the first control channel between the mobile phone 1 and the tablet computer 2.

Step 130: After receiving the channel creation instruction, the first transmission channel unit forwards the channel creation instruction to the first communication module.

Step 131: After receiving the channel creation instruction, the first communication module creates the first control channel between the mobile phone 1 and the tablet computer 2.

For example, after receiving the channel creation instruction, the first communication module may interact with the second communication module based on the device information of the tablet computer 2 included in the channel creation instruction, to create the first control channel between the mobile phone 1 and the tablet computer 2. A process of specifically creating the first control channel may be set as required, which is not limited in this embodiment.

Step 132: After successfully creating the first control channel, the first communication module sends a control channel creation success notification to the first device management unit.

Step 133: Similarly, after the first control channel is successfully created and notified, the second communication module sends the control channel creation success notification to the second collaboration module.

Step 134: After receiving the control channel creation success notification, the first device management unit forwards the control channel creation success notification to the first service interface layer.

When the control channel fails to be created, the first communication module may send a control channel creation failure notification to the first transmission channel unit, the first transmission channel unit sends the control channel creation failure notification to the first service interface layer, and the first service interface layer ends the enabling of the audio capability of the tablet computer 2. In addition, the first service interface layer sends a notification to the first call handoff service, to notify the first call handoff service that the enabling of the audio capability of the tablet computer 2 fails.

Step 135: After receiving the control channel creation success notification, the first service interface layer sends a request for acquiring device capability information to the first device management unit.

The request for acquiring the device capability information may include the device identifier of the tablet computer 2, to indicate to acquire device capability information of the tablet computer 2.

Step 136: After receiving the request for acquiring the device capability information, the first device management unit forwards the request for acquiring the device capability information to the first communication module.

Step 137: After receiving the request for acquiring the device capability information, the first communication module sends the request for acquiring the device capability information to the second communication module.

Referring to step 135, the request for acquiring the device capability information includes the device identifier of the tablet computer 2. After receiving the request for acquiring the device capability information, the first communication module may determine, based on the device identifier of the tablet computer 2, that the request needs to be sent to the tablet computer 2, and send the request for acquiring the device capability information to the tablet computer 2 through the pre-established first control channel between the mobile phone 1 and the tablet computer 2.

Step 138: After receiving the request for acquiring the device capability information, the second communication module sends the request for acquiring the device capability information to the second collaboration module.

Step 139: After receiving the request for acquiring the device capability information, the second collaboration module may send the device capability information of the tablet computer 2 to the second communication module.

For example, the tablet computer 2 may store the device information of the tablet computer 2 in a second dynamic library. The device information includes information such as the device identifier and the device address of the tablet computer 2, and may further include a service identifier of each device capability that the tablet computer 2 has and enable status information of each device capability. The enable status information indicates that an enable status of the device capability is enabled or not enabled.

After receiving the request for acquiring the device capability information, the second collaboration module may acquire the device information of the tablet computer 2 from the second dynamic library, determine the service identifier of each device capability that the tablet computer 2 has from the device information of the tablet computer 2, and then send the device capability information of the tablet computer 2 to the second communication module. The sent device capability information includes the service identifier of each device capability that the tablet computer 2 has and the enable status information.

Step 140: After receiving the device capability information, the second communication module forwards the device capability information to the first communication module.

Step 141: After receiving the device capability information sent by the second communication module, the first communication module forwards the device capability information to the first service interface layer.

Step 142: After receiving the device capability information, if determining that the device capability information includes the service identifier of the audio capability, the first service interface layer sends a registration instruction to the first device management unit.

A default device capability of the call service is the audio capability. When determining that the device capability information includes the service identifier of the audio capability, the first service interface layer determines that the tablet computer 2 has the audio capability, sends the registration instruction to the first device management unit, and continues to enable the audio capability of the tablet computer 2. Conversely, if it is determined that the device capability information does not include the service identifier of the audio capability, it is determined that the tablet computer 2 does not have the audio capability, step 142 is not performed, and the enabling of the audio capability of the tablet computer 2 is ended.

In an implementation, after receiving the device capability information of the tablet computer 2, the mobile phone 1 may send the registration instruction to the first device management unit when the device capability information includes the service identifier of the audio capability and the enable status information of the audio capability corresponding to the service identifier of the audio capability indicates that the audio capability of the tablet computer 2 is not enabled. Conversely, when the enable status information indicates that the audio capability of the tablet computer 2 is enabled, the registration instruction is not sent to the first device management unit, and the enabling of the audio capability of the tablet computer 2 is ended.

Optionally, in the process of enabling the audio capability of the tablet computer 2, the mobile phone 1 may also acquire the enable status information of the audio capability of the tablet computer 2 from the tablet computer 2 before step 115.

For example, after receiving the second start success notification, the first call handoff service may send an acquisition request including the device identifier of the tablet computer 2 and the service identifier of the audio capability to the first communication module. The first communication module sends the request to the second communication module, and the second communication module forwards the request to the second call handoff service. After receiving the request, the second call handoff service acquires the enable status information of the audio capability from the device list based on the service identifier of the audio capability, and sends the enable status information of the audio capability to the first call handoff service through the second communication module and the first communication module. The first call handoff service performs step 115 and subsequent steps when the acquired enable status information indicates that the audio capability of the tablet computer 2 is not enabled. When the acquired enable status information indicates that the audio capability of the tablet computer 2 is enabled, step 115 and subsequent steps are not performed, and the audio capability of the tablet computer 2 is not enabled.

When the device capability of the secondary device is enabled, it indicates that the device capability of the secondary device may be currently occupied by another service. In this case, if the device capability of the secondary device is enabled again, the device capability is repeatedly enabled, which may cause a service error. The primary device enables the device capability of the secondary device when the device capability of the secondary device is not enabled, and skips enabling the device capability of the secondary device when the device capability of the secondary device is enabled, thereby avoiding repeatedly enabling the device capability of the secondary device.

Step 143: After receiving the registration instruction, the first device management unit registers the device identifier of the tablet computer 2 in the first device management unit, and correspondingly registers the capability identifier of the audio capability. In addition, the first device management unit may register the communication interface of the tablet computer 2 in the virtual audio module of the mobile phone 1. The communication interface is, for example, a callback function.

For example, the first device management unit may record the device identifier of the tablet computer 2 in the first device management unit, and correspondingly record the service identifier of the audio capability. The device identifier of the tablet computer 2 indicates that the tablet computer 2 can share the device capability with the mobile phone 1, and the service identifier of the audio capability indicates that the device capability shared by the tablet computer 2 with the mobile phone 1 is the audio capability.

In addition, the first device management unit may register the first communication interface of the tablet computer 2 in the virtual audio module of the mobile phone 1. After transferring the call to the tablet computer 2, when the mobile phone 1 receives the uplink audio data sent by the tablet computer 2, the first collaboration module may invoke the first communication interface of the tablet computer 2 to send the uplink audio data to the virtual audio module, and the virtual audio module sends the uplink audio data to the ADSP. In addition, the virtual audio module acquires downlink audio data sent by the peer device from the ADSP. The first collaboration module may invoke the first communication interface of the tablet computer 2 to acquire the downlink audio data from the virtual audio module, and then send the downlink audio data to the tablet computer 2 for playing.

Referring back to FIG. 11, the HAL of the mobile phone 1 includes an interface management module and an interface status management module. After the first device management unit registers the communication interface of the tablet computer 2 in the virtual audio module, the interface management module may record the first communication interface of the tablet computer 2, and the interface status management module marks an invocation status of the first communication interface of the tablet computer 2 as not invoked. The interface management module records that the first communication interface of the tablet computer 2 is configured for invocation by the first collaboration module, and the first collaboration module invokes the communication interface of the tablet computer 2 when the invocation status of the first communication interface of the tablet computer 2 is not invoked.

It may be understood that when the registration of any one of the device identifier, the service identifier, and the communication interface fails, the first device management unit may send a registration failure notification to the first service interface layer, and the first service interface layer ends the enabling the audio capability of the tablet computer 2. In addition, the first service interface layer sends a notification to the first call handoff service, to notify the first call handoff service that the enabling of the audio capability of the tablet computer 2 fails.

Step 144: After receiving an enable instruction, the first device management unit may send an initialization instruction to the first transmission channel unit.

Step 145: After receiving the initialization instruction, the first transmission channel unit initializes a network layer of the first collaboration module.

It should be noted that when enabling the audio capability of the tablet computer 2, the first device management unit may not send the initialization instruction to the first transmission channel unit and not initialize the network layer. Before switching the call service to the tablet computer 2, the first device management unit may send the initialization instruction to the first transmission channel unit, to initialize the network layer.

Step 146: After registering the device identifier of the tablet computer 2, the service identifier of the audio capability, and the communication interface of the tablet computer 2, the first device management unit may send an enable success notification to the first service interface layer.

As shown in FIG. 16A, FIG. 16B, FIG. 16C, and FIG. 16D, the enabling process of the audio capability of the tablet computer 2 includes step 115 to step 154. After the first control channel between the mobile phone 1 and the tablet computer 2 is established, the registration of the device identifier and the first communication interface of the tablet computer 2 is completed, and the registration of the service identifier of the audio capability is completed, the enabling of the audio capability of the tablet computer 2 is completed, and the mobile phone 1 may directly invoke the audio capability of the tablet computer 2.

Referring to step 132, after determining that the first control channel between the mobile phone 1 and the tablet computer 2 is successfully created, the first device management unit registers the device identifier and the first communication interface of the tablet computer 2, and registers the service identifier of the audio capability. Therefore, after registering the device identifier of the tablet computer 2 and the service identifier of the audio capability and registering the communication interface of the tablet computer 2, the first device management unit may determine that the audio capability of the tablet computer 2 is successfully enabled, and send the enable success notification to the first service interface layer.

Step 147: After receiving the enable success notification, the first service interface layer forwards the enable success notification to the first call handoff service.

Step 148: The first device management unit may send the enable success notification to the first communication module.

Step 149: After receiving the enable success notification, the first communication module forwards the enable success notification to the second communication module.

Step 150: After receiving the enable success notification, the second communication module forwards the enable success notification to the second call handoff service.

Step 151: After receiving the enable success notification, the second call handoff service writes the enable status information of the audio capability into the second dynamic library.

Step 152: The second dynamic library stores the enable status information of the audio capability of the tablet computer 2.

Referring to the description of step 139, after receiving the enable success notification, the second call handoff service may add the enable status information of the audio capability to the device information of the tablet computer 2 stored in the second dynamic library, to mark that the audio capability of the tablet computer 2 is enabled.

It may be understood that when the enable status information of the audio capability is stored in the second dynamic library, after receiving the enable success notification, the second call handoff service may update the enable status information of the audio capability stored in the second dynamic library, and update the enable status information of the audio capability to enabled.

Step 153: After receiving the enable success notification, the first call handoff service determines that the audio capability of the tablet computer 2 is successfully enabled.

For example, the enable success notification may include the device identifier of the tablet computer 2. After receiving the enable success notification, the first call handoff service determines that the audio capability of the tablet computer 2 is successfully enabled. As shown in FIG. 15, after determining that the audio capability of the tablet computer 2 is successfully enabled, if receiving an answering instruction sent by the tablet computer 2 in response to the tap operation on the answering control 23 by the user, the first call handoff service may transfer the call to the tablet computer 2. Conversely, if the enable success notification including the device identifier of the tablet computer 2 is not received, after the answering instruction is received, the call is not transferred to the tablet computer 2.

Step 154: After determining that the audio capability of the tablet computer 2 is successfully enabled, the first device management unit sends the enable success notification to a first status management unit (not shown in the figure).

As shown in FIG. 12, the first status management unit is a status management unit included in the first collaboration module of the mobile phone 1. The status management unit may record enable status information of a device capability of each device successfully enabled by the first collaboration module and invocation status information of the device capability.

For example, the enable success notification may include the device identifier of the tablet computer 2 and the service identifier of the audio capability. After receiving the enable success notification, the first status management unit records the device identifier of the tablet computer 2 based on the device identifier of the tablet computer 2 and the service identifier of the audio capability included in the enable success notification, and correspondingly records the enable status information of the audio capability of the tablet computer 2. The enable status information indicates that the audio capability of the tablet computer 2 is enabled, and records invocation status information of the audio capability of the tablet computer 2. The invocation status information indicates that the audio capability of the tablet computer 2 is not invoked.

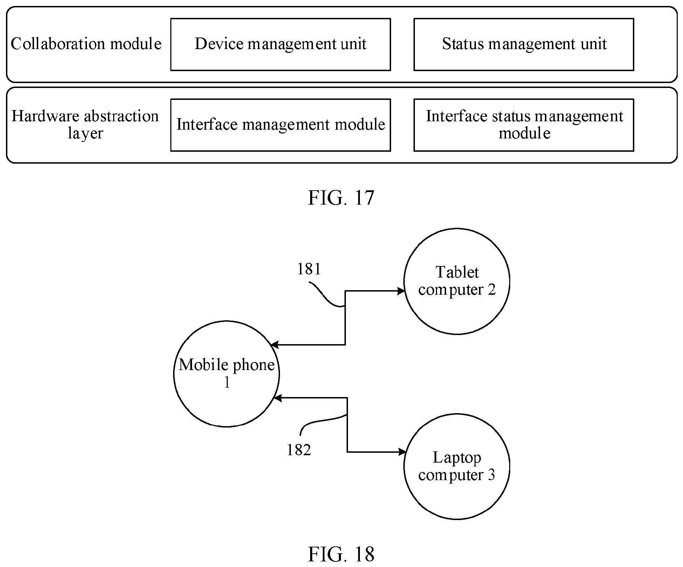

FIG. 17 is a schematic diagram of a partial system structure of an electronic device according to an embodiment of this application. The collaboration module may include a device management unit and a status management unit. The device management unit may record a device identifier and a service identifier of an enabled secondary device, and the status management unit may manage an enable status and an invocation status of a device capability.

In an implementation, the enable status information may include a first state and a second state. The first state indicates that the enable status of the device capability is not enabled, the first identifier and the third identifier are the enable status information of the first state, and second status indicates that the enable status of the device capability is enabled. For example, after the device identifier of the tablet computer 2 is registered and the service identifier of the audio capability is registered, the status management unit may set the enable status information of the audio capability to the first state or null. After completing the enabling of the audio capability of the tablet computer 2, the status management unit may update the enable status information of the audio capability of the tablet computer 2 to the second state to record that an enable status of the audio capability of the tablet computer 2 is enabled. A specific form of the enable status information may include, but is not limited to, the foregoing examples.

Similarly, the invocation status information may include a first state and a second state. The first state indicates that the invocation status of the device capability is not invoked, and the second identifier and the fourth identifier are invocation status information of the first state; and the second state indicates that the invocation status of the device capability is invoked, and a fifth identifier is invocation status information of the second state. For example, after the device identifier of the tablet computer 2 and the service identifier of the audio capability are registered, the status management unit may set the invocation status information of the audio capability to null. After completing the enabling of the audio capability of the tablet computer 2, the status management unit may update the invocation status information of the audio capability of the tablet computer 2 to the first state to record that an invocation status of the audio capability of the tablet computer 2 is not invoked. A specific form of the invocation status information may include, but is not limited to, the foregoing examples.

The HAL may include the interface management module and the interface status management module. The interface management module is configured to manage a communication interface, and the interface status management module is configured to manage an invocation status of the communication interface. For example, after the first device management unit registers the first communication interface of the tablet computer 2 in the virtual audio module, the interface management module may record the first communication interface of the tablet computer 2, and simultaneously the interface status management module may mark the invocation status of the first communication interface of the tablet computer 2 as not invoked.

The first call handoff service may first perform step 115 on the tablet computer 2 to complete the enabling of the audio capability of the tablet computer 2 through step 115 to step 154, may first perform step 115 on the laptop computer 3 to complete the enabling of the audio capability of the laptop computer 3 through step 115 to step 154, or may simultaneously perform step 115 on the tablet computer 2 and the laptop computer 3 to simultaneously enable the audio capability of the tablet computer 2 and the audio capability of the laptop computer 3.

It should be noted that the foregoing is only an exemplary example of the enabling process, and does not constitute a limitation on the enabling process. If other operations are required to make the device capability of the secondary device reach a usable state, the enabling process may be adjusted as required. The enabling process of the device capability is not limited in this embodiment.

In summary, after receiving an incoming call request, the mobile phone 1 may simultaneously enable the audio capabilities of the tablet computer 2 (the first electronic device) and the laptop computer 3 (the second electronic device). In the enabling process, the mobile phone 1 establishes the first control channel with the tablet computer 2 and establishes the second control channel with the laptop computer 3.

In addition, in the enabling process, the mobile phone 1 registers the device identifier of the tablet computer 2 in the collaboration module, correspondingly registers the capability identifier of the audio capability, registers the device identifier of the laptop computer 3 in the collaboration module, and correspondingly registers the capability identifier of the audio capability. In addition, a first communication interface of the tablet computer 2 and a second communication interface of the laptop computer 3 are registered in the virtual audio module.

After completing the enabling of the audio capability of the tablet computer 2, the mobile phone 1 marks the enable status of the audio capability of the tablet computer 2 as enabled in the status management unit of the mobile phone 1 and marks an enable status of the audio capability of the laptop computer 3 as enabled in the status management unit of the mobile phone 1.

FIG. 18 is a schematic diagram of a structure of a system according to an embodiment of this application. After enabling the audio capability of the tablet computer 2 and the audio capability of the laptop computer 3, the mobile phone 1 establishes a first control channel 181 with the tablet computer 2 and establishes a second control channel 182 with the laptop computer 3. In this case, the audio capability of the tablet computer 2 is in a usable state, and the audio capability of the laptop computer 3 is also in a usable state.

As shown in FIG. 4 to FIG. 7, in this case, after receiving the answering instruction sent by the tablet computer 2, the mobile phone 1 may transfer the call to the tablet computer 2 through the first control channel for answering. In a process of answering the call through the tablet computer 2, after a switching instruction sent by the laptop computer 3 is received, the call may be directly transferred from the tablet computer 2 to the laptop computer 3 through the second control channel for answering. It should be noted that, after the mobile phone 1 receives the incoming call request, if only the tablet computer 2 is online, the first call handoff service can determine only the device identifier of the tablet computer 2 from the device list. In this case, the first call handoff service may invoke the enable interface to input the device identifier of the tablet computer 2 and the capability identifier of the audio capability into the first collaboration module, to enable the collaboration module to enable the audio capability of the tablet computer 2.

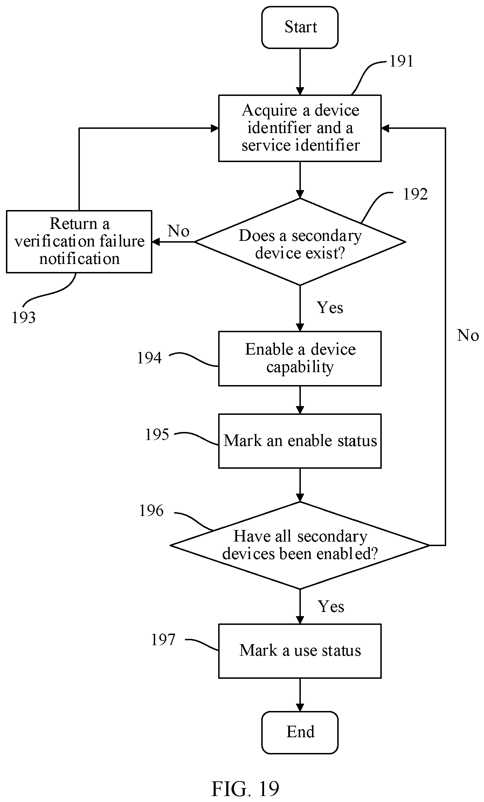

FIG. 19 is a schematic flowchart of enabling a device capability according to an embodiment of this application.

Step 191: When enabling the device capability of each secondary device, the primary device first acquires the device identifier of the secondary device and the service identifier of the device capability, and then performs step 192. Referring to step 101 and step 102 in FIG. 16A, FIG. 16B, FIG. 16C, and FIG. 16D, the first call handoff service first determines the tablet computer 2 and the laptop computer 3 that are in an online state, acquires the device identifier of the tablet computer 2 and the device identifier of the laptop computer 3, and acquires the service identifier of the audio capability.

Step 192: After the device identifier of the secondary device and the service identifier of the device capability are acquired, verify the secondary device to determine whether the secondary device is online, and perform step 194 when the secondary device is online, or perform step 193 when the secondary device is not online. For an understanding of step 192, refer to step 116 to step 119 in FIG. 16A, FIG. 16B, FIG. 16C, and FIG. 16D. Details are not described herein again in this embodiment.

Step 193: The primary device determines that the verification fails when determining that the secondary device is not online, returns a verification failure notification, and then performs step 191 to acquire a device identifier and a service identifier of a next secondary device, and enable a device capability of the next secondary device.

Step 194: The primary device enables the device capability of the secondary device when determining that the secondary device is online. For the enabling process, refer to step 115 to step 154 in FIG. 16A, FIG. 16B, FIG. 16C, and FIG. 16D. After the enabling is completed, step 195 is performed to mark the enable status of the device capability as enabled, and update the enable status information of the device capability to the second state. After the enable status of the device capability is marked, step 196 is performed.

Step 196: The primary device determines whether the device capabilities of all the secondary devices are enabled, and after the device capabilities of all the secondary devices are enabled, performs step 197 to mark an invocation status of the device capability of each enabled secondary device as not invoked.

Conversely, when a device capability of a secondary device that is not enabled still exists, step 191 is performed to acquire a device identifier and a service identifier of a next secondary device.

It may be understood that step 195 and step 197 may be performed at any time point after step 194 is performed. When the verification of a secondary device fails, it is determined that the secondary device is not online, and a device capability of the secondary device may be not enabled.

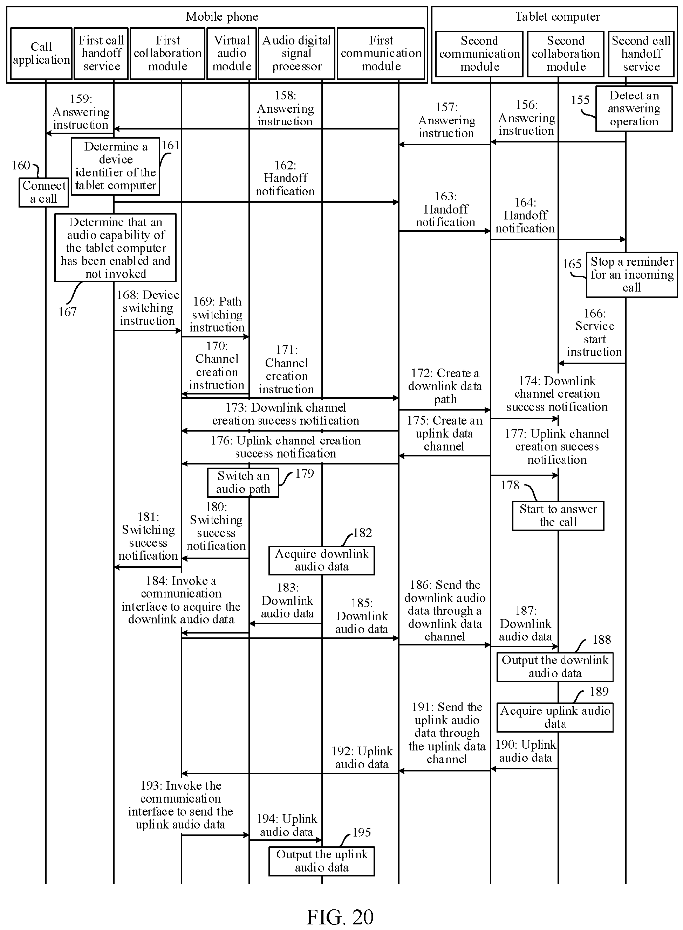

FIG. 20 is a schematic flowchart of transferring a call from a mobile phone to a tablet computer for answering in the scenarios shown in FIG. 3 to FIG. 7. Similarly, for ease of distinction, in FIG. 20, "first" and "second" are used to identify same functional modules in the mobile phone 1 and the tablet computer 2 respectively.

The steps in FIG. 20 are performed after step 154 in FIG. 16A, FIG. 16B, FIG. 16C, and FIG. 16D, and the steps in FIG. 20 correspond to step 19 to step 24 in FIG. 14.

Referring back to FIG. 3 and FIG. 4, in this case, the audio capability of the tablet computer 2 is successfully enabled, and the audio capability of the laptop computer 3 is also successfully enabled, the mobile phone 1 displays the incoming call notification interface 11, the tablet computer 2 displays the floating window 21, and the laptop computer 3 displays the floating window 31. When needing to answer a call through the tablet computer 2, the user taps the answering control 23 in the floating window 21, the mobile phone 1 transfers the call to the tablet computer 2 for answering, and the user answers the call through the tablet computer 2. A process of transferring the call to the tablet computer 2 by the mobile phone 1 is as follows:

Step 155: The second call handoff service detects an answering operation.

As shown in FIG. 3, the answering operation is, for example, the tap operation of tapping the answering control 23. When detecting that the user taps the answering control 23, the second call handoff service determines that the user needs to answer the call through the tablet computer 2, and may send an answering instruction to the mobile phone 1.

Step 156: When detecting the answering operation, the second call handoff service sends the answering instruction to the second communication module.

For example, the answering instruction includes the device identifier of the tablet computer 2. After receiving the answering instruction, the mobile phone 1 transfers the call to the tablet computer 2 for answering based on the device identifier in the answering instruction.

Step 157: After receiving the answering instruction, the second communication module forwards the answering instruction to the first communication module through the pre-established first control channel between the mobile phone 1 and the tablet computer 2.

Step 158: After receiving the answering instruction, the first communication module forwards the answering instruction to the first call handoff service.

Step 159: After receiving the answering instruction, the first call handoff service forwards the answering instruction to the call application, to indicate the call application to answer the call.

Step 160: The call application connects the call after receiving the answering instruction sent by the first call handoff service.

Referring to FIG. 4, after receiving the answering instruction, the call application connects the call, simultaneously closes the incoming call notification interface 11, and displays the call interface 14.

Step 161: After receiving the answering instruction sent by the first communication module, the first call handoff service determines the device identifier of the tablet computer 2 included in the answering instruction.

The first call handoff service determines, based on the device identifier of the tablet computer 2 included in the answering instruction, that the call service needs to be transferred to the tablet computer 2.

Step 162: After determining the device identifier of the tablet computer 2 included in the answering instruction, the first call handoff service sends a handoff notification to the first communication module.

For example, the handoff notification may include the device identifier of the tablet computer 2. The first communication module sends the handoff notification to the second communication module based on the device identifier in the handoff notification. The handoff notification is configured for notifying the tablet computer 2 to start to answer the call.

Step 163: After receiving the handoff notification, the first communication module forwards the handoff notification to the second communication module through the first control channel between the mobile phone 1 and the tablet computer 2.

Step 164: After receiving the handoff notification, the second communication module forwards the handoff notification to the second call handoff service.

Step 165: After receiving the handoff notification, the second call handoff service stops the reminder for the incoming call.

Referring to FIG. 4, after receiving the handoff notification, the second call handoff service may control the display of the tablet computer 2 to close the floating window 21 to stop the reminder for the incoming call, and may simultaneously display the call interface 24.

Referring to step 21 in FIG. 15, after receiving the answering instruction sent by the tablet computer 2, the first call handoff service may further send the simultaneous vibration stop notification to the first communication module. The simultaneous vibration stop notification includes the device identifier of the laptop computer 3. The first communication module may send the simultaneous vibration stop notification to a communication module in the laptop computer 3 through a control channel between the mobile phone 1 and the laptop computer 3. The communication module in the laptop computer 3 forwards the simultaneous vibration stop notification to a call handoff service in the laptop computer 3, and the call handoff service in the laptop computer 3 closes the floating window 31 after receiving the simultaneous vibration stop notification, and stops the reminder for the incoming call.

Step 166: After receiving the handoff notification, the second call handoff service may send a service start instruction to the second collaboration module, to enable the second collaboration module to start to process the call service.

Step 167: After determining the device identifier of the tablet computer 2, the first call handoff service determines that the audio capability of the tablet computer 2 is enabled and is not invoked.

Referring to step 154 in FIG. 16A, FIG. 16B, FIG. 16C, and FIG. 16D, the first call handoff service may send an acquisition request to the first status management unit. The acquisition request includes the device identifier of the tablet computer 2. The first status management unit acquires, in response to the acquisition request, enable status information and invocation status information corresponding to the device identifier of the tablet computer 2 from pre-recorded enable status information and invocation status information, and sends the enable status information and the invocation status information to the first call handoff service.

Correspondingly, after the first call handoff service receives the enable status information and the invocation status information that are sent by the first status management unit, if the enable status information indicates that the audio capability of the tablet computer 2 is enabled (the enable status is the first identifier), it is determined that the audio capability of the tablet computer 2 is enabled; or if the invocation status information indicates that the audio capability of the tablet computer 2 is not invoked (the invocation status is the second identifier), it is determined that the audio capability of the tablet computer 2 is not invoked.

It may be understood that, when the enable status information indicates that the enable status of the audio capability of the tablet computer 2 is not enabled (the enable status is not the first identifier), and/or the invocation status information indicates that the invocation status of the audio capability of the tablet computer 2 is invoked (the invocation status is not the second identifier), the first call handoff service may stop performing subsequent steps and does not transfer the call to the tablet computer 2. In addition, the first call handoff service may control the display of the mobile phone 1 to output prompt information, to prompt the user that the call cannot be transferred to the tablet computer 2.

Step 168: After determining that the audio capability of the tablet computer 2 is enabled and is not invoked, the first call handoff service sends a device switching instruction to the first collaboration module.

For example, the first call handoff service may invoke a switching interface provided by the first service interface layer, and input the device identifier of the tablet computer 2 into the first collaboration module.

In an implementation, the first call handoff service may directly perform step 168 when determining the device identifier of the tablet computer 2, and the first collaboration module performs step 167 to determine whether the enable status of the audio capability of the tablet computer 2 is enabled and determine whether the invocation status of the audio capability of the tablet computer 2 is not invoked.

Step 169: After receiving the device switching instruction, the first collaboration module sends a path switching instruction to the virtual audio module, where the path switching instruction includes the device identifier of the tablet computer 2.

Step 170: After receiving the path switching instruction, the virtual audio module may send a channel creation instruction to the first transmission channel unit in the first collaboration module, where the channel creation instruction includes the device identifier of the tablet computer 2.

Step 171: After receiving the channel creation instruction, the first transmission channel unit forwards the channel creation instruction to the first communication module.

Step 172: After receiving the channel creation instruction, the first communication module interacts with the second communication module through the first control channel between the mobile phone 1 and the tablet computer 2 to create a downlink data channel between the mobile phone 1 and the tablet computer 2.

Step 173: After successfully creating the downlink data channel, the first communication module sends a downlink channel creation success notification to the first transmission channel unit.

Step 174: Similarly, after the downlink data channel is successfully created, the second communication module sends the downlink channel creation success notification to the second collaboration module.

Step 175: In addition, after receiving the channel creation instruction, the first communication module interacts with the second communication module through the first control channel between the mobile phone 1 and the tablet computer 2 to create an uplink data channel between the mobile phone 1 and the tablet computer 2.

Step 176: After successfully creating the uplink data channel, the first communication module sends an uplink channel creation success notification to the first transmission channel unit.

Step 177: After the uplink data channel is successfully created, the second communication module sends the uplink channel creation success notification to the second collaboration module.

Step 178: After receiving the service start instruction, the second collaboration module may start to answer the call.

For example, after receiving the service start instruction, the second collaboration module may create an audio player, an audio recorder, and an audio processor, to play the downlink audio data through the audio player and acquire the uplink audio data from the speaker of the tablet computer 2 through the audio recorder.

It may be understood that, the second collaboration module may perform step 178 after receiving the service start instruction, or may perform step 178 after receiving the uplink channel creation success notification and the downlink channel creation success notification.

Step 179: The virtual audio module switches an audio path after receiving the path switching instruction.

For example, the virtual audio module may create a first audio stream (Stream) to turn on a first pulse code modulation device of a kernel (Kernel) layer, and create a second audio stream (Stream) to turn on a second pulse code modulation device of the kernel layer. The first pulse code modulation device is configured to read the downlink audio data from the ADSP and output the downlink audio data to the virtual audio module. The second pulse code modulation device is configured to write the uplink audio data written by the virtual audio module into the second pulse code modulation device into the ADSP. In this way, an output of the ADSP may be switched from the speaker of the mobile phone 1 to the virtual audio module, and an input of the ADSP may be switched from the microphone of the mobile phone 1 to the virtual audio module.

It may be understood that, after receiving the path switching instruction, the virtual audio module may alternatively first perform step 179 to switch an audio path, and then perform step 170 to send the channel creation instruction to the first transmission channel unit, so that the first transmission channel unit controls the first communication module to create the uplink data channel and the downlink data channel.

After receiving the path switching instruction, the virtual audio module may further update the invocation status information of the communication interface of the tablet computer 2 to the second state based on the device identifier in the path switching instruction, to mark the invocation status of the communication interface of the tablet computer 2 as invoked. In a call answering process, the uplink audio data transmitted by the first collaboration module through the communication interface of the tablet computer 2 is received, and the downlink audio data is transmitted to the first collaboration module through the communication interface of the tablet computer 2.

Step 180: After switching the audio path, the virtual audio module sends a switching success notification to the first collaboration module.

Step 181: After receiving the switching success notification, the first collaboration module sends the switching success notification to the first call handoff service, to notify the first call handoff service that the call is transferred to the tablet computer 2.

Referring to FIG. 4, after receiving the switching success notification, the first call handoff service sends a switching notification to the call application. The switching notification may include the device identifier of the tablet computer 2. The call application highlights the device icon 16 of the tablet computer 2 in the call interface 14 based on the device identifier of the tablet computer 2 to identify that the call has been transferred to the tablet computer 2.

After completing the establishment of the uplink data channel, the establishment of the downlink data channel, and the switching of the audio path, the mobile phone 1 transfers the call to the tablet computer 2, and the tablet computer 2 starts to answer the call.

After receiving the switching success notification, the first collaboration module may mark an invocation status of the tablet computer 2 recorded in the status management unit as the fifth identifier. The fifth identifier represents that the invocation status of the audio capability of the tablet computer 2 is invoked, and the fifth identifier may be an identifier opposite to the second identifier, for example, the invocation status information of the second state, to mark that the invocation status of the audio capability of the tablet computer 2 is invoked.

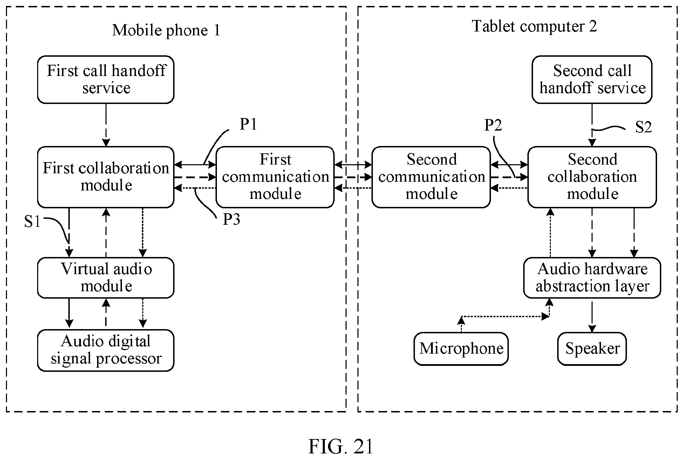

FIG. 21 is a schematic diagram of data transmission according to an embodiment of this application. After the mobile phone 1 transfers the call to the tablet computer 2, a first control channel P1, a downlink data channel P2, and an uplink data channel P3 are established between the mobile phone 1 and the tablet computer 2.

Step 182: The ADSP acquires downlink audio data from the modem.

Specifically, the modem of the mobile phone 1 receives the downlink audio data sent by the peer device, and the ADSP acquires the downlink audio data from the modem and inputs the downlink audio data into the first pulse code modulation device.

Step 183: The virtual audio module acquires the downlink audio data from the first pulse code modulation device.

Step 184: The first collaboration module invokes a pre-registered communication interface of the tablet computer 2 to acquire the downlink audio data from the virtual audio module.

Referring to FIG. 11, the audio virtualization unit in the first collaboration module may invoke the communication interface of the tablet computer 2 to acquire the downlink audio data from the virtual audio module.

Step 185: After acquiring the downlink audio data, the first collaboration module outputs the downlink audio data to the first communication module.

Step 186: The first communication module sends the downlink audio data to the second communication module through the downlink data channel P2.

Step 187: After receiving the downlink audio data, the second communication module transmits the downlink audio data to the second collaboration module.

Step 188: After receiving the downlink audio data, the second collaboration module controls the tablet computer 2 to output the downlink audio data.

For example, the second collaboration module inputs the downlink audio data into the audio player. The audio player inputs the downlink audio data into the audio processor for processing. The audio processor inputs, through the audio hardware abstraction layer, audio data obtained through processing to the speaker of the tablet computer 2 for playing and output.

Step 189: In addition, the second collaboration module controls the tablet computer 2 to acquire the uplink audio data.

For example, the audio recorder in the tablet computer 2 acquires the uplink audio data from the microphone through the audio hardware abstraction layer, and the second collaboration module acquires the uplink audio data from the audio recorder.

Step 190: After acquiring the uplink audio data from the audio recorder, the second collaboration module transmits the uplink audio data to the second communication module.

Step 191: The second communication module sends the uplink audio data to the first communication module through the uplink data channel P3.

Step 192: The first communication module transmits the received uplink audio data to the first collaboration module.

Step 193: After receiving the uplink audio data, the first collaboration module inputs the uplink audio data into the virtual audio module through the communication interface of the tablet computer 2.

Step 194: The virtual audio module inputs the uplink audio data into the second pulse code modulation device, and the second pulse code modulation device inputs the uplink audio data into the ADSP.

Step 195: After receiving the uplink audio data, the ADSP outputs the uplink audio data to the modem, and the modem sends the uplink audio data to the peer device.

It may be understood that step 182 to step 188 may be performed simultaneously with step 189 to step 198.

It should be noted that, in FIG. 21, a control flow S1 exists between the first call handoff service and the first collaboration module, and a control flow also exists between the virtual audio module and the ADSP. The first call handoff service may input control information into the first collaboration module, to control the collaboration module to act. The virtual audio module may input control information into the ADSP, to enable the ADSP to switch an audio channel. Similarly, a control flow S2 exists between the second call handoff service and the second collaboration module, and a control flow also exists between the second collaboration module and the audio hardware abstraction layer.

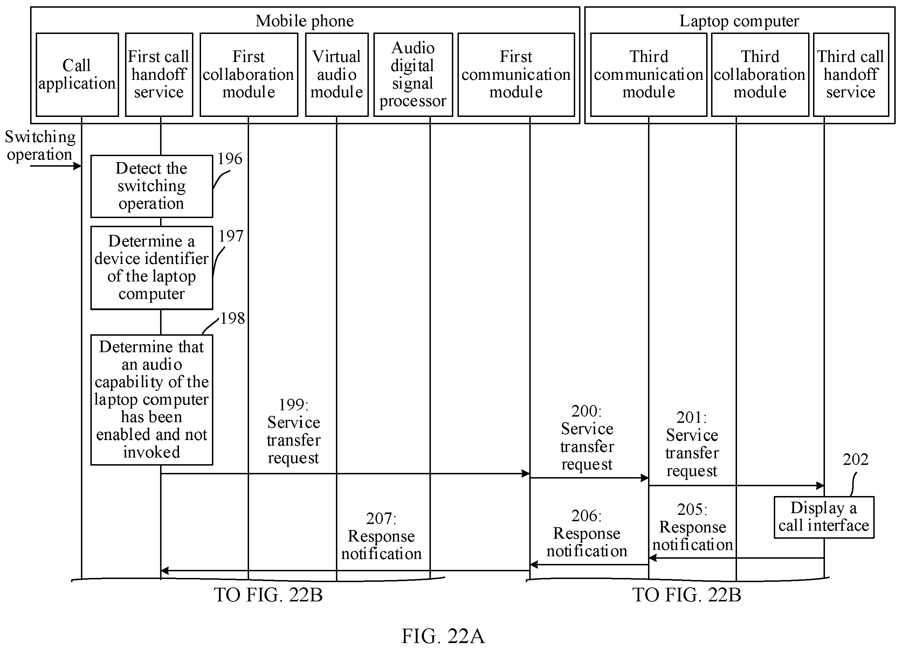

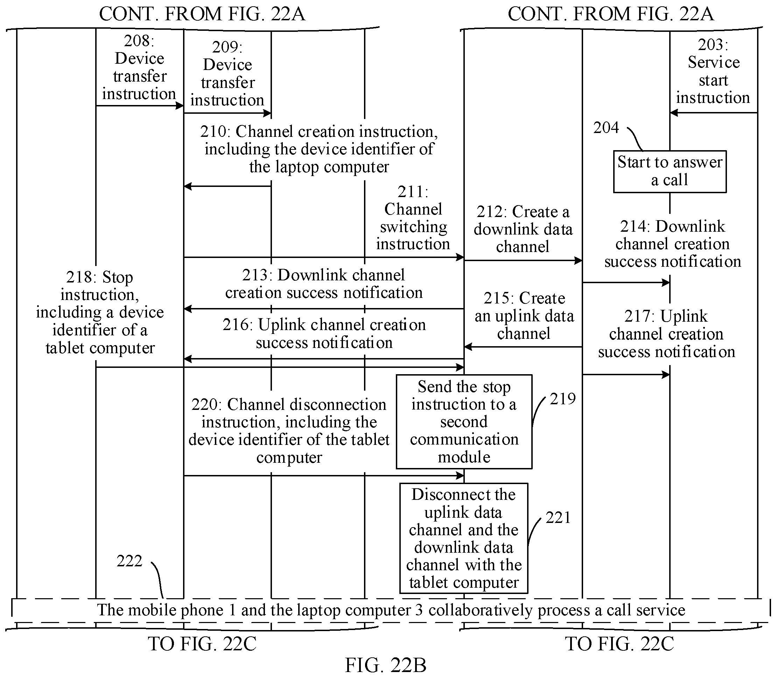

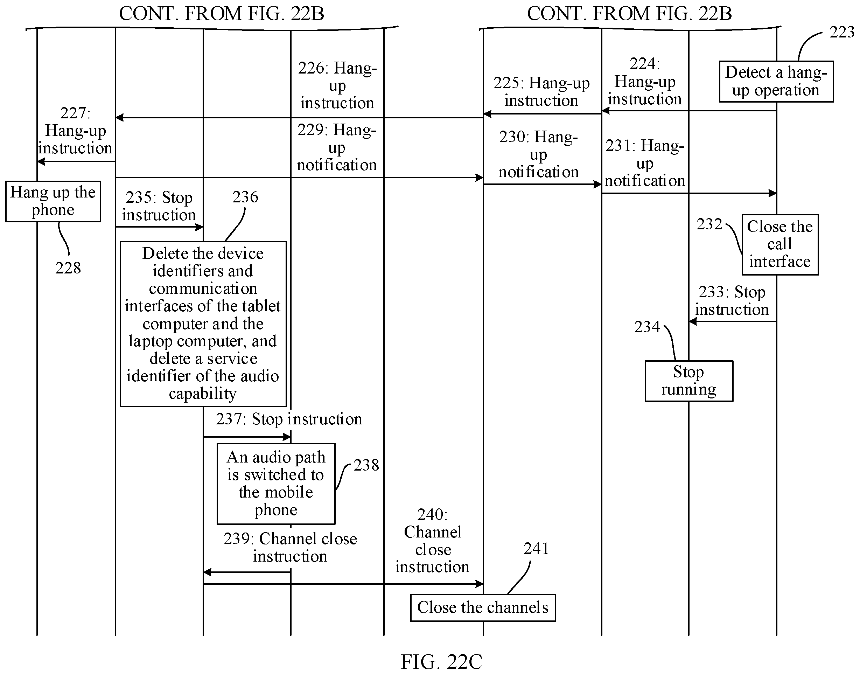

FIG. 22A, FIG. 22B, and FIG. 22C are a schematic flowchart of a mobile phone transferring a call from a tablet computer to a laptop computer for answering in the scenarios shown in FIG. 3 to FIG. 7. For ease of distinction, in FIG. 22A, FIG. 22B, and FIG. 22C, "first" and "third" are used to identify same functional modules in the mobile phone 1 and the laptop computer 3 respectively. In FIG. 22A, FIG. 22B, and FIG. 22C, the first collaboration module refers to functional modules included in the collaboration module in the mobile phone 1, and a third collaboration module refers to functional modules included in the collaboration module in the laptop computer 3.

The steps in FIG. 22A, FIG. 22B, and FIG. 22C are performed after step 195 in FIG. 20, and the steps in FIG. 22A, FIG. 22B, and FIG. 22C correspond to step 25 to step 34 in FIG. 15.

Referring back to FIG. 4, FIG. 5, and FIG. 6, in this case, the user uses the tablet computer 2 to answer the phone, the mobile phone 1 displays the call interface 14, the tablet computer 2 displays the call interface 24, and the laptop computer 3 displays a desktop. When intending to answer the phone through the laptop computer 3, the user may tap the device icon 181 or tap the device icon 271, the mobile phone 1 transfers the call from the tablet computer 2 to the laptop computer 3, and a specific transfer process is described as follows:

Step 196: The first call handoff service detects a switching operation.

Step 197: After detecting the switching operation, the first call handoff service determines the device identifier of the laptop computer 3 corresponding to the switching operation.

As shown in FIG. 5, the switching operation is the tap operation of tapping the device icon 181, and the call application receives the tap operation. After the call application receives the tap operation, the first call handoff service may detect the tap operation received by the call application. The device icon 181 is bound to the device identifier of the laptop computer 3. After receiving the tap operation, the call application determines the device identifier of the laptop computer 3. After detecting the tap operation, the first call handoff service acquires the device identifier of the laptop computer 3 from the call application, and determines, based on the device identifier of the laptop computer 3, to transfer the call to the laptop computer 3.

Similarly, when the user taps the device icon 271, the tablet computer 2 may send the switching instruction including the device identifier of the laptop computer 3 to the mobile phone 1. The first call handoff service acquires the device identifier of the laptop computer 3 from the switching instruction, and transfers the call to the laptop computer 3 based on the device identifier.

Step 198: After determining the device identifier of the laptop computer 3, the first call handoff service determines that the audio capability of the laptop computer 3 is enabled and is not invoked.

The first call handoff service may send an acquisition request to the first status management unit. The acquisition request includes the device identifier of the laptop computer 3. The first status management unit acquires, in response to the acquisition request, enable status information and invocation status information corresponding to the device identifier of the laptop computer 3 from pre-recorded enable status information and invocation status information, and sends the enable status information and the invocation status information to the first call handoff service.

Correspondingly, after the first call handoff service receives the enable status information and the invocation status information that are sent by the first status management unit, if the enable status information indicates that the audio capability of the laptop computer 3 is enabled (the enable status is the third identifier), it is determined that the audio capability of the laptop computer 3 is enabled; or if the invocation status information indicates that the audio capability of the laptop computer 3 is not invoked (the invocation status is the fourth identifier), it is determined that the audio capability of the laptop computer 3 is not invoked.

It may be understood that, when the enable status information indicates that the enable status of the audio capability of the tablet computer 2 is not enabled (the enable status is not the third identifier), and/or the invocation status information indicates that the invocation status of the audio capability of the tablet computer 2 is invoked (the invocation status is not the fourth identifier), the first call handoff service may stop performing subsequent steps and does not transfer the call to the laptop computer 3. In addition, the first call handoff service may control the display of the mobile phone 1 to output prompt information, to prompt the user that the call cannot be transferred to the laptop computer 3.

Step 199: After determining that the audio capability of the laptop computer 3 is enabled and not invoked, the first call handoff service sends a service transfer request to the first communication module, where the service transfer request may include the device identifier of the laptop computer 3.

Step 200: After receiving the service transfer request, the first communication module sends the service transfer request to a third communication module based on the device identifier in the service transfer request through the pre-established control channel between the mobile phone 1 and the laptop computer 3.

Step 201: After receiving the service transfer request, the third communication module forwards the service transfer request to a third call handoff service.

Step 202: After receiving the service transfer request, the third call handoff service controls the laptop computer 3 to display a call interface.

Referring back to FIG. 7, after receiving the service transfer request, the third call handoff service controls a display of the laptop computer 3 to display the call interface 34.

Step 203: After receiving the service transfer request, the third call handoff service may send a service start instruction to the third collaboration module.

Step 204: After receiving the service start instruction, the third collaboration module may start to answer the call. For example, the third collaboration module may start the audio recorder, the audio player, and the audio processor.

Step 205: After receiving the service transfer request, the third call handoff service sends a response notification to the third communication module to notify that the mobile phone 1 can transfer the call.

Step 206: After receiving the response notification, the third communication module forwards the response notification to the first communication module through the control channel between the mobile phone 1 and the laptop computer 3.

Step 207: After receiving the response notification, the first communication module forwards the response notification to the first call handoff service.

Step 208: After receiving the response notification, the first call handoff service sends a device transfer instruction to the first collaboration module.

For example, the response notification may include the device identifier of the laptop computer 3. After receiving the response notification, the first call handoff service determines, based on the device identifier in the response notification, to transfer the call to the laptop computer 3. In this case, the first call handoff service may invoke the switching interface provided by the first service interface layer, and input the device identifier of the laptop computer 3 into the first collaboration module.

Step 209: After receiving the device transfer instruction, the first collaboration module sends the device transfer instruction to the virtual audio module.

The device transfer instruction may include the device identifier of the laptop computer 3. The virtual audio module determines, based on the device identifier in the device transfer instruction, that the call needs to be transferred to the laptop computer 3.

Step 210: After receiving the device transfer instruction, the virtual audio module sends a channel creation instruction to the first transmission channel unit.

For example, the channel creation instruction may include the device identifier of the laptop computer 3, to indicate the first transmission channel unit to create an uplink data channel and a downlink data channel with the laptop computer 3.

After receiving the device transfer instruction, the virtual audio module may update the invocation status information of the communication interface of the tablet computer 2 to the first state based on the device identifier in the device transfer instruction, and update the invocation status information of the communication interface of the laptop computer 3 to the second state, to mark the invocation status of the communication interface of the tablet computer 2 as not invoked and mark the invocation status of the communication interface of the laptop computer 3 as invoked. In a call answering process, the uplink audio data transmitted by the first collaboration module through the communication interface of the laptop computer 3 is received, and the downlink audio data is transmitted to the first collaboration module through the communication interface of the laptop computer 3.

Step 211: After receiving the channel creation instruction, the first transmission channel unit sends the channel creation instruction to the first communication module.

Step 212: After receiving the channel creation instruction, the first communication module interacts with the third communication module through the second control channel between the mobile phone 1 and the laptop computer 3 to create the downlink data channel between the mobile phone 1 and the laptop computer 3.

Step 213: After successfully creating the downlink data channel, the first communication module sends a downlink channel creation success notification to the first transmission channel unit.

Step 214: In addition, after the downlink data channel is successfully created, the third communication module sends the downlink channel creation success notification to the third collaboration module.

Step 215: Similarly, after receiving the channel creation instruction, the first communication module creates the uplink data channel between the mobile phone 1 and the laptop computer 3.

Step 216: After successfully creating the downlink data channel, the first communication module sends an uplink channel creation success notification to the first transmission channel unit.

Step 217: In addition, after the uplink data channel is successfully created, the third communication module sends the uplink channel creation success notification to the third collaboration module.

When the uplink data channel fails to be created or the downlink data channel fails to be created, the first communication module may send a channel creation failure notification to the first collaboration module. The first collaboration module forwards the channel creation failure notification to the first call handoff service. When receiving the channel creation failure notification, the first call handoff service controls the mobile phone 1 to output prompt information, to prompt the user that the call cannot be transferred to the laptop computer 3. In addition, the first collaboration module may transfer the call back to the mobile phone 1, or does not transfer the call and continue to keep the call on the tablet computer 2 for answering, for example, does not perform step 218.

Step 218: After receiving the response notification, the first call handoff service may send a stop instruction to the first communication module.

For example, the stop instruction may include the device identifier of the tablet computer 2. The stop instruction is configured for indicating the tablet computer 2 to stop answering the call.

Step 219: After receiving the stop instruction, the first communication module sends the stop instruction to the second communication module through the control channel between the mobile phone 1 and the tablet computer 2 based on the device identifier in the stop instruction.

Referring back to FIG. 7, after receiving the stop instruction, the second call handoff service may control the tablet computer 2 to close the call interface 24. In addition, the second call handoff service may send the stop instruction to the second call handoff service, and after receiving the stop instruction, the second call handoff service may send the stop instruction to the second collaboration module. The second collaboration module turns off, in response to the stop instruction, the audio player, the audio recorder, and the audio processor, and stops running.

Step 220: After receiving the device transfer instruction, the first collaboration module may send a channel disconnection instruction to the first communication module.

For example, the first collaboration module may determine, based on the device identifier of the laptop computer 3 in the device transfer instruction, that the call needs to be transferred from the tablet computer 2 to the laptop computer 3. The first collaboration module may send the channel disconnection instruction to the first communication module. The channel disconnection instruction may include the device identifier of the tablet computer 2, to indicate the first communication module to disconnect the uplink data channel and the downlink data channel with the tablet computer 2.

Step 221: After receiving the channel disconnection instruction, the first communication module disconnects the uplink data channel and the downlink data channel between the mobile phone 1 and the tablet computer 2.

Step 218 may be performed before or after step 208, and step 220 may be performed before or after step 208. To be specific, the mobile phone 1 may indicate the tablet computer 2 to stop answering the call after the call is transferred to the laptop computer 3, and disconnect the uplink data channel and the downlink data channel between the mobile phone 1 and the tablet computer 2. Alternatively, the tablet computer 2 may be first indicated to stop answering the call, the uplink data channel and the downlink data channel between the mobile phone 1 and the tablet computer 2 are disconnected, and then the call is transferred to the laptop computer 3. Because it takes a relatively short time to transfer the call from the tablet computer 2 to the laptop computer 3, a sequence between step 218 and step 208 and a sequence between step 220 and step 208 does not affect the normal processing of the call.

Step 222: After creating the uplink data channel and the downlink data channel between the mobile phone 1 and the laptop computer 3, the laptop computer 3 starts to answer the call.

Referring to FIG. 7, after the call service is transferred to the laptop computer 3, the laptop computer 3 displays the call interface 34, and the mobile phone 1 displays the call interface 14. The virtual audio module acquires the downlink audio data from the ADSP, and transmits the downlink audio data to the first collaboration module through the communication interface of the laptop computer 3. After receiving the uplink audio data, the first collaboration module transmits the uplink audio data to the virtual audio module through the communication interface of the laptop computer 3. When receiving the downlink audio data, the first communication module sends the downlink audio data to the third communication module through the downlink data channel between the mobile phone 1 inside the laptop computer 3, and when receiving the uplink audio data sent by the third communication module, sends the uplink audio data to the first collaboration module. For an understanding of step 222, refer to step 182 to step 195 shown in FIG. 20. Details are not described herein again in this embodiment.

It should be noted that, when the call service is transferred from the tablet computer 2 to the laptop computer 3, the audio capability of the tablet computer 2 is not disabled, and is still in a usable state.

As shown in step 196 to step 222, in the process of transferring the call from the tablet computer 2 to the laptop computer 3, the mobile phone 1 disconnects a first data channel with the tablet computer 2. The first data channel includes the uplink data channel and the downlink data channel between the mobile phone 1 and the tablet computer 2. In addition, the mobile phone 1 establishes a second data channel with the laptop computer 3. The second data channel includes the uplink data channel and the downlink data channel between the mobile phone 1 and the laptop computer 3.

In this embodiment, after the call is transferred from the tablet computer 2 to the laptop computer 3 for answering, the first status management unit in the first collaboration module may update the invocation status of the audio capability of the tablet computer 2 to the first state, to mark the audio capability of the tablet computer 2 as not invoked. In addition, an invocation status of the audio capability of the laptop computer 3 may be updated to the second state, to mark the invocation status of the audio capability of the laptop computer 3 as invoked.

After transferring the call to the laptop computer 3, the first collaboration module may mark an invocation status of the laptop computer 3 recorded in the status management unit as a sixth identifier. The sixth identifier represents that the invocation status of the audio capability of the laptop computer 3 is invoked, and the sixth identifier may be an identifier the same as the fifth identifier, for example, the invocation status information of the second state, to mark that the invocation status of the audio capability of the laptop computer 3 is invoked.

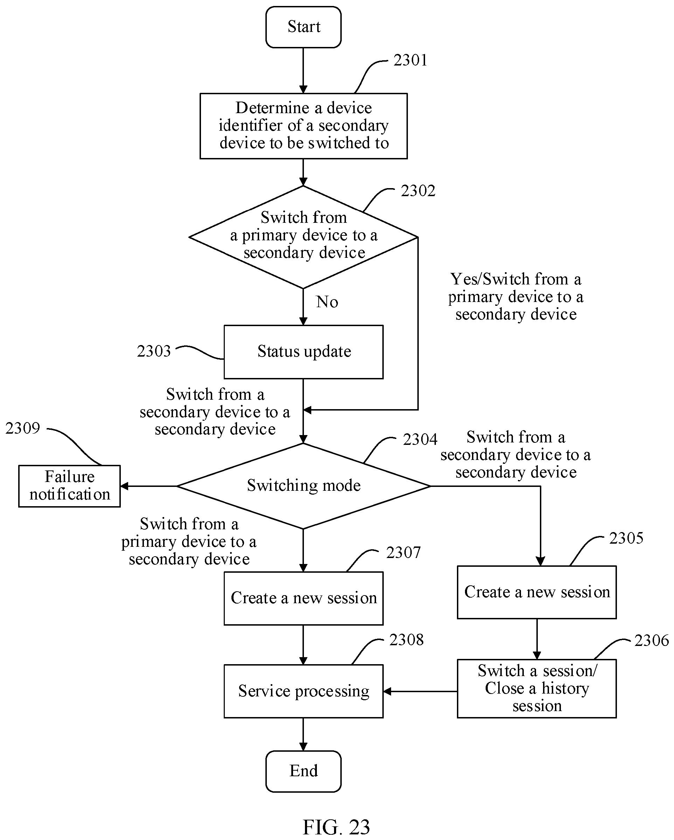

FIG. 23 is a schematic diagram of a service transfer process according to an embodiment of this application.

Step 2301: After receiving a switching operation, the primary device first determines a device identifier of a secondary device to which switching is to be performed.

Referring back to FIG. 5 and FIG. 6, when the user taps the device icon 181 or the device icon 271, the mobile phone 1 determines that the secondary device to which switching is to be performed is the laptop computer 3, and may further determine the device identifier of the laptop computer 3.

Step 2302: After determining the device identifier, the collaboration module in the primary device may determine whether a transfer direction is a transfer from the primary device to a secondary device. When the transfer direction is a transfer from the primary device to a secondary device, it is determined that a switching mode is a transfer from the primary device to a secondary device, and step 2304 is performed. When the transfer direction of the service is a transfer from a secondary device to another secondary device, it is determined that a switching mode is a transfer from a secondary device to a secondary device, and step 2303 is performed.

Specifically, when the determined device identifier is a device identifier of a secondary device and the service is processed by the primary device at a current moment, it may be determined that the transfer direction of the service is a transfer from the primary device to a secondary device. Conversely, if the determined device identifier is a device identifier of a secondary device and the service is processed by a secondary device at a current moment, it may be determined that the transfer direction of the service is a transfer from a secondary device to a secondary device.

Step 2303: The primary device updates an invocation status of the device capability of the secondary device.

For example, when the determined transfer direction of the call is a transfer from the tablet computer 2 to the laptop computer 3, the invocation status of the audio capability of the laptop computer 3 may be updated to the second state, and the invocation status of the audio capability of the tablet computer 2 may be updated to the first state.

Step 2304: Determine the switching mode, and if the switching mode is a transfer from the primary device to a secondary device, perform step 2307, or if the switching mode is a transfer from a secondary device to a secondary device, perform step 2305.

Step 2307: Create a new session with the secondary device to which switching is to be performed. Creating a session is creating a data channel, for example, creating an uplink data channel and a downlink data channel.

For example, in FIG. 20, the uplink data channel and the downlink data channel between the mobile phone 1 and the tablet computer 2 are the new session, and the uplink data channel and the downlink data channel between the mobile phone 1 and the tablet computer 2 are created. For the step, refer to step 168 to step 177 in FIG. 20. Details are not described herein again in this embodiment.

Step 2308: Invoke a device capability of the secondary device based on the new session between the primary device and the secondary device to process the service. For the step, refer to step 182 to step 195 in FIG. 20.

Step 2305: Create a new session with the secondary device to which switching is to be performed.

Step 2306: Close a history session with the currently invoked secondary device, and switch the session from the history session to the new session.

For example, the uplink data channel and the downlink data channel between the laptop computer 3 and the mobile phone 1 in FIG. 22A, FIG. 22B, and FIG. 22C are the new session, the uplink data channel and the downlink data channel between the tablet computer 2 and the mobile phone 1 are the history session, the uplink data channel and the downlink data channel between the mobile phone 1 and the tablet computer 2 are closed, and the call is collaboratively processed with the laptop computer 3 through the uplink data channel and the downlink data channel between the mobile phone 1 and the laptop computer 3. For step 226, refer to step 208 to step 221 in FIG. 22A, FIG. 22B, and FIG. 22C.

Step 2309: When the switching mode is neither switching from a secondary device to a secondary device nor switching from the primary device to a secondary device, it represents that the procedure is abnormal. In this case, it may be determined that switching fails, and step 2309 is performed, to output a switching failure notification.

In this embodiment, when the primary device invokes the device capability of the secondary device to process the service, the primary device or the secondary device may end the processing of the service. After the service is ended, the primary device may disable the device capability of the secondary device.

Referring to FIG. 6, after the call service is transferred to the laptop computer 3, if the user taps the hang-up control 35 in the call interface 34, the laptop computer 3 may close the call interface 34 in response to a tap operation by the user, stop answering the call, and send a hang-up instruction to the mobile phone 1. After receiving the hang-up instruction, the mobile phone 1 may hang up the phone, and stop the first collaboration module.

Alternatively, after the call service is transferred to the laptop computer 3, if the user taps the hang-up control 15 in the call interface 14, the mobile phone 1 may close the call interface 14 in response to a tap operation by the user, and end the call. In addition, the mobile phone 1 may send a stop instruction to the laptop computer 3. After receiving the stop instruction, the laptop computer 3 closes the call interface 34, and stops the third collaboration module, to end the call.

Referring to FIG. 22A, FIG. 22B, and FIG. 22C, an example in which the call is hung up through the laptop computer 3 is used in FIG. 22A, FIG. 22B, and FIG. 22C to exemplarily describe an ending process of a service. An ending process of the call service is as follows:
Step 223: The third call handoff service detects a hang-up operation.

Referring to FIG. 6, the hang-up operation is, for example, the tap operation of tapping the hang-up control 35. After detecting the tap operation of tapping the hang-up control 35, the third call handoff service sends a hang-up instruction to the third communication module.

Step 224: After detecting the hang-up operation, the third call handoff service sends the hang-up instruction to the third communication module.

Step 225: After receiving the hang-up instruction, the third communication module sends the hang-up instruction to the first communication module through the second control channel between the mobile phone 1 and the laptop computer 3.

Step 226: After receiving the hang-up instruction, the first communication module sends the hang-up instruction to the first call handoff service.

Step 227: After receiving the hang-up instruction, the first call handoff service sends the hang-up instruction to the call application.

Step 228: The call application hangs up the phone after receiving the hang-up instruction.

Referring to FIG. 7, after receiving the hang-up instruction, the call application hangs up the phone, and simultaneously closes the call interface 14.

Step 229: After receiving the hang-up instruction, the first call handoff service may send a hang-up notification to the first communication module.

Step 230: After receiving the hang-up notification, the first communication module sends the hang-up notification to the third communication module.

Step 231: After receiving the hang-up notification, the third communication module forwards the hang-up notification to the third call handoff service.

Step 232: After receiving the hang-up notification, the third call handoff service controls the laptop computer 3 to close the call interface 34.

Step 233: After receiving the hang-up notification, the third call handoff service may send a stop instruction to the third collaboration module.

Step 234: The third collaboration module stops running after receiving the stop instruction.

For example, after receiving the stop instruction, the third collaboration module may first turn off the audio player, the audio recorder, the audio processor, and the like, and then stops running.

Step 235: After receiving the hang-up instruction, the first call handoff service may send a stop instruction to the first collaboration module.

Step 236: After receiving the stop instruction, the first collaboration module may disable the audio capabilities of the tablet computer 2 and the laptop computer 3.

For example, the first device management unit may delete the device identifier of the tablet computer 2 and the service identifier of the audio capability registered in the device management unit, and delete the registered device identifier of the laptop computer 3 and the service identifier of the audio capability.

Step 237: After receiving the stop instruction, the first collaboration module sends the stop instruction to the virtual audio module.

Step 238: The virtual audio module switches an audio path to the mobile phone after receiving the stop instruction.

For example, the virtual audio module may switch the output of the ADSP from the first pulse code modulation device to the speaker of the mobile phone 1, and switch the input of the ADSP from the second pulse code modulation device to the microphone of the mobile phone 1, to switch the audio path back to the mobile phone 1. In addition, the virtual audio module may delete the registered communication interface of the tablet computer 2 and delete the communication interface of the laptop computer 3.

Step 239: After receiving the stop instruction, the virtual audio module sends a channel close instruction to the first transmission channel unit.

Step 240: After receiving the channel close instruction, the first transmission channel unit sends the channel close instruction to the first communication module.

Step 241: After receiving the channel close instruction, the first communication module closes the control channel, the uplink data channel, and the downlink data channel between the mobile phone 1 and the tablet computer 2, and closes the control channel, the uplink data channel, and the downlink data channel between the mobile phone 1 and the laptop computer 3.

It should be noted that, the foregoing provides merely exemplary examples, and does not constitute a specific limitation on a service ending process.

Optionally, in a call answering process, when detecting that a fourth electronic device is online, the first electronic device creates a third control channel with the fourth electronic device, where the third control channel is configured for streaming the call to the fourth electronic device for answering when a third switching instruction corresponding to the fourth electronic device is received.

As shown in FIG. 22A, FIG. 22B, and FIG. 22C, the tablet computer 2 and the laptop computer 3 are both online, and the call is transferred to the laptop computer 3 for answering. In this case, if a smart screen in the trust circle gets online and runs, the smart screen pushes device information to the mobile phone 1, and the device information of the smart screen appears in the device list. In an entire call answering process, the first call handoff service may monitor the device list to determine whether the device list is updated. When detecting that the device list is updated and the device information of the smart screen appears, if determining that a device type of the smart screen is the same as a default device type of the call service, the first call handoff service may determine the smart screen as the fourth electronic device, and the mobile phone 1 enables an audio capability of the smart screen.

Similarly, in a process of enabling the audio capability of the smart screen, a fourth control channel may be created between the mobile phone 1 and the smart screen. In addition, a device identifier of the smart screen may be registered in the first collaboration module, and a service identifier of the audio capability is correspondingly registered. In addition, a communication interface of the smart screen is registered in the virtual audio module.

After the enabling of the audio capability of the smart screen is completed, if the user needs to transfer the call to the smart screen, when receiving the third switching instruction of the corresponding smart screen, the mobile phone 1 may transfer the call to the smart screen for answering.

In the embodiments of this application, in the process of answering the call, when it is detected that a new secondary device is online, the primary device may enable an audio capability of the new secondary device, so that when the call needs to be transferred to the new secondary device, the call can be quickly transferred to the new secondary device for answering.

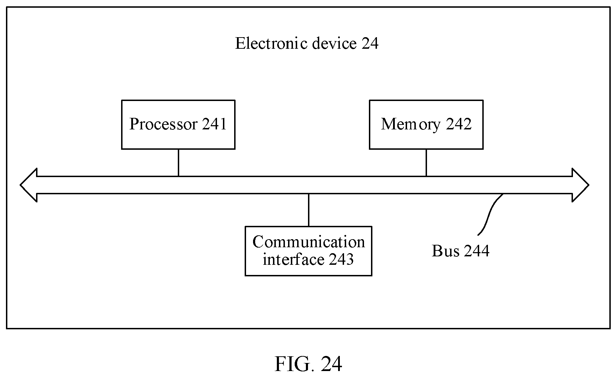

FIG. 24 is a schematic diagram of a structure of an electronic device according to an embodiment of this application. The electronic device 24 is, for example, the electronic device 10 shown in FIG. 10, and includes: a processor 241, a memory 242, a communication interface 243, and a bus 244. The memory 242 is configured to store instructions, and the processor 241 is configured to execute the instructions stored in the memory 242. The processor 241, the memory 242, and the communication interface 243 are mutually communicatively connected by a communication bus 244.

This application further provides a chip system, applied to an electronic device, and including one or more processors. The processor is configured to invoke computer instructions to cause the electronic device to perform the foregoing method.

This application further provides a computer program product. The computer program product includes computer program code. The computer program code, when executed by a call apparatus, implements the method in any method embodiment of this application.

The computer program product may alternatively be code solidified in a chip. A specific form of the computer program product is not limited in this application.

This application further provides a readable storage medium. The readable storage medium stores a computer program. The computer program, when being executed by a call apparatus, implements the method in any method embodiment of this application. The computer program may be a high-level language program or an executable object program.

The readable storage medium may be a volatile memory or a non-volatile memory, or may include both a volatile memory and a non-volatile memory. The non-volatile memory may be a read-only memory (read-only memory, ROM), a programmable ROM (programmable ROM, PROM), an erasable PROM (erasable PROM, EPROM), an electrically EPROM (electrically EPROM, EEPROM), or a flash memory. The volatile memory may be a random access memory (random access memory, RAM), and is used as an external cache. Through illustrative rather than restrictive description, RAMs of many forms are available, for example, a static RAM (static RAM, SRAM), a dynamic RAM (dynamic RAM, DRAM), a synchronous DRAM (synchronous DRAM, SDRAM), a double data rate SDRAM (double data rate SDRAM, DDR SDRAM), an enhanced SDRAM (enhanced SDRAM, ESDRAM), a synchlink DRAM (synchlink DRAM, SLDRAM), and a direct rambus RAM (direct rambus RAM, DRRAM).

Persons skilled in the art can clearly understand that for convenience and conciseness of description, the specific working processes of the above-described apparatus and device and generated technical effects can be understood with reference to the corresponding processes and technical effects in the above-described method embodiments, and details are not described herein again.

In the several embodiments provided in this application, the disclosed system, apparatus, and method may be implemented in other manners. For example, some features of the method embodiments described above may be ignored or not performed. The described apparatus embodiment is merely exemplary. The unit division is merely logical function division and may be other division during actual implementation. Multiple units or components may be combined or integrated into another system. In addition, the coupling between the units or the coupling between the components may be direct coupling or indirect coupling, and the coupling includes electrical, mechanical, or other forms of connections.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

## Claims

1. A call system, wherein the call system comprises a first electronic device (1), a second electronic device (2), and a third electronic device (3);
the first electronic device (1) is configured to receive an incoming call request;
in response to the incoming call request, the first electronic device (1), the second electronic device (2), and the third electronic device (3) are configured to provide a reminder for an incoming call;
the first electronic device (1) is configured to create a first control channel with the second electronic device (2), and is configured to create a second control channel with the third electronic device (3);
wherein the call system is configured to receive an operation of answering the incoming call on the first electronic device (1) or the second electronic device (2), and the first electronic device (1) is configured to connect a call corresponding to the incoming call request;
wherein the first electronic device (1) is configured to transfer the call to the second electronic device (2) through the first control channel for answering; whereby
• with the operation of answering the incoming call received on the second electronic device (2):
∘ the second electronic device (2) is configured to send an answering instruction to the first electronic device (1), and in response to the answering instruction, the first electronic device (1) is configured to connect the call, and to transfer the call to the second electronic device (2) through the first control channel for answering; or
• with the operation of answering the incoming call received on the first electronic device (1), and the first electronic device (1) being configured to connect the call:
∘ in response to a received second switching instruction the first electronic device (1) is configured to transfer the call to the second electronic device (2) through the first control channel for answering;
wherein the first electronic device (1) is configured to receive a first switching instruction in a process of answering the call on the second electronic device (2); and
in response to the first switching instruction, the first electronic device (1) is configured to transfer the call to the third electronic device (3) through the second control channel for answering.

2. The call system according to claim 1, wherein
in the process of answering the call on the second electronic device (2), the second electronic device (2) is configured to receive a first operation corresponding to a first control (271); and
in response to the first operation, the second electronic device (2) is configured to send the first switching instruction to the first electronic device (1).

3. The call system according to claim 1 or 2, wherein
after the call is transferred to the second electronic device (2) for answering, the first electronic device (1) is configured to display a first call interface (14), wherein the first call interface (14) comprises a second control (181); and
the first electronic device (1) is configured to receive the first switching instruction through the second control (181).

4. The call system according to claim 2, wherein
after the call is transferred to the second electronic device (2) for answering, the second electronic device (2) is configured to display a second call interface, wherein the second call interface comprises the first control (271).

5. The call system according to any one of claims 1 to 4, wherein
before the call is transferred to the second electronic device (2) for answering, the first electronic device (1) is configured to register a device identifier of the second electronic device (2);
the first electronic device (1) is configured to mark an enable status of an audio capability of the second electronic device (2) as a first identifier;
the first electronic device (1) is configured to mark an invocation status of the audio capability of the second electronic device (2) as a second identifier; and
when determining, based on the device identifier of the second electronic device (2), that the enable status of the audio capability of the second electronic device (2) is the first identifier and the invocation status of the audio capability of the second electronic device (2) is the second identifier, the first electronic device (1) is configured to transfer the call to the second electronic device (2) through the first control channel for answering.

6. The call system according to any one of claims 1 to 5, wherein the first electronic device (1) comprises a collaboration module and a virtual audio module;
before the call is transferred to the second electronic device (2) for answering, the collaboration module is configured to register a first communication interface in the virtual audio module; and
after the call is transferred to the second electronic device (2) for answering, the first electronic device (1) is configured to transmit audio data in the call between the collaboration module and the virtual audio module through the first communication interface.

7. The call system according to any one of claims 1 to 6, wherein
before the call is transferred to the third electronic device (3) for answering, the first electronic device (1) is configured to register a device identifier of the third electronic device (3);
the first electronic device (1) is configured to mark an enable status of an audio capability of the third electronic (3) device as a third identifier;
the first electronic device (1) is configured to mark an invocation status of the audio capability of the third electronic device (3) as a fourth identifier; and
when determining, based on the device identifier of the third electronic device (3), that the enable status of the audio capability of the third electronic device (3) as the third identifier and the invocation status of the audio capability of the third electronic device (3) as the fourth identifier, the first electronic device (1) is configured to transfer the call to the third electronic device (3) through the second control channel for answering.

8. The call system according to any one of claims 1 to 7, wherein the first electronic device (1) comprises a collaboration module and a virtual audio module;
before the call is transferred to the third electronic device (3) for answering, the collaboration module is configured to register a second communication interface of the third electronic device (3) in the virtual audio module; and
after the call is transferred to the third electronic device (3) for answering, the first electronic device (1) is configured to transmit the audio data in the call between the collaboration module and the virtual audio module through the second communication interface.

9. The call system according to claim 5 or 6, wherein
after the call is transferred to the second electronic device (2) for answering, the first electronic device (1) is configured to mark the invocation status of the audio capability of the second electronic device (2) as a fifth identifier.

10. The call system according to any one of claims 1 to 9, wherein
before the first control channel is created, the first electronic device (1) is configured to determine that the second electronic device (2) is in an online state; and
before the second control channel is created, the first electronic device (1) is configured to determine that the third electronic device (3) is in an online state.

11. The call system according to any one of claims 1 to 10, when the first electronic device (1) transfers the call to the third electronic device (3) through the second control channel for answering, the first electronic device (1) is configured to:
disconnect a first data channel with the second electronic device (2), wherein the first data channel is established before the call is transferred to the second electronic device (2);
establish a second data channel with the third electronic device (3); and
transfer the call to the third electronic device (3) through the second control channel for answering after the second data channel is established, wherein
the first data channel and the second data channel are configured for transmitting the audio data in the call.

12. The call system according to any one of claims 1 to 11, wherein
when detecting that a fourth electronic device is online, the first electronic device (1) is configured to create a third control channel with the fourth electronic device, wherein
the third control channel is configured for streaming the call to the fourth electronic device for answering when a third switching instruction corresponding to the fourth electronic device is received.

13. A call method, applied to a first electronic device (1), comprising:
receiving, by the first electronic device (1), an incoming call request;
in response to the incoming call request, sending, by the first electronic device (1), a simultaneous vibration notification to a second electronic device (2) and a third electronic device (3) separately to enable the second electronic device (2) and the third electronic device (3) to provide a reminder for an incoming call;
creating, by the first electronic device (1), a first control channel with the second electronic device (2), and creating, by the first electronic device (1), a second control channel with the third electronic device (3);
receiving, by the first electronic device (1), an operation of answering the incoming call on the first electronic device (1) or an answering instruction sent by the second electronic device to the first electronic device based on an operation of answering the incoming call received on the second electronic device (2), and connecting a call corresponding to the incoming call request;
transferring, by the first electronic device (1), the call to the second electronic device (2) through the first control channel for answering, whereby
• with the operation of answering the incoming call received on the second electronic device (2):
∘ in response to the answering instruction received from the second electronic device (2), the call is connected by the first electronic device (1), and the call is transferred to the second electronic device (2) through the first control channel for answering by the first electronic device (1); or
• with the operation of answering the incoming call received on the first electronic device:
∘ in response to a received second switching instruction the call is transferred to the second electronic device (2) through the first control channel for answering by the first electronic device (1);
after the call is transferred to the second electronic device (2) for answering, receiving, by the first electronic device (1), a first switching instruction; and
in response to the first switching instruction, transferring, by the first electronic device (1), the call to the third electronic device (3) through the second control channel for answering.

14. An electronic device (1; 10), comprising: one or more processors (101) and one or more memories (106), wherein the one or more processors (101) are coupled to the one or more memories (106), the one or more memories (106) are configured to store computer program code, the computer program code comprises computer instructions, and the one or more processors (101) are configured to execute the computer instructions to cause the electronic device to perform the method according to claim 13.

15. A computer storage medium, storing a computer program product, wherein the computer program product comprises computer instructions, and the computer instructions, when run on an electronic device (1; 10), cause the electronic device (1; 10) to perform the method according to claim 13.

## Patentansprüche

1. Anrufsystem, wobei das Anrufsystem eine erste elektronische Vorrichtung (1), eine zweite elektronische Vorrichtung (2) und eine dritte elektronische Vorrichtung (3) umfasst;
wobei die erste elektronische Vorrichtung (1) dazu konfiguriert ist, eine Anrufanforderung zu empfangen;
wobei die erste elektronische Vorrichtung (1), die zweite elektronische Vorrichtung (2) und die dritte elektronische Vorrichtung (3) als Reaktion auf die Anrufanforderung dazu konfiguriert sind, eine Erinnerung für einen eingehenden Anruf bereitzustellen;
wobei die erste elektronische Vorrichtung (1) dazu konfiguriert ist, einen ersten Steuerkanal mit der zweiten elektronischen Vorrichtung (2) aufzubauen, und dazu konfiguriert ist, einen zweiten Steuerkanal mit der dritten elektronischen Vorrichtung (3) aufzubauen;
wobei das Anrufsystem dazu konfiguriert ist, eine Bedienung zur Annahme des eingehenden Anrufs auf der ersten elektronischen Vorrichtung (1) oder der zweiten elektronischen Vorrichtung (2) zu empfangen, und die erste elektronische Vorrichtung (1) dazu konfiguriert ist, eine Verbindung für den der Anrufanforderung entsprechenden Anruf herzustellen;
wobei die erste elektronische Vorrichtung (1) dazu konfiguriert ist, den Anruf zur Annahme über den ersten Steuerkanal an die zweite elektronische Vorrichtung (2) weiterzuleiten; wobei
• bei Empfang der Bedienung zur Annahme des eingehenden Anrufs auf der zweiten elektronischen Vorrichtung (2):
∘ die zweite elektronische Vorrichtung (2) dazu konfiguriert ist, einen Annahmebefehl an die erste elektronische Vorrichtung (1) zu senden, und die erste elektronische Vorrichtung (1) als Reaktion auf den Annahmebefehl dazu konfiguriert ist, den Anruf zu herzustellen und den Anruf zur Annahme über den ersten Steuerkanal an die zweite elektronische Vorrichtung (2) weiterzuleiten; oder
• bei Empfang der Bedienung zur Annahme des eingehenden Anrufs auf der ersten elektronischen Vorrichtung (1), wobei die erste elektronische Vorrichtung (1) dazu konfiguriert ist, den Anruf zu herzustellen:
∘ ist die erste elektronische Vorrichtung (1) als Reaktion auf einen empfangenen zweiten Umschaltbefehl dazu konfiguriert, den Anruf zur Annahme über den ersten Steuerkanal an die zweite elektronische Vorrichtung (2) weiterzuleiten;
wobei die erste elektronische Vorrichtung (1) dazu konfiguriert ist, während eines Vorgangs der Anrufannahme auf der zweiten elektronischen Vorrichtung (2) einen ersten Umschaltbefehl zu empfangen; und
wobei die erste elektronische Vorrichtung (1) als Reaktion auf den ersten Umschaltbefehl dazu konfiguriert ist, den Anruf zur Annahme über den zweiten Steuerkanal an die dritte elektronische Vorrichtung (3) weiterzuleiten.

2. Anrufsystem nach Anspruch 1, wobei
während des Vorgangs der Anrufannahme auf der zweiten elektronischen Vorrichtung (2) die zweite elektronische Vorrichtung (2) dazu konfiguriert ist, eine erste Bedienung zu empfangen, die einem ersten Steuerelement (271) entspricht; und
Als Reaktion auf den ersten Vorgang ist das zweite elektronische Gerät (2) dazu konfiguriert, den ersten Schaltbefehl an das erste elektronische Gerät (1) zu senden.

3. Anrufsystem nach Anspruch 1 oder 2, wobei
nachdem der Anruf zur Beantwortung an das zweite elektronische Gerät (2) weitergeleitet wurde, das erste elektronische Gerät (1) dazu konfiguriert ist, eine erste Anrufschnittstelle (14) anzuzeigen, wobei die erste Anrufschnittstelle (14) ein zweites Bedienelement (181) umfasst; und
das erste elektronische Gerät (1) dazu konfiguriert ist, den ersten Schaltbefehl über das zweite Bedienelement (181) zu empfangen.

4. Anrufsystem nach Anspruch 2, wobei
nachdem der Anruf zur Beantwortung an das zweite elektronische Gerät (2) weitergeleitet wurde, das zweite elektronische Gerät (2) dazu konfiguriert ist, eine zweite Anrufschnittstelle anzuzeigen, wobei die zweite Anrufschnittstelle das erste Bedienelement (271) umfasst.

5. Anrufsystem nach einem der Ansprüche 1 bis 4, wobei
bevor der Anruf zur Beantwortung an das zweite elektronische Gerät (2) weitergeleitet wird, das erste elektronische Gerät (1) dazu konfiguriert ist, eine Gerätekennung des zweiten elektronischen Geräts (2) zu registrieren;
das erste elektronische Gerät (1) dazu konfiguriert ist, einen Aktivierungsstatus einer Audiofunktion des zweiten elektronischen Geräts (2) als eine erste Kennung zu markieren;
das erste elektronische Gerät (1) dazu konfiguriert ist, einen Aufrufstatus der Audiofunktion des zweiten elektronischen Geräts (2) als eine zweite Kennung zu markieren; und
wenn auf Basis der Gerätekennung des zweiten elektronischen Geräts (2) bestimmt wird, dass der Aktivierungsstatus der Audiofunktion des zweiten elektronischen Geräts (2) die erste Kennung ist und der Aufrufstatus der Audiofunktion des zweiten elektronischen Geräts (2) die zweite Kennung ist, das erste elektronische Gerät (1) dazu konfiguriert ist, den Anruf zur Beantwortung über den ersten Steuerkanal an das zweite elektronische Gerät (2) weiterzuleiten.

6. Anrufsystem nach einem der Ansprüche 1 bis 5, wobei das erste elektronische Gerät (1) ein Zusammenarbeitsmodul und ein virtuelles Audiomodul umfasst;
bevor der Anruf zur Beantwortung an das zweite elektronische Gerät (2) weitergeleitet wird, das Zusammenarbeitsmodul dazu konfiguriert ist, eine erste Kommunikationsschnittstelle in dem virtuellen Audiomodul zu registrieren; und
nachdem der Anruf zur Beantwortung an das zweite elektronische Gerät (2) weitergeleitet wurde, das erste elektronische Gerät (1) dazu konfiguriert ist, Audiodaten des Anrufs zwischen dem Zusammenarbeitsmodul und dem virtuellen Audiomodul über die erste Kommunikationsschnittstelle zu übertragen.

7. Anrufsystem nach einem der Ansprüche 1 bis 6, wobei
bevor der Anruf zur Annahme an das dritte elektronische Gerät (3) weitergeleitet wird, ist das erste elektronische Gerät (1) dazu konfiguriert, eine Gerätekennung des dritten elektronischen Geräts (3) zu registrieren;
das erste elektronische Gerät (1) ist dazu konfiguriert, einen Aktivierungsstatus einer Audiofunktion des dritten elektronischen Geräts (3) als eine dritte Kennung zu markieren;
das erste elektronische Gerät (1) ist dazu konfiguriert, einen Aufrufstatus der Audiofunktion des dritten elektronischen Geräts (3) als eine vierte Kennung zu markieren; und
wenn basierend auf der Gerätekennung des dritten elektronischen Geräts (3) bestimmt wird, dass der Aktivierungsstatus der Audiofunktion des dritten elektronischen Geräts (3) als die dritte Kennung und der Aufrufstatus der Audiofunktion des dritten elektronischen Geräts (3) als die vierte Kennung vorliegt, ist das erste elektronische Gerät (1) dazu konfiguriert, den Anruf zur Annahme über den zweiten Steuerkanal an das dritte elektronische Gerät (3) weiterzuleiten.

8. Anrufsystem nach einem der Ansprüche 1 bis 7, wobei das erste elektronische Gerät (1) ein Kollaborationsmodul und ein virtuelles Audiomodul umfasst;
bevor der Anruf zur Annahme an das dritte elektronische Gerät (3) weitergeleitet wird, ist das Kollaborationsmodul dazu konfiguriert, eine zweite Kommunikationsschnittstelle des dritten elektronischen Geräts (3) im virtuellen Audiomodul zu registrieren; und
nachdem der Anruf zur Annahme an das dritte elektronische Gerät (3) weitergeleitet wurde, ist das erste elektronische Gerät (1) dazu konfiguriert, die Audiodaten des Anrufs zwischen dem Kollaborationsmodul und dem virtuellen Audiomodul über die zweite Kommunikationsschnittstelle zu übertragen.

9. Anrufsystem nach Anspruch 5 oder 6, wobei
nachdem der Anruf zur Annahme an das zweite elektronische Gerät (2) weitergeleitet wurde, ist das erste elektronische Gerät (1) dazu konfiguriert, den Aufrufstatus der Audiofunktion des zweiten elektronischen Geräts (2) als eine fünfte Kennung zu markieren.

10. Anrufsystem nach einem der Ansprüche 1 bis 9, wobei
bevor der erste Steuerkanal erstellt wird, ist das erste elektronische Gerät (1) dazu konfiguriert zu bestimmen, dass sich das zweite elektronische Gerät (2) in einem Online-Zustand befindet; und
bevor der zweite Steuerkanal erstellt wird, ist das erste elektronische Gerät (1) dazu konfiguriert zu bestimmen, dass sich das dritte elektronische Gerät (3) in einem Online-Zustand befindet.

11. Anrufsystem nach einem der Ansprüche 1 bis 10, wobei, wenn das erste elektronische Gerät (1) den Anruf zur Annahme über den zweiten Steuerkanal an das dritte elektronische Gerät (3) weiterleitet, das erste elektronische Gerät (1) dazu konfiguriert ist:
Trennen eines ersten Datenkanals mit der zweiten elektronischen Vorrichtung (2), wobei der erste Datenkanal eingerichtet wird, bevor der Anruf an die zweite elektronische Vorrichtung (2) weitergeleitet wird;
Einrichten eines zweiten Datenkanals mit der dritten elektronischen Vorrichtung (3); und
Weiterleiten des Anrufs an die dritte elektronische Vorrichtung (3) über den zweiten Steuerkanal zur Entgegennahme, nachdem der zweite Datenkanal eingerichtet wurde, wobei
der erste Datenkanal und der zweite Datenkanal dazu konfiguriert sind, die Audiodaten des Anrufs zu übertragen.

12. Anrufsystem nach einem der Ansprüche 1 bis 11, wobei
wenn erkannt wird, dass eine vierte elektronische Vorrichtung online ist, die erste elektronische Vorrichtung (1) dazu konfiguriert ist, einen dritten Steuerkanal mit der vierten elektronischen Vorrichtung zu erstellen, wobei
der dritte Steuerkanal dazu konfiguriert ist, den Anruf zur Entgegennahme an die vierte elektronische Vorrichtung zu streamen, wenn ein der vierten elektronischen Vorrichtung entsprechender dritter Umschaltbefehl empfangen wird.

13. Anrufverfahren, angewendet auf eine erste elektronische Vorrichtung (1), umfassend:
Empfangen einer eingehenden Anrufanforderung durch die erste elektronische Vorrichtung (1);
als Reaktion auf die eingehende Anrufanforderung Senden einer simultanen Vibrationsbenachrichtigung durch die erste elektronische Vorrichtung (1) separat an eine zweite elektronische Vorrichtung (2) und eine dritte elektronische Vorrichtung (3), um es der zweiten elektronischen Vorrichtung (2) und der dritten elektronischen Vorrichtung (3) zu ermöglichen, eine Erinnerung für einen eingehenden Anruf bereitzustellen;
Aufzubaueneines ersten Steuerkanals mit der zweiten elektronischen Vorrichtung (2) durch die erste elektronische Vorrichtung (1), und Aufzubaueneines zweiten Steuerkanals mit der dritten elektronischen Vorrichtung (3) durch die erste elektronische Vorrichtung (1);
Empfangen einer Operation zur Entgegennahme des eingehenden Anrufs auf der ersten elektronischen Vorrichtung (1) oder eines Anrufannahmebefehls, der von der zweiten elektronischen Vorrichtung an die erste elektronische Vorrichtung basierend auf einer auf der zweiten elektronischen Vorrichtung (2) empfangenen Operation zur Entgegennahme des eingehenden Anrufs gesendet wurde, durch die erste elektronische Vorrichtung (1), und Herzustellen eines der eingehenden Anrufanforderung entsprechenden Anrufs;
Weiterleiten des Anrufs durch die erste elektronische Vorrichtung (1) an die zweite elektronische Vorrichtung (2) über den ersten Steuerkanal zur Entgegennahme, wobei
• mit der auf der zweiten elektronischen Vorrichtung (2) empfangenen Operation zur Entgegennahme des eingehenden Anrufs:
∘ als Reaktion auf den von der zweiten elektronischen Vorrichtung (2) empfangenen Anrufannahmebefehl der Anruf durch die erste elektronische Vorrichtung (1) verbunden wird und der Anruf zur Entgegennahme durch die erste elektronische Vorrichtung (1) über den ersten Steuerkanal an die zweite elektronische Vorrichtung (2) weitergeleitet wird; oder
• mit der Operation der Annahme des eingehenden Anrufs, der auf dem ersten elektronischen Gerät empfangen wurde:
∘ als Reaktion auf einen empfangenen zweiten Umschaltbefehl wird der Anruf zur Annahme durch das erste elektronische Gerät (1) über den ersten Steuerkanal an das zweite elektronische Gerät (2) übertragen;
nachdem der Anruf zur Annahme an das zweite elektronische Gerät (2) übertragen wurde, Empfangen eines ersten Umschaltbefehls durch das erste elektronische Gerät (1); und
als Reaktion auf den ersten Umschaltbefehl Übertragen des Anrufs durch das erste elektronische Gerät (1) an das dritte elektronische Gerät (3) über den zweiten Steuerkanal zur Annahme.

14. Elektronisches Gerät (1; 10), umfassend: einen oder mehrere Prozessoren (101) und einen oder mehrere Speicher (106), wobei der eine oder die mehreren Prozessoren (101) mit dem einen oder den mehreren Speichern (106) gekoppelt sind, der eine oder die mehreren Speicher (106) dazu konfiguriert sind, Computerprogrammcode zu speichern, der Computerprogrammcode Computeranweisungen umfasst und der eine oder die mehreren Prozessoren (101) dazu konfiguriert sind, die Computeranweisungen auszuführen, um das elektronische Gerät zu veranlassen, das Verfahren nach Anspruch 13 durchzuführen.

15. Computerspeichermedium, das ein Computerprogrammprodukt speichert, wobei das Computerprogrammprodukt Computeranweisungen umfasst und die Computeranweisungen bei Ausführung auf einem elektronischen Gerät (1; 10) das elektronische Gerät (1; 10) dazu veranlassen, das Verfahren nach Anspruch 13 durchzuführen.

## Revendications

1. Système d'appel, dans lequel le système d'appel comprend un premier dispositif électronique (1), un deuxième dispositif électronique (2) et un troisième dispositif électronique (3) ;
le premier dispositif électronique (1) est configuré pour recevoir une demande d'appel entrant ;
en réponse à la demande d'appel entrant, le premier dispositif électronique (1), le deuxième dispositif électronique (2) et le troisième dispositif électronique (3) sont configurés pour fournir un rappel pour un appel entrant ;
le premier dispositif électronique (1) est configuré pour créer un premier canal de contrôle avec le deuxième dispositif électronique (2), et est configuré pour créer un second canal de contrôle avec le troisième dispositif électronique (3) ;
dans lequel le système d'appel est configuré pour recevoir une opération de réponse à l'appel entrant sur le premier dispositif électronique (1) ou le deuxième dispositif électronique (2), et le premier dispositif électronique (1) est configuré pour connecter un appel correspondant à la demande d'appel entrant ;
dans lequel le premier dispositif électronique (1) est configuré pour transférer l'appel au deuxième dispositif électronique (2) par le biais du premier canal de contrôle pour y répondre ; moyennant quoi
• avec l'opération de réponse à l'appel entrant reçue sur le deuxième dispositif électronique (2) :
∘ le deuxième dispositif électronique (2) est configuré pour envoyer une instruction de réponse au premier dispositif électronique (1), et en réponse à l'instruction de réponse, le premier dispositif électronique (1) est configuré pour connecter l'appel, et pour transférer l'appel au deuxième dispositif électronique (2) par le biais du premier canal de contrôle pour y répondre ; ou
• avec l'opération de réponse à l'appel entrant reçue sur le premier dispositif électronique (1), et le premier dispositif électronique (1) étant configuré pour connecter l'appel :
∘ en réponse à une seconde instruction de commutation reçue, le premier dispositif électronique (1) est configuré pour transférer l'appel au deuxième dispositif électronique (2) par le biais du premier canal de contrôle pour y répondre ;
dans lequel le premier dispositif électronique (1) est configuré pour recevoir une première instruction de commutation au cours d'un processus de réponse à l'appel sur le deuxième dispositif électronique (2) ; et
en réponse à la première instruction de commutation, le premier dispositif électronique (1) est configuré pour transférer l'appel au troisième dispositif électronique (3) par le biais du second canal de contrôle pour y répondre.

2. Système d'appel selon la revendication 1, dans lequel
au cours du processus de réponse à l'appel sur le deuxième dispositif électronique (2), le deuxième dispositif électronique (2) est configuré pour recevoir une première opération correspondant à une première commande (271) ; et
en réponse à la première opération, le second dispositif électronique (2) est configuré pour envoyer la première instruction de commutation au premier dispositif électronique (1).

3. Système d'appel selon la revendication 1 ou 2, dans lequel
après le transfert de l'appel vers le second dispositif électronique (2) pour répondre, le premier dispositif électronique (1) est configuré pour afficher une première interface d'appel (14), dans laquelle la première interface d'appel (14) comprend une seconde commande (181) ; et
le premier dispositif électronique (1) est configuré pour recevoir la première instruction de commutation par l'intermédiaire de la seconde commande (181).

4. Système d'appel selon la revendication 2, dans lequel
après le transfert de l'appel vers le second dispositif électronique (2) pour répondre, le second dispositif électronique (2) est configuré pour afficher une seconde interface d'appel, dans laquelle la seconde interface d'appel comprend la première commande (271).

5. Système d'appel selon l'une quelconque des revendications 1 à 4, dans lequel
avant le transfert de l'appel vers le second dispositif électronique (2) pour répondre, le premier dispositif électronique (1) est configuré pour enregistrer un identifiant de dispositif du second dispositif électronique (2) ;
le premier dispositif électronique (1) est configuré pour marquer un état d'activation d'une capacité audio du second dispositif électronique (2) en tant que premier identifiant ;
le premier dispositif électronique (1) est configuré pour marquer un état d'invocation de la capacité audio du second dispositif électronique (2) en tant que second identifiant ; et
lors de la détermination, sur la base de l'identifiant de dispositif du second dispositif électronique (2), que l'état d'activation de la capacité audio du second dispositif électronique (2) est le premier identifiant et que l'état d'invocation de la capacité audio du second dispositif électronique (2) est le second identifiant, le premier dispositif électronique (1) est configuré pour transférer l'appel vers le second dispositif électronique (2) par l'intermédiaire du premier canal de commande pour répondre.

6. Système d'appel selon l'une quelconque des revendications 1 à 5, dans lequel le premier dispositif électronique (1) comprend un module de collaboration et un module audio virtuel ;
avant le transfert de l'appel vers le second dispositif électronique (2) pour répondre, le module de collaboration est configuré pour enregistrer une première interface de communication dans le module audio virtuel ; et
après le transfert de l'appel vers le second dispositif électronique (2) pour répondre, le premier dispositif électronique (1) est configuré pour transmettre des données audio dans l'appel entre le module de collaboration et le module audio virtuel par l'intermédiaire de la première interface de communication.

7. Système d'appel selon l'une quelconque des revendications 1 à 6, dans lequel
avant que l'appel ne soit transféré au troisième dispositif électronique (3) pour y répondre, le premier dispositif électronique (1) est configuré pour enregistrer un identifiant de dispositif du troisième dispositif électronique (3) ;
le premier dispositif électronique (1) est configuré pour marquer un statut d'activation d'une capacité audio du troisième dispositif électronique (3) en tant que troisième identifiant ;
le premier dispositif électronique (1) est configuré pour marquer un statut d'invocation de la capacité audio du troisième dispositif électronique (3) en tant que quatrième identifiant ; et
lorsqu'il est déterminé, sur la base de l'identifiant de dispositif du troisième dispositif électronique (3), que le statut d'activation de la capacité audio du troisième dispositif électronique (3) est le troisième identifiant et que le statut d'invocation de la capacité audio du troisième dispositif électronique (3) est le quatrième identifiant, le premier dispositif électronique (1) est configuré pour transférer l'appel au troisième dispositif électronique (3) par l'intermédiaire du second canal de contrôle pour y répondre.

8. Le système d'appel selon l'une quelconque des revendications 1 à 7, dans lequel le premier dispositif électronique (1) comprend un module de collaboration et un module audio virtuel ;
avant que l'appel ne soit transféré au troisième dispositif électronique (3) pour y répondre, le module de collaboration est configuré pour enregistrer une seconde interface de communication du troisième dispositif électronique (3) dans le module audio virtuel ; et
après que l'appel a été transféré au troisième dispositif électronique (3) pour y répondre, le premier dispositif électronique (1) est configuré pour transmettre les données audio de l'appel entre le module de collaboration et le module audio virtuel par l'intermédiaire de la seconde interface de communication.

9. Le système d'appel selon la revendication 5 ou 6, dans lequel
après que l'appel a été transféré au second dispositif électronique (2) pour y répondre, le premier dispositif électronique (1) est configuré pour marquer le statut d'invocation de la capacité audio du second dispositif électronique (2) en tant que cinquième identifiant.

10. Le système d'appel selon l'une quelconque des revendications 1 à 9, dans lequel
avant que le premier canal de contrôle ne soit créé, le premier dispositif électronique (1) est configuré pour déterminer que le second dispositif électronique (2) est dans un état en ligne ; et
avant que le second canal de contrôle ne soit créé, le premier dispositif électronique (1) est configuré pour déterminer que le troisième dispositif électronique (3) est dans un état en ligne.

11. Le système d'appel selon l'une quelconque des revendications 1 à 10, lorsque le premier dispositif électronique (1) transfère l'appel au troisième dispositif électronique (3) par l'intermédiaire du second canal de contrôle pour y répondre, le premier dispositif électronique (1) est configuré pour :
déconnecter un premier canal de données avec le deuxième dispositif électronique (2), dans lequel le premier canal de données est établi avant que l'appel ne soit transféré au deuxième dispositif électronique (2) ;
établir un second canal de données avec le troisième dispositif électronique (3) ; et
transférer l'appel au troisième dispositif électronique (3) via le second canal de contrôle pour répondre après que le second canal de données a été établi, dans lequel
le premier canal de données et le second canal de données sont configurés pour transmettre les données audio lors de l'appel.

12. Le système d'appel selon l'une quelconque des revendications 1 à 11, dans lequel
lors de la détection qu'un quatrième dispositif électronique est en ligne, le premier dispositif électronique (1) est configuré pour créer un troisième canal de contrôle avec le quatrième dispositif électronique, dans lequel
le troisième canal de contrôle est configuré pour diffuser l'appel vers le quatrième dispositif électronique pour répondre lorsqu'une troisième instruction de commutation correspondant au quatrième dispositif électronique est reçue.

13. Procédé d'appel, appliqué à un premier dispositif électronique (1), comprenant :
la réception, par le premier dispositif électronique (1), d'une demande d'appel entrant ;
en réponse à la demande d'appel entrant, l'envoi, par le premier dispositif électronique (1), d'une notification de vibration simultanée à un deuxième dispositif électronique (2) et à un troisième dispositif électronique (3) séparément pour permettre au deuxième dispositif électronique (2) et au troisième dispositif électronique (3) de fournir un rappel pour un appel entrant ;
la création, par le premier dispositif électronique (1), d'un premier canal de contrôle avec le deuxième dispositif électronique (2), et la création, par le premier dispositif électronique (1), d'un second canal de contrôle avec le troisième dispositif électronique (3) ;
la réception, par le premier dispositif électronique (1), d'une opération de réponse à l'appel entrant sur le premier dispositif électronique (1) ou d'une instruction de réponse envoyée par le deuxième dispositif électronique au premier dispositif électronique sur la base d'une opération de réponse à l'appel entrant reçue sur le deuxième dispositif électronique (2), et la connexion d'un appel correspondant à la demande d'appel entrant ;
le transfert, par le premier dispositif électronique (1), de l'appel au deuxième dispositif électronique (2) via le premier canal de contrôle pour répondre, moyennant quoi
• avec l'opération de réponse à l'appel entrant reçue sur le deuxième dispositif électronique (2) :
∘ en réponse à l'instruction de réponse reçue du deuxième dispositif électronique (2), l'appel est connecté par le premier dispositif électronique (1), et l'appel est transféré au deuxième dispositif électronique (2) via le premier canal de contrôle pour répondre par le premier dispositif électronique (1) ; ou
• avec l'opération de répondre à l'appel entrant reçu sur le premier dispositif électronique :
∘ en réponse à une seconde instruction de commutation reçue, l'appel est transféré au second dispositif électronique (2) via le premier canal de contrôle pour être pris en charge par le premier dispositif électronique (1) ;
après le transfert de l'appel vers le second dispositif électronique (2) pour répondre, réception, par le premier dispositif électronique (1), d'une première instruction de commutation ; et
en réponse à la première instruction de commutation, transfert, par le premier dispositif électronique (1), de l'appel vers le troisième dispositif électronique (3) via le second canal de contrôle pour répondre.

14. Dispositif électronique (1 ; 10), comprenant : un ou plusieurs processeurs (101) et une ou plusieurs mémoires (106), dans lequel le ou les processeurs (101) sont couplés à la ou aux mémoires (106), la ou les mémoires (106) sont configurées pour stocker un code de programme informatique, le code de programme informatique comprend des instructions informatiques, et le ou les processeurs (101) sont configurés pour exécuter les instructions informatiques afin d'amener le dispositif électronique à mettre en œuvre le procédé selon la revendication 13.

15. Support de stockage informatique, stockant un produit de programme informatique, dans lequel le produit de programme informatique comprend des instructions informatiques, et les instructions informatiques, lorsqu'elles sont exécutées sur un dispositif électronique (1 ; 10), amènent le dispositif électronique (1 ; 10) à mettre en œuvre le procédé selon la revendication 13.
